# EUROPEAN PATENT APPLICATION

(11) **EP 4 834 627 A1**
(43) Date of publication of application: **04.11.2026**
(21) Application number: 24912814.1
(22) Date of filing: 24.12.2024
(51) Int. Cl.: B60K 11/06, A01B 71/02, B60K 1/04, B60K 11/04, B60K 1/02, B60K 13/02

(54) **WORK VEHICLE**

(30) Priority: 28.12.2023 JP 2023223367; 28.12.2023 JP 2023223366; 28.12.2023 JP 2023223368; 28.12.2023 JP 2023223369; 28.12.2023 JP 2023223370
(71) Applicant: KUBOTA CORPORATION, Osaka-shi, Osaka 530-0011 (JP)
(72) Inventor: MATSUOKA Ginji, Sakai-shi, Osaka 590-0908 (JP); SAKANO Tomoyoshi, Sakai-shi, Osaka 590-0908 (JP); HIBINO Tsuyoshi, Sakai-shi, Osaka 590-0908 (JP); YOSHIDOME Kazuhiro, Sakai-shi, Osaka 590-0908 (JP); MIYAZAKI Makoto, Sakai-shi, Osaka 590-0908 (JP); SEINO Kohei, Sakai-shi, Osaka 590-0908 (JP); SASABE Takashi, Sakai-shi, Osaka 590-0908 (JP); KAMADA Tatsuya, Sakai-shi, Osaka 590-0908 (JP); MAKINO Ryota, Sakai-shi, Osaka 590-0908 (JP); NAKASHIMA Yoshiki, Sakai-shi, Osaka 590-0908 (JP)
(74) Representative: Cabinet Beau de Loménie
(86) International application number: PCT/JP2024/045695
(87) International publication number: WO 2025/142927

(57) **Abstract**

A compact duct piping structure is to be achieved by improving a structure to take in cooling air from a cooler into a housing accommodating a cooling target.

A working vehicle (1) includes a cooler (51), a first cooling target (50) and a second cooling target (37) to be cooled by cooling air discharged from the cooler (51), a first cooling housing (24) accommodating the first cooling target (50), and a second cooling housing (36) accommodating the second cooling target (37). The first cooling housing (24) is provided with an inlet (24h) to take in air discharged from the second cooling housing (36) after cooling the second cooling target (37).

## Description

### Technical Field

The present invention relates to working vehicles to perform work such as agricultural work.

### Background Art

In recent years, agricultural work and the like using working vehicles have been experiencing a shift from a work mode in which a worker rides on and manually operates a vehicle to a work mode in which a working vehicle is made to travel in an unattended manner, such as a remote-operation work mode in which a worker remotely operates a vehicle by using a terminal or the like; or an autonomous-traveling work mode in which a vehicle is made to travel via GPS along a route that is set in an agricultural field.

Accordingly, it is conceivable that the mode of the vehicle may be shifted from a known tractor type with an operator's seat to a more convenient mode in terms of performing intended work such as agricultural work. Conceivable ideas include, for example, performing agricultural work by using an unattended-operation working vehicle including a vehicle body and left and right traveling structures, including wheels or the like, provided to the left and right of the vehicle body, with the vehicle body positioned over a furrow and with the left and right traveling structures positioned to the left and right of the furrow, and so forth.

Regarding a working vehicle in such a mode, it is also conceivable that the vehicle body may be provided with a battery as a driving power source for a working device or the like connected to the vehicle body, and the traveling structures may each be provided with another battery as a drive source of an electric motor for driving the wheel.

As disclosed in PTL 1, for example, there is a known technique in which a battery pack carried by a working vehicle or the like is cooled by an air-cooled system.

### Citation List

### Patent Literature

PTL 1: Japanese Patent No. 6091844

### Summary of Invention

### Technical Problem

In a case where the vehicle body and the traveling structures of the above working vehicle of an unattended traveling mode are separately provided with batteries, in designing a configuration in which air is sent as cooling air from an air conditioner to cases accommodating the respective batteries, the structure of ducts is important in constructing such an air-cooled system.

In realizing such a duct structure, solutions for various problems are demanded, such as how to efficiently send the cooling air to the battery cases that are distributed among the vehicle body and the traveling structures as described above; and how to realize compact piping with consideration for, for example, spaces for placing other equipment. A duct structure disclosed in PTL 1 has a simple configuration in which cooling air is made to circulate between each of the battery cases and the air conditioner, with no consideration for the location of the battery pack in the working vehicle, and the like.

In realizing compact duct piping or a reduction in duct length, it is also conceivable to devise the structure of a cooling-air passage and/or the like in the cases accommodating the batteries. However, the structure of the battery cases disclosed in PTL 1 does not provide a technical solution in such an aspect.

### Solution to Problem

In an example embodiment of the present invention, a working vehicle includes a cooler, a first cooling target and a second cooling target to be cooled by cooling air delivered from the cooler, a first cooling housing accommodating the first cooling target, and a second cooling housing accommodating the second cooling target. The first cooling housing is provided with an inlet to take in air discharged from the second cooling housing after cooling the second cooling target.

The first cooling housing may be provided inside thereof with a cooling-air passage to allow the cooling air from the cooler to be blown onto the first cooling target, and an exhaust-air passage to allow air having cooled the first cooling target to be discharged to the cooler. The working vehicle may be configured to merge, with air in the exhaust-air passage, the air discharged from the second cooling housing and introduced into the first cooling housing through the inlet.

The first cooling housing may be provided inside thereof with a first air guide to guide air from the cooling-air passage to the exhaust-air passage, and a second air guide to guide air from the inlet to the exhaust-air passage.

The first cooling housing may be provided inside thereof with a partition above the first cooling target. A space in the first cooling housing below the partition may be the cooling-air passage. A space in the first cooling housing above the partition may be the exhaust-air passage.

The first cooling housing may be provided inside thereof with a communicating passage extending in a top-bottom direction along an end portion of the partition to allow an exit of the cooling-air passage and an entrance of the exhaust-air passage to communicate with each other. The cooling-air passage may be provided at the exit with a first air guide to guide air from the cooling-air passage to a lower portion of the communicating passage. The communicating passage may be provided at an upper portion thereof with the inlet and a second air guide to guide air introduced through the inlet to the entrance of the exhaust-air passage.

The first air guide and the second air guide may be fans.

At least one of the first cooling target or the second cooling target may be a battery.

The working vehicle may include a vehicle body and a traveling structure provided alongside the vehicle body. The cooler and the first cooling housing may be provided in or on the vehicle body. The second cooling housing may be provided in or on the traveling structure.

### Advantageous Effects of Invention

According to the present invention, since the first cooling housing is provided with the inlet to take in air from the second cooling housing, the duct from the second cooling housing does not need to extend to the cooler and is shortened to the inlet of the first cooling housing. Thus, the air having cooled the first cooling target and the air having cooled the second cooling target can be merged in the first cooling housing before being discharged. Furthermore, with the shortening of the duct, and so forth, a wide free space for placing other equipment can be secured.

### Brief Description of Drawings

[FIG. 1] FIG. 1 is a perspective view of a working vehicle according to a first embodiment.
[FIG. 2] FIG. 2 is a plan view of the working vehicle according to the first embodiment.
[FIG. 3] FIG. 3 is a left side view of the working vehicle according to the first embodiment.
[FIG. 4] FIG. 4 is a right side view of the working vehicle according to the first embodiment.
[FIG. 5] FIG. 5 is a front view of the working vehicle according to the first embodiment.
[FIG. 6] FIG. 6 is a rear view of the working vehicle according to the first embodiment.
[FIG. 7] FIG. 7 is a left side sectional view of the working vehicle according to the first embodiment.
[FIG. 8] FIG. 8 is a perspective view of the working vehicle according to the first embodiment, with a vehicle body raised.
[FIG. 9] FIG. 9 is a plan view of the working vehicle according to the first embodiment, with the vehicle body expanded rightward.
[FIG. 10] FIG. 10 is a schematic side view illustrating the internal structure of a center battery case that is used in the working vehicle according to the first embodiment.
[FIG. 11] FIG. 11 is a schematic development view of at least one side battery case that is used in the working vehicle according to the first embodiment.
[FIG. 12] FIG. 12 is a block diagram illustrating the structure of a water-cooled cooling circuit in or on the vehicle body that is used in the working vehicle according to the first embodiment.
[FIG. 13] FIG. 13 is a block diagram illustrating the structure of a water-cooled cooling circuit in or on at least one traveling structure that is used in the working vehicle according to the first embodiment.
[FIG. 14] FIG. 14 is a block diagram illustrating a control-system structure in the working vehicle.
[FIG. 15] FIG. 15 is a schematic side view illustrating the internal structure of a center battery case that is used in a working vehicle according to a second embodiment.
[FIG. 16] FIG. 16 is a plan view of the working vehicle according to the second embodiment.
[FIG. 17] FIG. 17 is a schematic side view illustrating a first variation of the center battery case that is used in the working vehicle according to the second embodiment.
[FIG. 18] FIG. 18 is a schematic side view illustrating a second variation of the center battery case that is used in the working vehicle according to the second embodiment.
[FIG. 19] FIG. 19 is a schematic side view illustrating the internal structure of a center battery case that is used in a working vehicle according to a third embodiment.
[FIG. 20] FIG. 20 is a plan view of the working vehicle according to the third embodiment.
[FIG. 21] FIG. 21 is a schematic plan view illustrating a first temperature-regulating-circuit structure in the working vehicle.
[FIG. 22] FIG. 22 is a schematic plan view illustrating a second temperature-regulating-circuit structure in the working vehicle.
[FIG. 23] FIG. 23 is a schematic plan view illustrating a third temperature-regulating-circuit structure in the working vehicle.

### Description of Embodiments

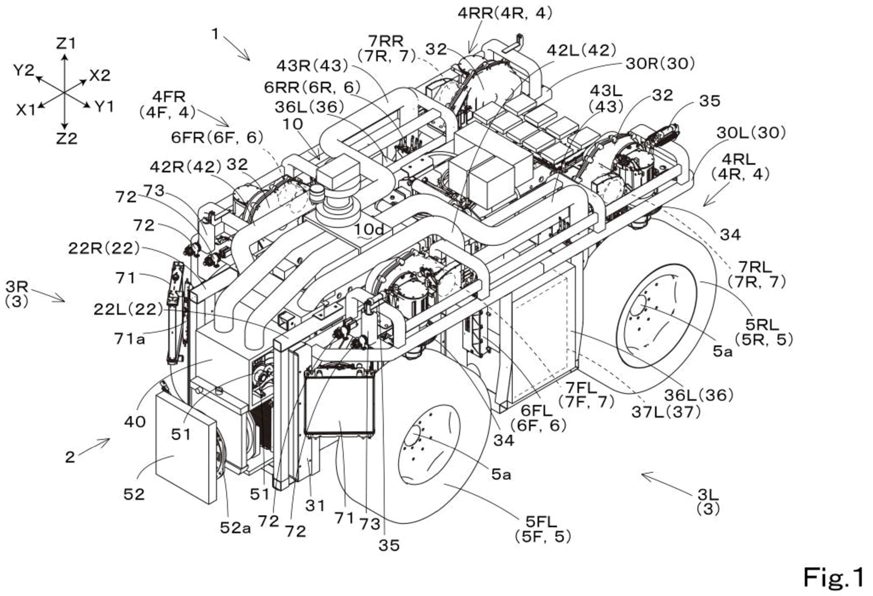

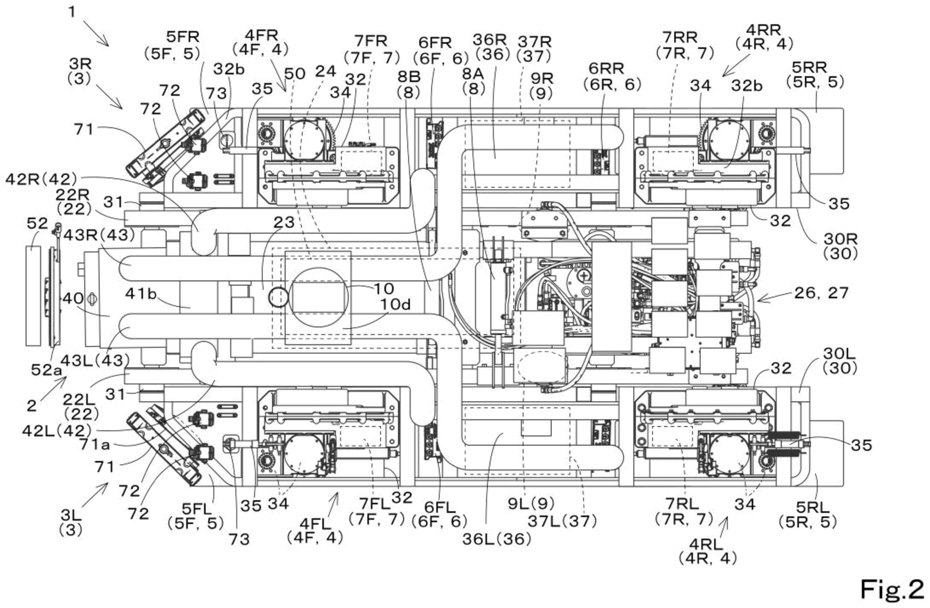

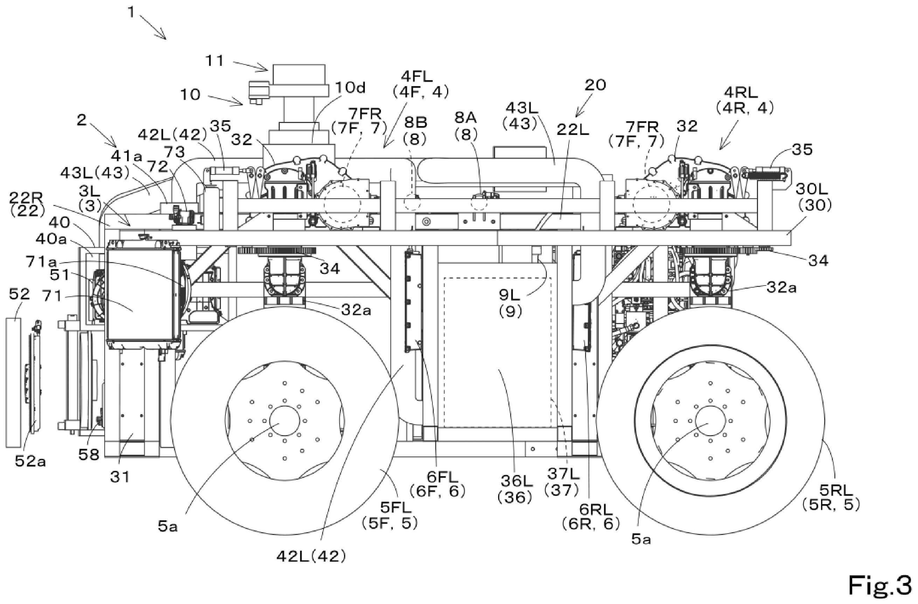

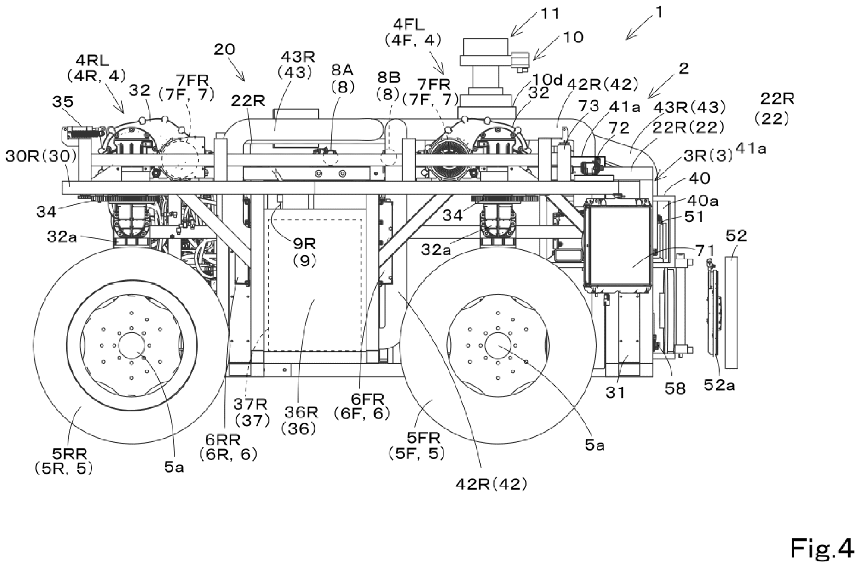

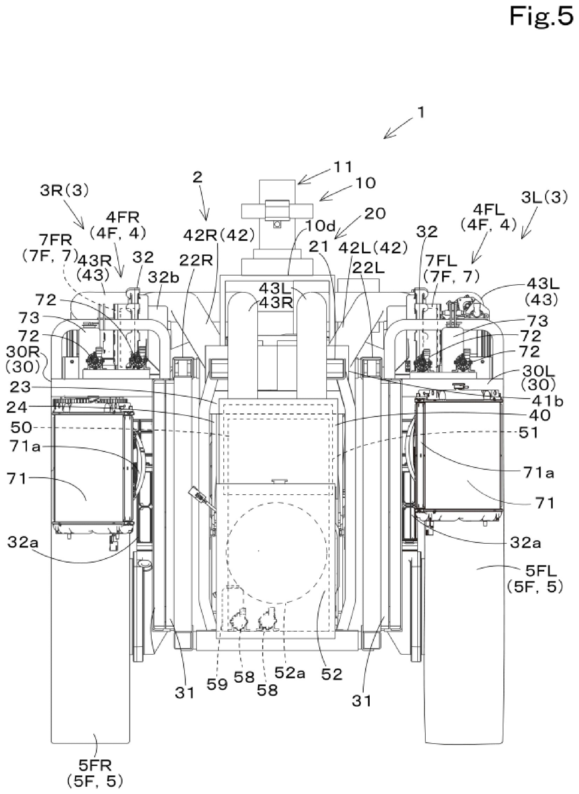

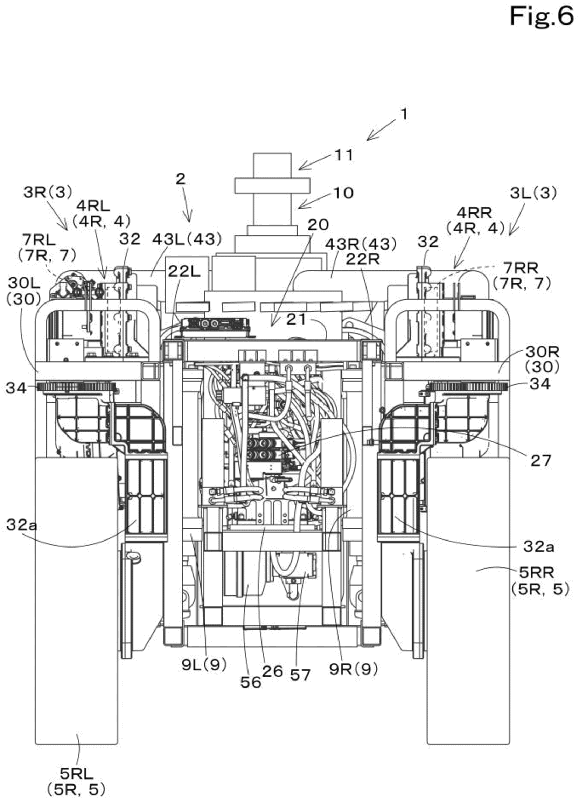

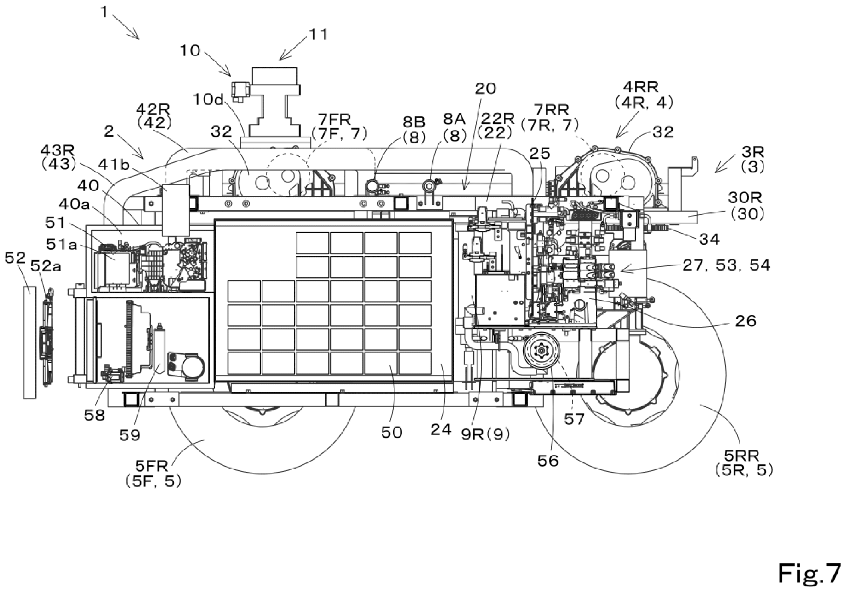

Preferred embodiments of a working vehicle 1 according to the present invention will now be described. FIGS. 1 to 14 are diagrams illustrating one embodiment (a first embodiment) of the working vehicle 1. FIG. 1 is a perspective view of the working vehicle 1. FIG. 2 is a plan view of the working vehicle 1. FIG. 3 is a left side view of the working vehicle 1. FIG. 4 is a right side view of the working vehicle 1. FIG. 5 is a front view of the working vehicle 1. FIG. 6 is a rear view of the working vehicle 1. FIG. 7 is a side sectional view of the working vehicle 1.

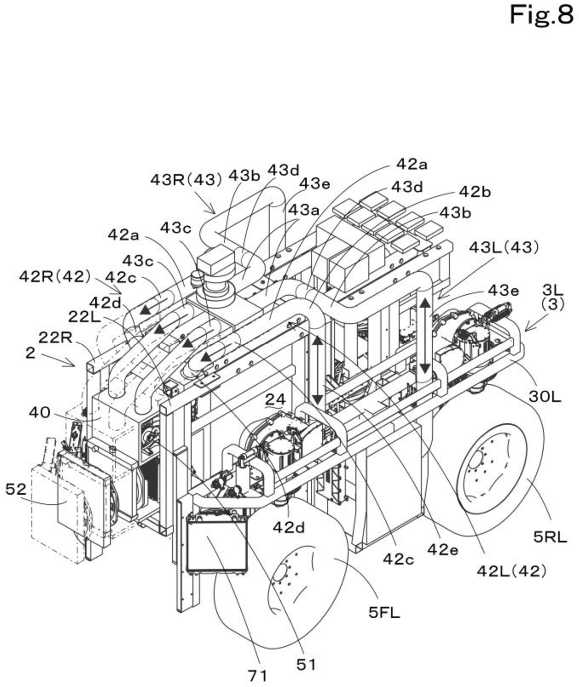

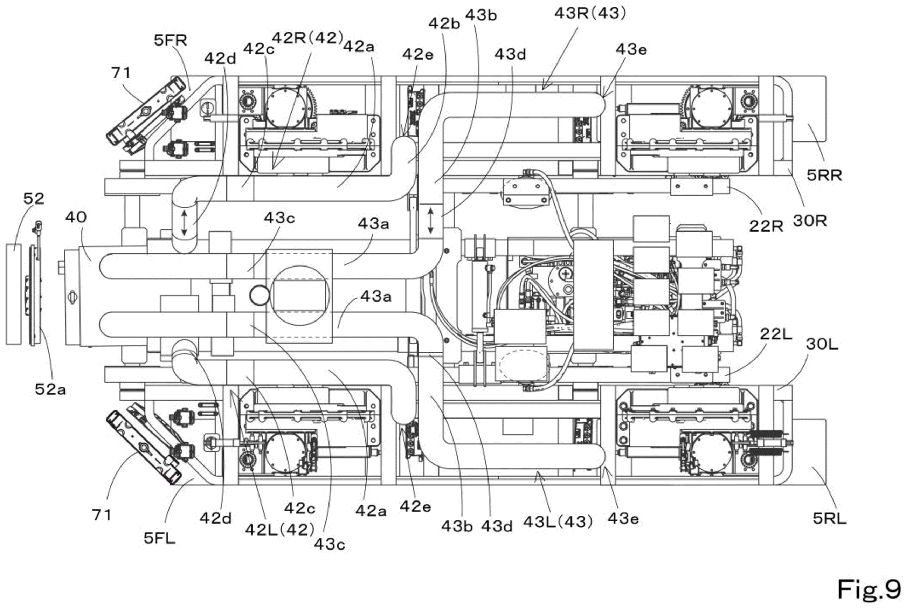

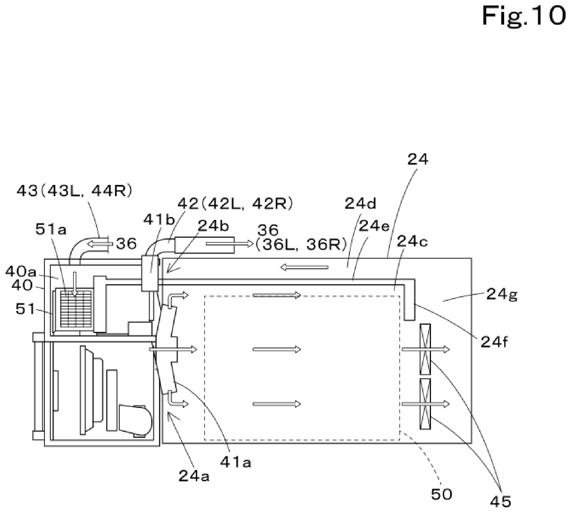

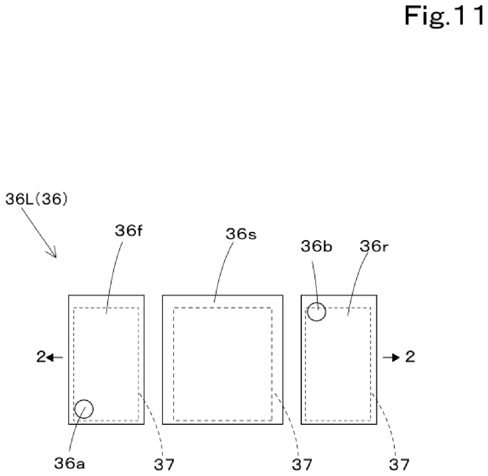

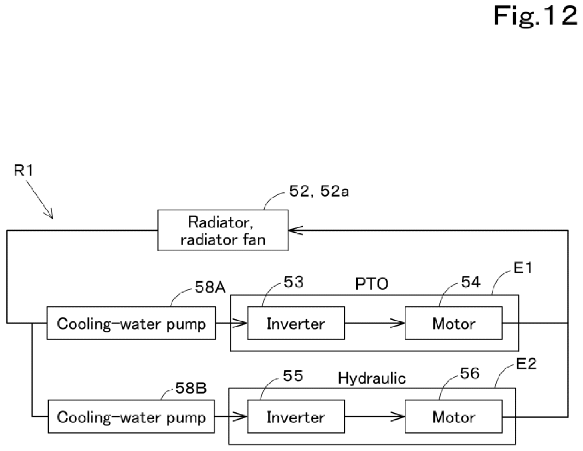

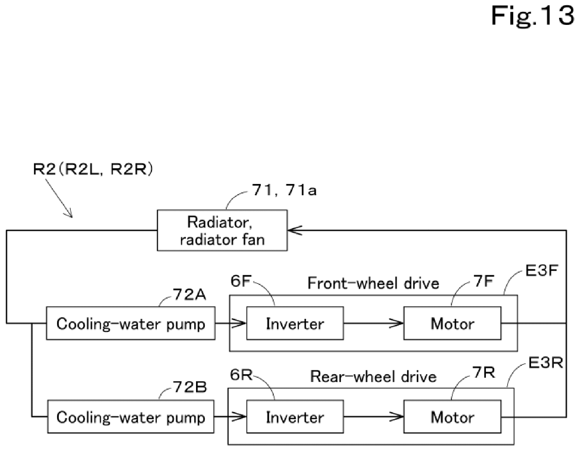

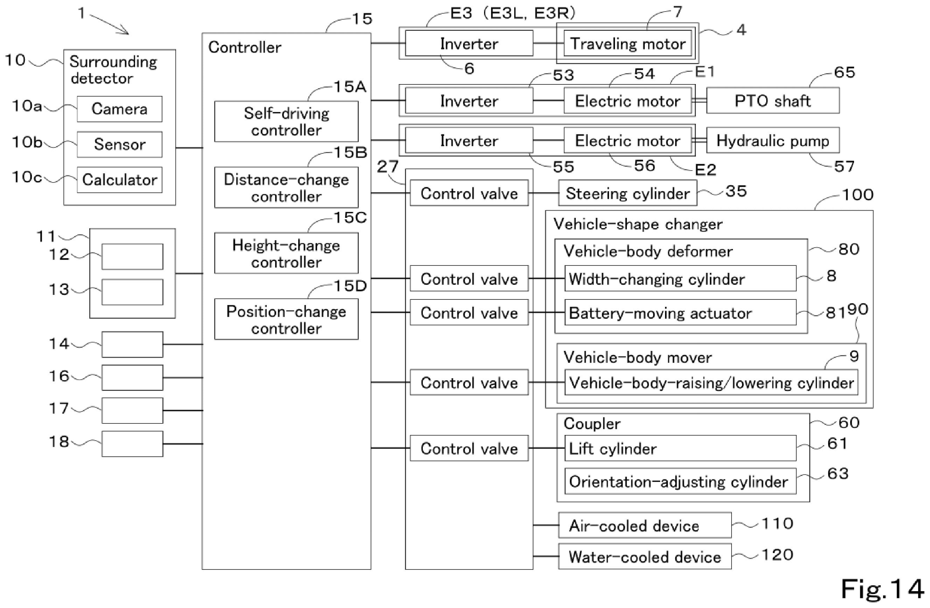

FIG. 8 is a perspective view of the working vehicle 1, with a vehicle body 2 raised. FIG. 9 is a plan view of the working vehicle 1, with a right portion of the vehicle body 2 expanded. FIG. 10 is a schematic diagram illustrating the structure of a center battery case 24. FIG. 11 is a schematic diagram illustrating the structure of at least one side battery case 36. FIG. 12 is a block diagram illustrating a water-cooled cooling circuit R1 in or on the vehicle body 2. FIG. 13 is a block diagram illustrating a water-cooled cooling circuit R2 in or on a traveling structure 3. FIG. 14 is a block diagram illustrating a control-system structure in the working vehicle 1.

In the following description, the direction indicated by arrow X1 in FIG. 1 is forward, the direction indicated by arrow X2 is rearward, the direction indicated by arrow Y1 is leftward, the direction indicated by arrow Y2 is rightward, the direction indicated by arrow Z1 is upward, and the direction indicated by arrow Z2 is downward.

Examples of the work to be performed by the working vehicle 1 include, but are not limited to, work related to agriculture, work related to industry (civil engineering, construction, and the like), work related to transportation, and so forth. In the preferred embodiments of the present invention, the work to be performed by the working vehicle 1 is work related to agriculture (agricultural work). Hereinafter, the case where the work to be performed by the working vehicle 1 is agricultural work will be described as an example. In such a case, the working vehicle 1 is an agricultural working vehicle.

Referring to FIGS. 1 to 7, 14, and so forth, the basic structure of the working vehicle 1 will be described. The working vehicle 1 includes a vehicle body 2, a left traveling structure 3L provided leftward of the vehicle body 2, and a right traveling structure 3R provided rightward of the vehicle body 2. Hereinafter, each of the left traveling structure 3L and the right traveling structure 3R may be referred to as the traveling structure 3.

The vehicle body 2 is provided at a rear end portion or the like thereof with a PTO shaft 65 (see FIG. 14) for transmitting a driving force to a working device (implement) that is coupled to the working vehicle 1, and a coupler 60 (see FIG. 14) for coupling the working device to the working vehicle 1 is attachable thereto.

While various options are conceivable for the structure of the coupler 60 corresponding to the type and so forth of the working device (implement), a typical structure is a three-point linkage including a pair of left and right lower links and a single top link.

The working device may also be coupled to a portion (for example, a front end portion) other than the rear end portion of the vehicle body 2 of the working vehicle 1 so as to receive a driving force from the working vehicle 1. Alternatively, the working vehicle 1 may include no coupler but may include a working device carried by the vehicle body 2, for example.

The configurations of the vehicle body 2 between the left traveling structure 3L and the right traveling structure 3R and relevant equipment provided in or on the vehicle body 2 will be described.

The vehicle body 2 includes a vehicle-body frame structure 20, and a center battery case (front body case) 24 and a PTO case (rear body case) 26 that are supported by the vehicle-body frame structure 20.

The vehicle-body frame structure 20 includes a vehicle-body center frame 21, a left vehicle-body side frame 22L provided leftward of the vehicle-body center frame 21, and a right vehicle-body side frame 22R provided rightward of the vehicle-body center frame 21. Hereinafter, each of the left vehicle-body side frame 22L and the right vehicle-body side frame 22R may be referred to as the vehicle-body side frame 22.

A flat plate-shaped support member 23 (see FIGS. 2 and so forth) is fixed to a lower portion of the vehicle-body center frame 21 that ranges from the front end to a front-rear intermediate portion thereof. A cuboidal center battery case 24 hangs from the support member 23. The center battery case 24 is engaged at an upper end portion thereof with the support member 23 in such a manner as to be movable in the front-rear direction.

Above the support member 23 or the vehicle-body center frame 21 are provided a surrounding detector 10 and a position detector 11 for detecting the surroundings of the working vehicle 1 (the presence/absence of obstacles, the extent of growth of crops in the furrow, the width of the furrow, and so forth).

In the present embodiment illustrated in FIGS. 1 to 10 and so forth, as to be described below, extending portions 43a of ducts 43L and 43R are routed above the vehicle-body center frame 21. Therefore, as illustrated in FIGS. 1 and so forth, a stay 10d that spans the foregoing is provided on the vehicle-body center frame 21, and the surrounding detector 10 and the position detector 11 are provided on the stay 10d.

The surrounding detector 10 and the position detector 11 need only be provided to the vehicle body 2 (vehicle-body center frame 21) in such a manner as not to interfere with the ducts and so forth, and the structure for attachment to the vehicle body 2 is not limited.

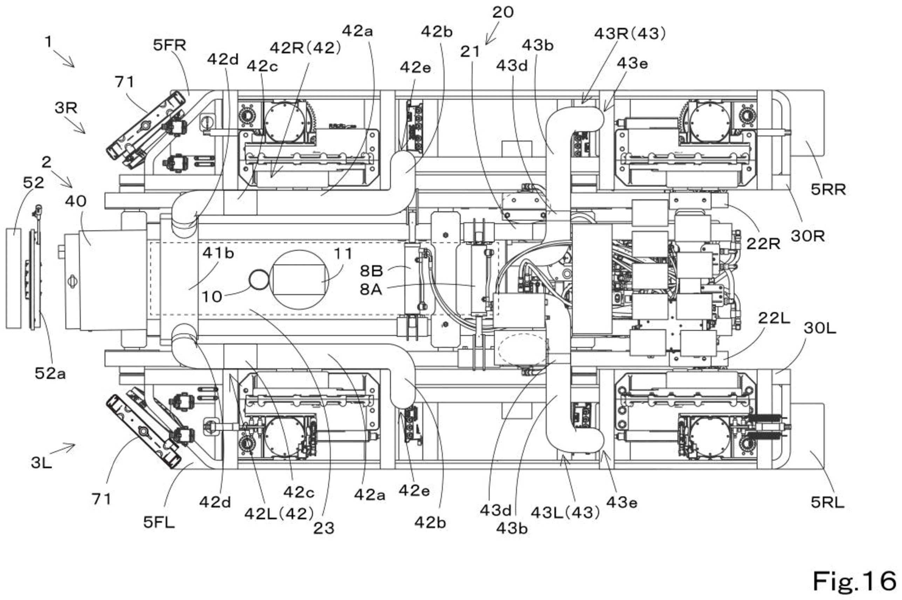

For example, in another embodiment (second embodiment) to be described below and illustrated in FIG. 16, the ducts 43L and 43R include no extending portions 43a above the vehicle-body center frame 21. Therefore, the surrounding detector 10 is directly attached to the support member 23 located immediately below the upper portion of the vehicle-body center frame 21, with no stay 10d in between.

Each vehicle-body side frame 22 is connected to the vehicle-body center frame 21 in such a manner as to be movable relative thereto in the left-right direction. Above the vehicle-body center frame 21 are provided a pair of width-changing cylinders 8A and 8B extending in the left-right direction. The width-changing cylinders 8A and 8B each define a vehicle-body deformer (actuator) 80 (see FIG. 14) for changing the left-right dimension of the vehicle body 2, that is, for deforming the vehicle body 2. Hereinafter, each of the pair of width-changing cylinders 8A and 8B may be referred to as the width-changing cylinder 8.

The width-changing cylinder 8A extends and retracts to change the interval between the vehicle-body center frame 21 and the left vehicle-body side frame 22L. In the width-changing cylinder 8A, the cylinder body is attached to an upper portion of the vehicle-body center frame 21, and the piston rod extends leftward from the cylinder body such that the tip of the piston rod is attached to an upper portion of the left vehicle-body side frame 22L.

The width-changing cylinder 8B extends and retracts to change the interval between the vehicle-body center frame 21 and the right vehicle-body side frame 22R. In the width-changing cylinder 8B, the cylinder body is attached to an upper portion of the vehicle-body center frame 21 at a position forward or rearward (in the present embodiment, forward) of the cylinder body of the width-changing cylinder 8A, and the piston rod extends rightward from the cylinder body such that the tip of the piston rod is attached to an upper portion of the right vehicle-body side frame 22R.

With an extending and retracting movement of each width-changing cylinder 8, the corresponding vehicle-body side frame 22 moves toward and away from the vehicle-body center frame 21. Thus, the left-right dimension of the vehicle body 2 is changed as described above, and the vehicle body 2 deforms.

For example, as illustrated in FIG. 9, the extension of the piston rod of the width-changing cylinder 8B moves the right vehicle-body side frame 22R rightward away from the vehicle-body center frame 21, and the vehicle body 2 deforms such that a right portion of the vehicle body 2 expands.

Accordingly, the right traveling structure 3R connected to the right vehicle-body side frame 22R also moves rightward along with the right vehicle-body side frame 22R, increasing the distance in the left-right direction between the left traveling structure 3L and the right traveling structure 3R and the corresponding distance between left and right wheels 5, that is, the vehicle width.

On the other hand, referring to FIG. 9, the extension of the piston rod of the width-changing cylinder 8A moves the left vehicle-body side frame 22L and the left traveling structure 3L leftward away from the vehicle-body center frame 21, and the vehicle body 2 deforms such that a left portion of the vehicle body 2 expands. This can also change the vehicle width.

The deformation of the vehicle body 2 in the direction in which the vehicle width is increased may also be implemented with the extension or retraction of both of the width-changing cylinders 8A and 8B to move both of the left and right vehicle-body side frames 22L and 22R. Furthermore, the extending and retracting movements of the width-changing cylinders 8A and 8B may be synchronized.

Each width-changing cylinder 8 defining a vehicle-body deformer that changes the left-right dimension of the vehicle body 2 may be a cylinder having any structure, such as a hydraulic cylinder; an air cylinder; or an electric cylinder, as long as the width-changing cylinder 8 functions as a vehicle-body deformer 80.

The vehicle-body deformer 80 need not have a structure including a cylinder as with the width-changing cylinder 8 as long as the vehicle-body deformer 80 has a function of changing the left-right dimension of the vehicle body 2. For example, the vehicle-body deformer 80 may have a structure in which rotating a spiral rod by using a motor causes the vehicle-body side frame 22 to move toward and away from the vehicle-body center frame 21.

The left vehicle-body side frame 22L and the right vehicle-body side frame 22R of the vehicle-body frame structure 20 are connected to a left traveling frame 30L of the left traveling structure 3L and a right traveling frame 30R of the right traveling structure 3R, respectively, in such a manner as to be movable up and down relative thereto with a plurality of mast structures 31 (see FIGS. 1 and so forth) interposed between the vehicle body 2 (individual vehicle-body side frames 22) and the individual traveling structures 3 (individual traveling frames 30). Therefore, the vehicle body 2 as a whole is movable in the top-bottom direction (to be raised and lowered) with respect to the left and right traveling structures 3.

As illustrated in FIGS. 2, 6, and so forth, the working vehicle 1 includes a pair of left and right vehicle-body-raising/lowering cylinders 9, namely, a left vehicle-body-raising/lowering cylinder 9L and a right vehicle-body-raising/lowering cylinder 9R, defining actuators (hydraulic actuators) for raising and lowering the vehicle body 2, that is, as vehicle-body movers 90 (see FIG. 14) for moving the vehicle body 2 relative to the left and right traveling structures 3.

Each vehicle-body-raising/lowering cylinder 9 (left vehicle-body-raising/lowering cylinder 9L or right vehicle-body-raising/lowering cylinder 9R) has the cylinder bottom thereof, which is an upper end portion, connected to an upper portion of the vehicle-body side frame 22 (left vehicle-body side frame 22L or right vehicle-body side frame 22R). On the other hand, each vehicle-body-raising/lowering cylinder 9 has the piston rod head, which is a lower end portion, supported by a bracket or the like projecting laterally inward of the vehicle from an end of the traveling frame 30 (left traveling frame 30L or right traveling frame 30R) that is located inward in the vehicle.

In normal times, the piston rods of the left vehicle-body-raising/lowering cylinder 9L and the right vehicle-body-raising/lowering cylinder 9R are retracted, and the vehicle body 2 is in the lowest position, as illustrated in FIGS. 1, 3 to 6, and so forth, within an area of up-and-down movement thereof. When the piston rods of the left vehicle-body-raising/lowering cylinder 9L and the right vehicle-body-raising/lowering cylinder 9R are simultaneously extended by the same stroke, the entirety of the vehicle body 2 is raised as illustrated in FIG. 8. To be more detailed, the extending movements of the piston rods of the left vehicle-body-raising/lowering cylinder 9L and the right vehicle-body-raising/lowering cylinder 9R cause the vehicle body 2 to move upward with respect to the left and right traveling structures 3 while being guided by the mast structures 31.

It is also conceivable that the left vehicle-body-raising/lowering cylinder 9L and the right vehicle-body-raising/lowering cylinder 9R may be differentially extended and retracted to adjust the tilt of the vehicle body 2 with respect to the left-right direction. For example, when a tilt of the ground to the lower left brings the left traveling structure 3L lower than the right traveling structure 3R to tilt the vehicle body 2 to the lower left, the vehicle body 2 may be kept level in the left-right direction by extending only the left vehicle-body-raising/lowering cylinder 9L to move a left portion of the vehicle body 2 upward relative to the left traveling structure 3L.

The vehicle-body-raising/lowering cylinder 9 need not be provided in a pair of left and right ones, and is not limited in quantity or position in the vehicle body 2. The actuator for moving the vehicle body 2 in the top-bottom direction need not be an extendable and retractable actuator such as the vehicle-body-raising/lowering cylinder 9, and may be configured to move the vehicle body 2 in the top-bottom direction with, for example, the rotation of an electric motor.

In the present embodiment, as described above, the width-changing cylinder 8 defining the vehicle-body deformer 80 and the vehicle-body-raising/lowering cylinder 9 defining the vehicle-body mover 90 are hydraulic actuators, and the extending and retracting movements thereof are controlled by the controller 15 controlling respective control valves included in a control-valve unit 27 as illustrated in FIG. 14.

The width-changing cylinder 8 and the vehicle-body-raising/lowering cylinder 9 illustrated in FIG. 14 represent each of the width-changing cylinders 8A and 8B and each of the vehicle-body-raising/lowering cylinders 9L and 9R, respectively, and the controller 15 is capable of individually controlling the extending and retracting movements thereof.

The center battery case 24 accommodates a battery (center battery) 50 as illustrated in FIGS. 2, 5, 7 and so forth. With consideration for the weight balance of the center battery 50, which is a heavy object, in the working vehicle 1 as a whole or for another reason (for example, in relation to the layout of pieces of equipment in the vehicle body 2), the center battery case 24 is movable in the front-rear direction relative to the vehicle-body center frame 21 (vehicle-body frame structure 20). That is, the vehicle body 2 also deforms with the center battery case 24 moving forward and rearward relative to the vehicle-body center frame 21.

To move the center battery case 24 forward and rearward with respect to the vehicle-body center frame 21, a battery-moving actuator 81 that is a hydraulic cylinder, for example, may be provided as the vehicle-body deformer 80 (see FIG. 14). Alternatively, instead of providing such a vehicle-body deformer, the worker may directly push or pull the center battery case 24 with his/her hand to move the center battery case 24 forward or rearward with respect to the vehicle-body center frame 21.

An air-conditioner unit (air-temperature regulator) 51 is provided forward of the center battery case 24, and a radiator 52 is provided immediately forward of the air-conditioner unit 51. The radiator 52 is located at the front end of the vehicle body 2, and no object is present forward of the radiator 52 in the vehicle body 2. The front surface of the radiator 52 is not shielded by any other members, and the radiator 52 can efficiently take in outside air to achieve a favorable heat-exchange efficiency. A radiator fan 52a is provided at a rear portion of the radiator 52. That is, an air-cooled device and a water-cooled device are provided immediately forward of the center battery case 24.

The air-conditioner unit 51 and the radiator fan 52a are operable with electric power supplied from the center battery 50 and/or at least one side battery 37, and the outputs thereof are controlled by the controller 15 in accordance with, for example, the result of detection by a temperature detector 18 provided in the working vehicle 1 as illustrated in FIG. 14.

As illustrated in FIG. 10, the center battery case 24 is connected to the air-conditioner unit 51 with no duct in between. The center battery case 24 is configured such that cooling air delivered by the air-conditioner unit 51 is introduced into the center battery case 24 to cool the center battery 50, and that the cooling air having cooled the center battery 50 is returned to the air-conditioner unit 51. The structure of the center battery case 24 will be described in detail below in relation to the piping of ducts between the air-conditioner unit 51 and at least one side battery case 36 to be described below.

As illustrated in FIGS. 7 and so forth, the PTO case 26 is supported by the vehicle-body center frame 21 at a position rearward of the center battery case 24. The PTO case 26 journals the PTO shaft 65 (see FIG. 14) for transmitting power to the working device that is coupled to the PTO case 26 or the like. For example, the PTO shaft 65 projects rearward from the rear end of the PTO case 26, which is a rear end portion of the vehicle body 2.

Inside or outside the PTO case 26 are provided a work-system electric unit E1 and a hydraulic-system electric unit E2 that are electrical equipment as illustrated in FIG. 12. The work-system electric unit E1 is an electrical-equipment unit for controlling the driving of the PTO shaft 65, and includes an electric motor 54 defining a work-system prime mover, and an inverter 53 for controlling the output of the electric motor 54.

The hydraulic-system electric unit E2 is an electrical-equipment unit for controlling the driving of a hydraulic pump 57 for supplying hydraulic fluid to hydraulic actuators included in the working vehicle 1. The hydraulic actuators include the width-changing cylinder 8 and the vehicle-body-raising/lowering cylinder 9 included in the vehicle body 2 as described above, at least one lift cylinder 61 and an orientation-adjusting cylinder 63 included in the coupler 60 (see FIG. 14), a steering cylinder 35 included in the traveling structure 3, and the like. The hydraulic-system electric unit E2 includes an electric motor 56 defining a hydraulic-system prime mover, and an inverter 55 for controlling the output of the electric motor 56 (see FIG. 12).

As illustrated in FIGS. 6 and 7, the electric motor 56 and the inverter 55 included in the hydraulic-system electric unit E2 are located below the PTO case 26, and the hydraulic pump 57 is connected to the electric motor 56.

The electric motor 54 of the work-system electric unit E1 is driven by receiving electric power from the center battery 50 and/or the side battery 37 and drives the PTO shaft 65 with the output thereof. The inverter 53 converts a direct current from the center battery 50 into an alternating current and supplies the alternating current to the electric motor 54 at a set voltage and/or frequency.

As illustrated in FIG. 14, the set value of the voltage and/or frequency of the inverter 53 is controlled by the controller 15. Thus, the number of output revolutions and/or torque of the electric motor 54 is controlled. Accordingly, the number of revolutions and/or torque of the PTO shaft 65 is controlled.

The PTO case 26 may be provided inside thereof with a transmission mechanism for transmitting the output of the electric motor 54 to the PTO shaft 65. The transmission mechanism may be a mechanism including gears, a mechanism including an endless band, or a mechanism including another structure. The transmission mechanism may be a stepped or stepless transmission mechanism. The transmission mechanism may include a clutch, brake, and/or the like.

The electric motor 56 of the hydraulic-system electric unit E2 is driven by receiving electric power from the center battery 50 and/or the side battery 37 and drives the hydraulic pump 57 with the output thereof. The inverter 55 converts a direct current from the center battery 50 into an alternating current and supplies the alternating current to the electric motor 56 at a set voltage and/or frequency.

As illustrated in FIG. 14, the set value of the voltage and/or frequency of the inverter 55 is controlled by the controller 15. Thus, the number of output revolutions and/or torque of the electric motor 56 is controlled. Accordingly, the number of revolutions and/or torque of the hydraulic pump 57 is controlled.

On the premise that the coupler 60 is a three-point linkage, left and right lower links of the coupler 60 are connected to left and right lift arms. Therefore, the extending and retracting movements of left and right lift cylinders 61 cause the left and right lift arms to move up and down, and the left and right lower links follow the up-and-down movements to move up and down. Thus, the working device attached to the left and right lower links and the top link of the coupler 60 moves up and down (is raised and lowered).

Furthermore, the extending and retracting movement of the orientation-adjusting cylinder 63 is used to adjust the difference between the interval between the left lift arm and the left lower link and the interval between the right lift arm and the right lower link. Thus, the tilt angle, with respect to the left-right direction, of the working device attached to the coupler 60 is adjusted.

With such a configuration, even if, for example, the working device that is performing agricultural work is about to tilt to the left or right due to a tilt in the agricultural field, the orientation-adjusting cylinder 63 extends or retracts to adjust the intervals between the lift arms and the lower links to keep the working device level with respect to the left-right direction. Thus, a favorable furrow with no tilt with respect to the left-right direction can be formed in the work trail of the working device, which is, for example, a furrower.

As described above, a working device is allowed to be coupled to the coupler 60 attached to the PTO case 26 or the like. Furthermore, the working device coupled to the vehicle body 2 via the coupler 60 can receive a driving force from the PTO shaft 65 (see FIG. 14) projecting from the PTO case 26.

Options for the working device include, but are not limited to, a device that performs work related to agriculture (agricultural work), a device that performs work related to civil engineering, a device that performs work related to construction, a device that performs work related to transportation, and so forth. In the following embodiments, the working device is a device that performs agricultural work.

Examples of the working device that performs agricultural work include a spreader that spreads an object to be spread such as a fertilizer or a chemical, a seeder that sows seeds, a cultivator that cultivates soil, a plower (plow) that plows soil, a weeder that removes weeds, a hiller that earths up soil, and so forth. However, the working device need only be a device for performing agricultural work, and the kind thereof is not particularly limited.

In a case where the working device is an electric working device, the working device may be driven with the power derived from the center battery 50 and/or the side battery 37 to the outside of the vehicle body 2 via a power line instead of driving with the power derived from the PTO shaft 65.

The working device may be coupled to the working vehicle 1 while being located alongside or forward of the vehicle body. Furthermore, in a case where, for example, the working device is located forward of the working vehicle 1, the coupler 60 may be attached to, for example, the center battery case 24. Via the coupler 60 thus attached to the front portion of the vehicle body 2, the working device located forward of the working vehicle 1 may be coupled to the working vehicle 1.

In addition to the PTO shaft 65 provided at the rear portion of the vehicle body 2 or in place of the PTO shaft 65, a front PTO shaft may be provided, for example, forward of the center battery case 24 so that the working device located forward of the working vehicle 1 is driven via the front PTO shaft. Examples of such a front-attaching agricultural working device (implement) include a combine unit that is a combination of a cutter, a thresher, a sorter, and so forth of a combine, and the like.

The coupler 60 may be removably attached to the PTO case 26 or the like. An element of the vehicle body 2 other than the PTO case 26, for example, the center battery case 24, may also be provided with an attachment to which the coupler 60 is attachable to allow the working device to be coupled to the working vehicle 1 at the front of the vehicle body 2.

The working device may be mounted on, for example, an upper portion of the vehicle-body frame structure 20 in the vehicle body 2 of the working vehicle 1, with no coupler 60 in between. In such a case, the PTO shaft that transmits the driving force to the working device may be provided in such a manner as to project upward from the upper portion of the vehicle-body frame structure 20 (for example, the vehicle-body center frame 21).

The working vehicle 1 includes hydraulic actuators such as the width-changing cylinder 8 and the vehicle-body-raising/lowering cylinder 9 provided in the vehicle body 2 as described above, and the steering cylinder 35 provided in the traveling structure 3. In another case, the coupler 60 attached to the vehicle body 2 may include the hydraulic actuators such as the lift cylinder 61 and the orientation-adjusting cylinder 63 described above.

To control the actuation of such hydraulic actuators, one or more control-valve units 27 are attached to the outside of the PTO case 26, and/or the like. Each control-valve unit 27 includes a control valve that controls the flow of the hydraulic fluid between the hydraulic pump 57 and a corresponding one of the hydraulic actuators, which are the targets of hydraulic-pressure control. The control-valve unit 27 further includes a port for fluid connection of the control valve to the hydraulic pump 57, the hydraulic actuators, and/or the like, via an oil tube and/or the like.

Different control valves for different hydraulic actuators as targets of hydraulic-pressure control may be combined into a single control-valve unit 27. The control valves may be provided not only outside the PTO case 26 as described above but also inside the PTO case 26.

In a case where each control valve included in the control-valve unit 27 is a solenoid valve and/or in another like case, the control-valve unit 27 may be electrically connected to the controller 15 or the like with electric wires or the like.

In place of the battery 50, an internal combustion engine (engine) may be provided in the center battery case 24 or the like. Thus, the engine output may be used in driving the hydraulic pump 57 for the actuation of the above hydraulic actuators, and/or the engine output may be transmitted to the PTO shaft 65 to drive the PTO shaft 65.

To summarize, the vehicle body 2 is able to "deform" with the center battery case 24 being movable in the front-rear direction with respect to the vehicle-body center frame 21 and with each of the left and right vehicle-body side frames 22 being movable in the left-right direction with respect to the vehicle-body center frame 21. Each width-changing cylinder 8 functions as a vehicle-body deformer (actuator) that deforms the vehicle body 2.

Furthermore, the vehicle body 2 is able to "move" in the top-bottom direction relative to the left and right traveling structures 3L and 3R. Each vehicle-body-raising/lowering cylinder 9 functions as a vehicle-body mover (actuator) that moves the vehicle body 2.

With the deformation of the vehicle body 2 itself and/or with the up-and-down movement of the entirety of the vehicle body 2 relative to the left and right traveling structures 3L and 3R as described above, the shape of the working vehicle 1 including the vehicle body 2 and the left and right traveling structures 3L and 3R changes. Such a shape of the working vehicle 1 will be referred to as "vehicle shape".

As illustrated in FIG. 14, the vehicle-body deformer 80 including the width-changing cylinder 8, the battery-moving actuator 81, and so forth, and the vehicle-body mover 90 including the vehicle-body-raising/lowering cylinder 9 and so forth are collectively referred to as a vehicle-shape changer 100. The controller 15 controls the devices included in the vehicle-shape changer 100.

As described above, not only the width-changing cylinder 8, the battery-moving actuator 81, and the vehicle-body-raising/lowering cylinder 9 included in the vehicle-shape changer 100 but also the lift cylinder 61, the orientation-adjusting cylinder 63, and so forth included in the coupler 60 are all hydraulic actuators, and are actuated with the hydraulic fluid delivered by the hydraulic pump 57 driven by the electric motor 56 of the hydraulic-system electric unit E2.

At the front portion of the vehicle body 2 and immediately forward of the center battery case 24 are provided, as described above, the air-conditioner unit 51, which is included in an air-cooled device 110 (see FIG. 14), and the radiator 52 (provided with the radiator fan 52a), which is included in a water-cooled device 120 (see FIG. 14). Among the foregoing, the structure of a circulation circuit (duct) for the cooling air from the air-conditioner unit 51 will be described in detail separately below, and the structure of a circuit for circulation of the cooling water cooled by the radiator 52 provided in the vehicle body 2 will now be described with reference to FIGS. 1 to 8, 12, and 13.

At the front portion of the vehicle body 2, the radiator 52 is provided in such a manner as to spread in the left-right direction and the top-bottom direction. Wind generated with the rotation of the radiator fan 52a provided immediately rearward of the radiator 52 is blown to the radiator 52 and thus promotes heat exchange (cooling) in the radiator 52.

In a space in the vehicle body 2 that is rearward of the radiator 52 and below the air-conditioner unit 51, a pair of electric cooling-water pumps 58A and 58B and a reservoir tank 59 (see FIGS. 5, 7, and so forth) are provided.

The electric cooling-water pump 58A supplies cooling water sucked from the reservoir tank 59 to the inverter 53 and the electric motor 54 of the work-system electric unit E1 to cool the foregoing. The electric cooling-water pump 58B supplies cooling water sucked from the reservoir tank 59 to the inverter 55 and the electric motor 56 of the hydraulic-system electric unit E2 to cool the foregoing.

Either of the pair of electric cooling-water pumps 58 illustrated in FIGS. 5 and so forth may be used as the electric cooling-water pump 58A for the work-system electric unit E1 or as the electric cooling-water pump 58B for the hydraulic-system electric unit E2.

The radiator 52 is a cooler (air-cooled device) that cools the cooling water delivered from the electric cooling-water pumps 58A and 58B and circulating in the traveling structure 3. The radiator fan 52a is driven by receiving electric power from the center battery 50 and/or the side battery 37 and promotes heat exchange of the cooling water in the radiator 52.

Thus, as illustrated in FIG. 12, a water-cooled cooling (temperature-regulating) circuit R1 is provided in or on the vehicle body 2 that is a cooling-water passage for causing the cooling water to circulate through the radiator 52 (radiator fan 52a), the electric cooling-water pumps 58A and 58B, the work-system electric unit E1, the hydraulic-system electric unit E2, and so forth.

That is, the water-cooled cooling (temperature-regulating) circuit R1 includes a parallel circuit including a cooling-water supply circuit for the work-system electric unit E1 (electric motor 54 and so forth) and a cooling-water supply circuit for the hydraulic-system electric unit E2 (electric motor 56 and so forth), with the electric cooling-water pumps 58A and 58B defining pumps that individually deliver cooling water to the respective cooling-water supply circuits. Therefore, cooling water can be efficiently supplied to the individual cooling targets (that is, individually to the work-system electric unit E1 and the hydraulic-system electric unit E2), and the respective flows of cooling water can be controlled individually.

Now, the structure of the traveling structure 3 will be described. Each traveling structure 3 includes the traveling frame 30 and a pair of wheel units 4. The pair of wheel units 4 are a front wheel unit 4F supported at a front portion of the traveling frame 30, and a rear wheel unit 4R supported at a rear portion of the traveling frame 30.

Each wheel unit 4 includes one wheel 5, and a wheel-driving case 32 supporting an axle 5a, which is the center rod of the wheel 5. The wheel 5 of the front wheel unit 4F is a front wheel 5F, and the wheel 5 of the rear wheel unit 4R is a rear wheel 5R.

The front wheel 5F and the rear wheel 5R have substantially the same diameter. Alternatively, the front wheel 5F and the rear wheel 5R may have different diameters. Moreover, at least one of the front wheel 5F or the rear wheel 5R may be the driving wheel (driving sprocket) of a crawler-type traveling device.

To be more detailed, the traveling frame 30 of the left traveling structure 3L is the left traveling frame 30L, the front wheel unit 4F supported at a front portion of the left traveling frame 30L is a left-front wheel unit 4FL that journals a left-front wheel 5FL, and the rear wheel unit 4R supported at a rear portion of the left traveling frame 30L is a left-rear wheel unit 4RL that journals a left-rear wheel 5RL.

On the other hand, the traveling frame 30 of the right traveling structure 3R is the right traveling frame 30R, the front wheel unit 4F supported at a front portion of the right traveling frame 30R is a right-front wheel unit 4FR that journals a right-front wheel 5FR, and the rear wheel unit 4R supported at a rear portion of the right traveling frame 30R is a right-rear wheel unit 4RR that journals a right-rear wheel 5RR.

A traveling motor 7, a gear mechanism to transmit the output of the traveling motor 7, and so forth are accommodated in an upper portion of the wheel-driving case 32 of each wheel unit 4. A rotary barrel 32a illustrated in FIGS. 5, 6, and so forth extends perpendicularly downward from the upper portion. The rotary barrel 32a is connected to the upper portion of the wheel-driving case 32 in such a manner as to be rotatable relative thereto.

Inside the rotary barrel 32a, a vertical transmission shaft having an axis extending in the top-bottom (vertical) direction is supported in such a manner as to be rotatable on the axis. The center rod (axle) 5a of the wheel 5 is inserted into and supported at a lower end portion of the rotary barrel 32a. In other words, the axle 5a projects left-right outward from the lower portion of the rotary barrel 32a of the wheel-driving case 32, and the wheel 5 fitted around the axle 5a is located left-right outward of the rotary barrel 32a.

The upper portion of the wheel-driving case 32 accommodates a transmission mechanism including a bevel gear and an endless band, and/or the like to interlock the output shaft of the traveling motor 7 and an upper portion of the transmission shaft extending on the vertical axis in the rotary barrel 32a with each other. A lower portion of the rotary barrel 32a accommodates a transmission mechanism including a bevel gear and/or the like to interlock a lower portion of the vertical transmission shaft in the rotary barrel 32a and the axle 5a of the wheel 5 with each other.

Hereinafter, a situation where the traveling frame 30 supports the wheel-driving case 32 that journals the axle 5a of the wheel 5 may also be described as that the traveling frame 30 supports the axle 5a.

With the above configuration, inside the wheel-driving case 32, the output of the traveling motor 7 is transmitted to the wheel 5 via the transmission mechanism such as a bevel gear mechanism. Thus, the wheel 5 is driven. That is, the left-front wheel 5FL, the right-front wheel 5FR, the left-rear wheel 5RL, and the right-rear wheel 5RR are each a driving wheel that is driven with the output of the corresponding traveling motor 7.

Hereinafter, the traveling motor 7 for the front wheel unit 4F in each traveling structure 3 may be referred to as a front traveling motor 7F, and the traveling motor 7 for the rear wheel unit 4R may be referred to as a rear traveling motor 7R.

Furthermore, regarding the left traveling structure 3L, the traveling motor 7 for the left-front wheel unit 4FL may be referred to as a left-front traveling motor 7FL, and the traveling motor 7 for the left-rear wheel unit 4RL may be referred to as a left-rear traveling motor 7RL, regarding the right traveling structure 3R, the traveling motor 7 for the right-front wheel unit 4FR may be referred to as a right-front traveling motor 7FR, and the traveling motor 7 for the right-rear wheel unit 4RR may be referred to as a right-rear traveling motor 7RR.

While the upper portion of the wheel-driving case 32 that accommodates the traveling motor 7 and so forth is fixed by being attached to the traveling frame 30, the rotary barrel 32a is rotatable on the axis extending in the top-bottom direction with respect to the upper portion.

The wheel-driving case 32 is provided on the outside thereof with a steering-gear mechanism 34 for rotating the rotary barrel 32a relative to the upper portion of the wheel-driving case 32. The steering-gear mechanism 34 includes an arm. The steering cylinder 35 is interposed between the arm and the traveling frame 30.

Referring to FIGS. 14 and so forth, a command from the controller 15 or the like causes the steering cylinder 35 to extend or retract, which rotates the arm. Accordingly, the steering-gear mechanism 34 is actuated to cause the rotary barrel 32a of each wheel-driving case 32 to rotate on the axis thereof extending in the top-bottom direction while journaling the wheel 5. That is, the wheel 5 is a driving wheel that is driven by the traveling motor 7 as described above, and is also a steering wheel that is rotatable in the left-right direction relative to the traveling frame 30, that is, the angle with respect to the left-right direction is changeable.

Each traveling motor 7 is an electric motor. The traveling motors 7 for the front wheel unit 4F and the rear wheel unit 4R are driven by receiving electric power from the side battery 37 and/or the center battery 50. The inverter 6 for controlling the output of the traveling motor 7 is provided in the traveling structure 3. As illustrated in FIG. 14, the controller 15 controls the inverter 6 to control the number of output revolutions and the direction of output rotation of the traveling motor 7.

While the block diagram in FIG. 14 illustrates only a combination of the traveling motor 7 and the inverter 6 for a single wheel unit 4, the wheel unit 4 illustrated therein represents each of the four wheel units 4FL, 4FR, 4RL, and 4RR. The controller 15 controls the individual inverters 6 provided for the respective wheel units 4 to individually control the numbers of revolutions and directions of rotation of the respective wheels 5.

The traveling frame 30 of each traveling structure 3 supports the side battery 37, a front inverter 6F for the front traveling motor 7F of the front wheel unit 4F, and a rear inverter 6R for the rear traveling motor 7R of the rear wheel unit 4R.

The side battery 37 is accommodated in the side battery case 36, which is supported by the traveling frame 30 between the front wheel 5F and the rear wheel 5R as illustrated in FIGS. 1 and so forth. The traveling frame 30 supports the front inverter 6F for the front traveling motor 7F at a position immediately forward of the side battery case 36, and supports the rear inverter 6R for the rear traveling motor 7R at a position immediately rearward of the side battery case 36.

Hereinafter, the side battery 37 supported by the left traveling frame 30L of the left traveling structure 3L may be referred to as a left side battery 37L, the front inverter 6F supported by the left traveling frame 30L may be referred to as a left-front inverter 6FL, and the rear inverter 6R supported by the left traveling frame 30L may be referred to as a left-rear inverter 6RL.

Furthermore, the side battery 37 supported by the right traveling frame 30R of the right traveling structure 3R may be referred to as a right side battery 37R, the front inverter 6F supported by the right traveling frame 30R may be referred to as a right-front inverter 6FR, and the rear inverter 6R supported by the right traveling frame 30R may be referred to as a right-rear inverter 6RR.

Furthermore, regarding each traveling structure 3, the front traveling motor 7F and the front inverter 6F are electrically connected to each other, and the combination of the front traveling motor 7F and the front inverter 6F may be referred to as a front traveling-system electric unit E3F (see FIG. 13). On the other hand, the rear traveling motor 7R and the rear inverter 6R are electrically connected to each other, and the combination of the rear traveling motor 7R and the rear inverter 6R may be referred to as a rear traveling-system electric unit E3R (see FIG. 13).

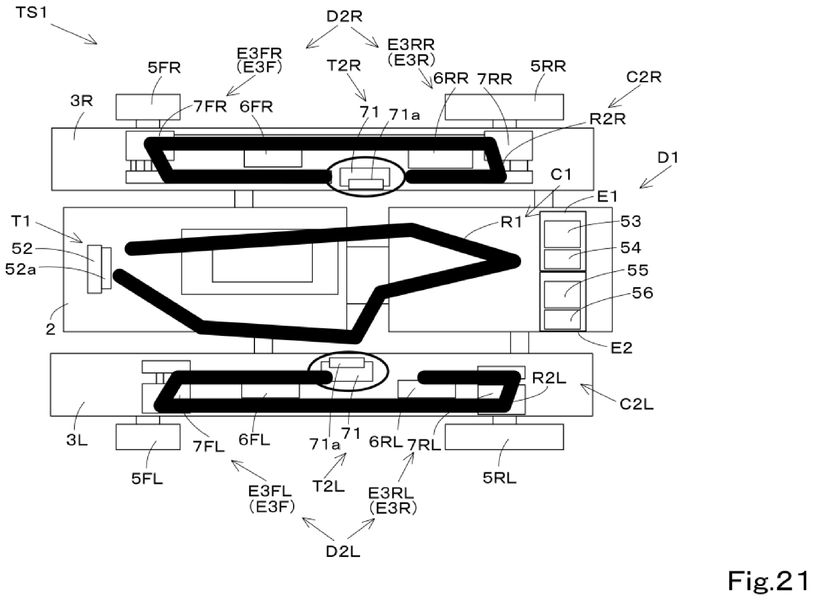

Furthermore, regarding the left traveling structure 3L, a combination of the left-front inverter 6FL and the left-front traveling motor 7FL may be referred to as a left-front traveling-system electric unit E3FL, and a combination of the left-rear inverter 6RL and the left-rear traveling motor 7RL may be referred to as a left-rear traveling-system electric unit E3RL. Regarding the right traveling structure 3R, a combination of the right-front inverter 6FR and the right-front traveling motor 7FR may be referred to as a right-front traveling-system electric unit E3FR, and a combination of the right-rear inverter 6RR and the right-rear traveling motor 7RR may be referred to as a right-rear traveling-system electric unit E3RR (see FIG. 21).

As with the case of the traveling motor 7 and the inverter 6 described above, while the block diagram in FIG. 14 illustrates only a single steering cylinder 35, it means that the steering cylinder 35 is provided for each of the wheel units 4. The controller 15 controls the individual control valves for the steering cylinders 35 provided for the respective wheel units 4 to individually control the rudder angles (angles of leftward or rightward turn) of the respective wheels 5.

Each steering cylinder 35 may be configured as an air cylinder, a water hydraulic cylinder, or the like, other than an oil hydraulic cylinder. The actuator to steer the wheel 5 may be other than such an extendable and retractable actuator and may be, for example, an electric motor, a hydraulic motor, or the like configured to rotate the rotary barrel 32a by outputting a rotational force.

At the front portion of each traveling frame 30 are provided a radiator 71, a radiator fan 71a, a pair of electric cooling-water pumps 72A and 72B, and a reservoir tank (cooling-water storage tank) 73.

As illustrated in FIG. 13, the electric cooling-water pump 72A supplies cooling water sucked from the reservoir tank 73 to the front traveling motor 7F and the front inverter 6F (front traveling-system electric unit E3F) for the front wheel unit 4F to cool the foregoing, and the electric cooling-water pump 72B supplies cooling water sucked from the reservoir tank 73 to the rear traveling motor 7R and the rear inverter 6R (rear traveling-system electric unit E3R) for the rear wheel unit 4R to cool the foregoing.

Either of the pair of electric cooling-water pumps 72 provided at the front portion of each traveling frame 30 illustrated in FIGS. 1 and so forth may be used as the electric cooling-water pump 72A for the front traveling-system electric unit E3F or as the electric cooling-water pump 72B for the rear traveling-system electric unit E3R.

The radiator 71 is a cooler (air-cooled device) that cools the cooling water delivered from the electric cooling-water pumps 72A and 72B and circulating in the traveling structure 3. The radiator fan 71a is driven by receiving electric power from the side battery 37 and/or the center battery 50 and promotes heat exchange of the cooling water in the radiator 71.

As illustrated in FIGS. 2 and so forth, the front end portion of the traveling frame 30 in plan view is tilted rearward from the left-right inner side toward the left-right outer side. The radiator 71 extends in the top-bottom direction along the front end portion of the traveling frame 30 and is tilted in plan view, as illustrated in FIGS. 2 and so forth, in such a manner as to be parallel to the tilted front end portion of the traveling frame 30. That is, the radiator 71 is tilted such that the front end thereof is located left-right inward while the rear end thereof is located left-right outward.

Thus, no object is present forward of the radiator 71 located at the front end portion of the traveling frame 30 (traveling structure 3). Therefore, the front surface of the radiator 71 is not shielded by any other members, and the radiator 71 can efficiently take in outside air to achieve a favorable heat-exchange efficiency.

The radiator 71 is tilted in plan view as described above at the upper front of the front wheel 5F in such a manner as to face a front-upper portion of the contact (tread) surface of the front wheel 5F. Thus, the radiator 71 is positioned within the limited left-right dimension of the traveling frame 30 without projecting from the left and right ends of the traveling frame 30 (an end facing toward the vehicle body 2 and an end facing away from the vehicle body 2) at the front portion of the traveling frame 30.

Furthermore, as illustrated in FIGS. 2, 5, 6, and so forth, the left-right outer end face of the traveling frame 30 is substantially flush with the left-right outer end faces of the wheels 5 (front wheel 5F and rear wheel 5R) supported by the traveling frame 30. Therefore, the radiator 71 does not project from the left-right outer ends of the wheels 5.

Thus, as illustrated in FIG. 13, a water-cooled cooling (temperature-regulating) circuit R2 is provided in or on each traveling structure 3 that is a cooling-water passage for causing the cooling water to circulate through the radiator 71, the electric cooling-water pumps 72A and 72B, the front traveling-system electric unit E3F, the rear traveling-system electric unit E3R, and so forth.

That is, the water-cooled cooling (temperature-regulating) circuit R2 includes a parallel circuit including a cooling-water supply circuit for the front traveling-system electric unit E3F (front traveling motor 7F and so forth) and a cooling-water supply circuit for the rear traveling-system electric unit E3R (rear traveling motor 7R and so forth), with the pair of electric cooling-water pumps 72 defining pumps that individually deliver cooling water to the respective cooling-water supply circuits that are in parallel. Therefore, cooling water can be efficiently supplied to the individual cooling targets (that is, individually to the front traveling-system electric unit E3F (front traveling motor 7F and so forth)) and to the rear traveling-system electric unit E3R (rear traveling motor 7R and so forth), and the respective flows of cooling water can be controlled individually.

The water-cooled cooling (temperature-regulating) circuit R2 provided in or on the left traveling structure 3L may be referred to as a left water-cooled cooling (temperature-regulating) circuit R2L, and the water-cooled cooling (temperature-regulating) circuit R2 provided in or on the right traveling structure 3R may be referred to as a right water-cooled cooling (temperature-regulating) circuit R2R.

Now, a first embodiment concerning the air-cooled system of the working vehicle 1 will be described with reference to FIGS. 1 to 11 and so forth. As described above, the working vehicle 1 includes the air-conditioner unit 51 at the front portion of the vehicle body 2.

The air-conditioner unit 51 includes a compressor, a heat exchanger, a delivery port, an air intake port 51a, and so forth. Air compressed by the compressor is cooled by the heat exchanger and is delivered as cooling air from the delivery port. The air having cooled each of the cooling targets is collected through the air intake port 51a.

The cooling targets included in the working vehicle 1 that are to be cooled by the cooling air delivered from the air-conditioner unit 51 defining an air-cooled cooler include the center battery 50 provided in or on the vehicle body 2, the side batteries 37 provided in or on the left and right traveling structures 3, and so forth.

That is, the cooling air from the air-conditioner unit 51 provided in or on the vehicle body 2 is distributed to the cooling targets provided in or on three respective elements, which are the vehicle body 2, the left traveling structure 3L, and the right traveling structure 3R.

The duct structure of the air-cooled system according to the first embodiment illustrated in FIGS. 1 to 11 and so forth provides a cooling-air-circulating circuit in which the cooling air from the air-conditioner unit 51 described above is supplied to the individual cooling targets and is collected.

In the present embodiment, the center battery case 24 accommodating the center battery 50 includes, as illustrated in FIG. 10, a cooling-air entrance 24a at a lower portion of a front end portion thereof, and a cooling-air exit 24b at an upper portion of the front end portion. A delivery manifold 41a is interposed between the delivery port provided at a rear portion of the air-conditioner unit 51 and the cooling-air entrance 24a provided at the front end portion of the center battery case 24.

The center battery case 24 is provided inside thereof with a horizontal plate-shaped partition 24e extending in the front-rear direction. The space below the partition 24e defines a cooling-air passage 24c for allowing air defining cooling air to be blown onto and pass along the center battery 50 that is a cooling target. The space above the partition 24e defines an exhaust-air passage 24d for sending the air having cooled the center battery 50 to the cooling-air exit 24b.

The partition 24e is located higher than substantially half the height of the center battery case 24 in the top-bottom direction. The top-bottom dimension of the cooling-air passage 24c is greater than the top-bottom dimension of the exhaust-air passage 24d. That is, a relatively large volume of space for blowing cooling air onto the center battery 50 can be secured inside the center battery case 24.

The partition 24e thermally insulates the exhaust-air passage 24d and the cooling-air passage 24c from each other. Specifically, the partition 24e is made of an insulating material or includes an insulator so that the temperature of warm air flowing through the exhaust-air passage 24d is not transferred to the cooling-air passage 24c.

In the center battery case 24, a partition 24f extending in the top-bottom direction is connected to the rear end of the partition 24e, and the partitions 24e and 24f are arranged in an inverted L shape in left side view. The space provided rearward of the partition 24f defines a communicating passage 24g. Thus, a rear portion of the cooling-air passage 24c and a rear portion of the exhaust-air passage 24d communicate with each other through the communicating passage 24g extending in the top-bottom direction.

The cooling air subjected to temperature regulation in the air-conditioner unit 51 and delivered from the delivery manifold 41a is introduced into the center battery case 24 through the cooling-air entrance 24a at the front end portion of the center battery case 24 but through no duct. The cooling air introduced through the cooling-air entrance 24a is blown onto the center battery 50 while flowing rearward in the cooling-air passage 24c, and cools the center battery 50.

In the cooling-air passage 24c, the cooling air having cooled the center battery 50 is contrarily heated by the center battery 50 to be hotter than at the time of introduction through the cooling-air entrance 24a into the cooling-air passage 24c. The cooling air thus heated moves upward in the communicating passage 24g and flows into the exhaust-air passage 24d higher than the cooling-air passage 24c.

The cooling air having cooled the center battery 50 further flows forward in the exhaust-air passage 24d and is discharged forward of the center battery case 24 through the cooling-air exit 24b at the front end portion of the center battery case 24.

As illustrated in FIGS. 3, 10, and so forth, an air-conditioner case 40 accommodating the air-conditioner unit 51 is provided immediately forward of the center battery case 24. The air intake port 51a of the air-conditioner unit 51 is open toward the space in an air-conditioner chamber 40a provided in the air-conditioner case 40.

The cooling air discharged to the outside of the center battery case 24 through the cooling-air exit 24b is taken (returned) into the air-conditioner unit 51 through the space in the air-conditioner chamber 40a and the air intake port 51a.

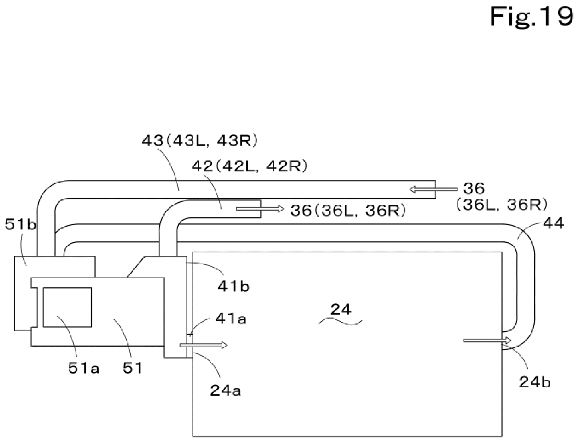

The air-conditioner unit 51 may be provided with an intake manifold (see an intake manifold 51b in FIG. 19) that communicates with the air intake port 51a, and a duct extending from the cooling-air exit 24b to the intake manifold.

A fan 45 is provided inside the center battery case 24 at a position below the partition 24f extending in the top-bottom direction and where the rear end of the cooling-air passage 24c and a lower portion of the communicating passage 24g communicate with each other.

The fan 45 is configured to take in air in the cooling-air passage 24c forward thereof and to discharge the air to the communicating passage 24g rearward thereof.

That is, the fan 45 provided at the rear end portion of the cooling-air passage 24c takes in the air flowing into the cooling-air passage 24c through the cooling-air entrance 24a and guides the air to the communicating passage 24g to generate rearward cooling air in the cooling-air passage 24c.

The fan 45 also generates an upward airflow in the communicating passage 24g and a forward airflow in the exhaust-air passage 24d by exhausting the air rearward.

Thus, the fan 45 facilitates the flow of the cooling air from the cooling-air entrance 24a to the cooling-air exit 24b in the center battery case 24.

Now, a configuration for cooling-air circulation between the air-conditioner unit 51 and side battery cases 36L and 36R provided in or on the left and right traveling structures 3L and 3R will be described.

The working vehicle 1 includes the vehicle body 2, the cooler provided in or on the vehicle body 2, at least one cooling target to be cooled by the cooling air delivered from the cooler, and a plurality of ducts allowing the cooling air to flow between the cooler and the cooling target. The vehicle body 2 includes a first end portion and a second end portion opposite each other in a first direction, and an intermediate portion between the first end portion and the second end portion in the first direction. The air-conditioner unit 51 is provided in or on the first end portion of the vehicle body 2. At least one of the plurality of ducts that extends from the air-conditioner unit 51 to the cooling target includes a first extending portion extending in the first direction and ranging from the first end portion to the intermediate portion, and includes a second extending portion extending in a direction different from the first direction in or on the intermediate portion.

The cooler is the air-conditioner unit 51, which is an air-temperature regulator (air conditioner) in the present embodiment. The cooler need only be configured to deliver cooling air for cooling the cooling target and may be a fan. The cooler may also be of a heat pump type that uses engine heat, or the like.

The cooling target is a battery in the present embodiment (the center battery 50 provided in or on the vehicle body 2 and the side battery 37 provided in or on each traveling structure 3). The cooling target need only be an object that can be a target of cooling by cooling air, and may be hydraulic equipment such as a hydraulic pump or electrical equipment such as an electric motor.

Furthermore, a structure in which at least one cooling target is cooled with a plurality of ducts need only be used. In the present embodiment, for example, an outgoing duct 42 and a return duct 43, to be described below, for cooling the side battery 37 provided in or on one of the left and right traveling structures 3 correspond to the plurality of ducts. Furthermore, left and right pairs of outgoing ducts 42L and 42R, to be described below, for cooling the left and right side batteries 37L and 37R also correspond to the plurality of ducts.

The vehicle body 2 includes the first end portion and the second end portion opposite each other in the first direction, and the intermediate portion between the first end portion and the second end portion in the first direction. The cooler is provided in or on the first end portion of the vehicle body 2. In the present embodiment, the first direction is the front-rear direction, the first end portion is a front end portion, and the second end portion is a rear end portion. However, this does not imply any limitation. The first end portion may be a rear end portion, and the second end portion may be a front end portion. Alternatively, the first direction may be, for example, the left-right direction, and the first end portion and the second end portion may be a left end portion and a right end portion. Moreover, the first direction may be an oblique direction.

Among the plurality of ducts, at least one duct that extends from the cooler (air-conditioner unit 51) to the cooling target includes the first extending portion extending in the first direction to range from the first end portion to the intermediate portion, and the second extending portion extending in the direction different from the first direction in or on the intermediate portion of the vehicle body 2.

In the present embodiment, the intermediate portion of the vehicle body 2, that is, the second extending portion extending in the direction different from the first direction (in the present embodiment, an extending portion 42b to be described below), is located at a position in the front-rear direction that corresponds to the side battery case 36 substantially at the front-rear center of the traveling structure 3. However, this does not imply any limitation. For example, in a case where the side battery case 36 is located near the rear end portion of the traveling structure 3, the intermediate portion of the vehicle body 2 where the second extending portion is to be provided may be defined near the rear end of the vehicle body 2. Alternatively, with the side battery case 36 remaining substantially at the front-rear center of the traveling structure 3, the intermediate portion of the vehicle body 2 where the second extending portion is to be provided may be defined rearward of the side battery case 36 and near the rear end of the vehicle body 2.

In the present embodiment, the direction in which the second extending portion extends and that is different from the first direction is the left-right direction. However, the portion is not limited to the one extending in such a direction. The direction may be the top-bottom direction, or may be the front-rear direction if the first direction is a direction other than the front-rear direction.

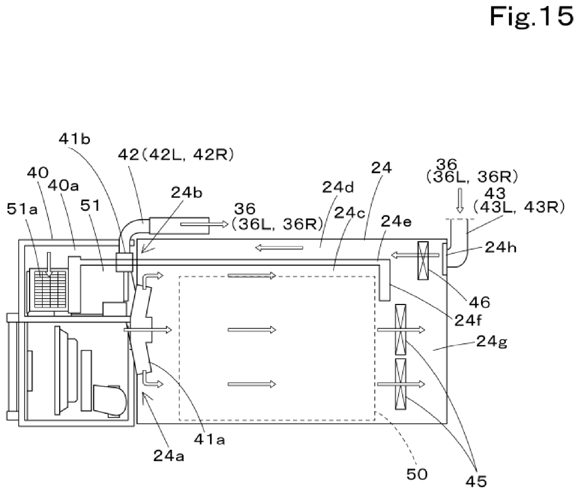

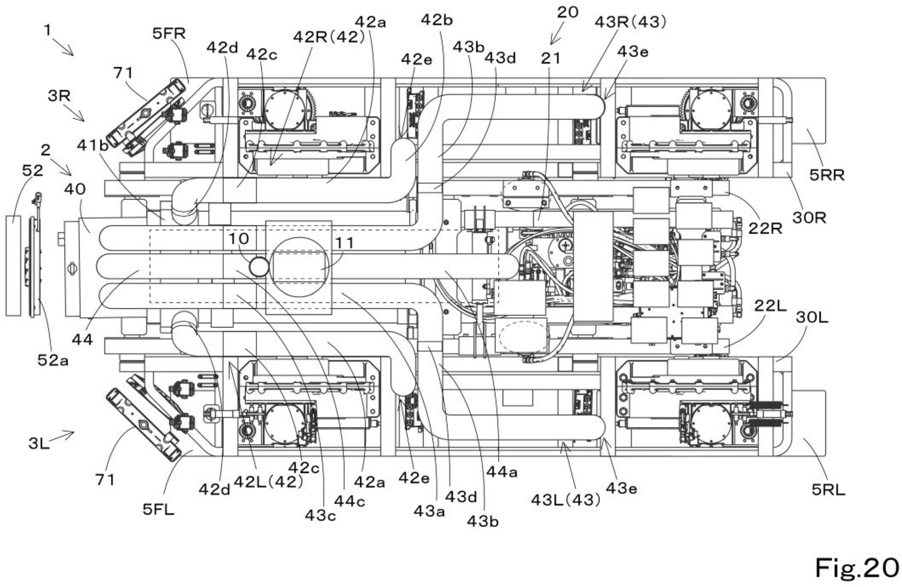

Now, the structure of an air-cooled system in which the cooling target to be cooled with cooling air delivered by the air-conditioner unit 51 defining a cooler is the center battery 50 provided in or on the vehicle body 2 and the side batteries 37 provided in or on the left and right traveling structures 3L and 3R will be described, focusing on the air-cooled system according to the first embodiment illustrated in FIGS. 1 to 11 and so forth. Structures that are common to a second embodiment illustrated in FIGS. 15 to 18 and a third embodiment illustrated in FIGS. 19 and 20 will also be described.

First, a structure for causing cooling air to circulate between the air-conditioner unit 51 and each side battery 37 will be described. As illustrated in FIGS. 10 and so forth, a delivery manifold 41b is provided at an upper portion of the air-conditioner unit 51 in such a manner as to project upward of the vehicle body 2 (vehicle-body center frame 21). The delivery manifold 41b is a delivery port for the cooling air flowing from the air-conditioner unit 51 toward the side battery case 36.

To supply the cooling air delivered from the air-conditioner unit 51 to the side battery 37, the outgoing duct 42 extends from the air-conditioner unit 51 to the side battery 37. That is, the outgoing duct 42 corresponds to the duct that is one of the plurality of ducts allowing the cooling air to flow between the cooler (air-conditioner unit 51) and the cooling target (side battery 37) and that extends from the cooler (air-conditioner unit 51) to the cooling target (side battery 37).

Specifically, the outgoing duct 42 extends from the delivery manifold 41b at the front end portion of the vehicle body 2 to the cooling-air entrance 36a (see FIG. 11) of the side battery case 36, which is a housing accommodating the side battery 37. In an area ranging from the front end portion (an example of the first end portion) of the vehicle body 2 to the front-rear intermediate portion of the vehicle body 2, the outgoing duct 42 is piped in such a manner as to pass through an upper portion of the vehicle body 2 (above the vehicle-body side frame 22).

Above the vehicle-body side frame 22 (in the upper portion of the vehicle body 2), the outgoing duct 42 includes a first extending portion 42a extending in the front-rear direction (an example of the first direction) along the vehicle-body side frame 22 to the front-rear intermediate portion of the vehicle body 2. The outgoing duct 42 is bent at the front-rear intermediate portion of the vehicle body 2 above the vehicle-body side frame 22 to extend left-right outward to the traveling structure 3 located left-right outward of the vehicle body 2. That is, the thus bent portion of the outgoing duct 42 is the rear end of the extending portion 42a, and the outgoing duct 42 includes an extending portion (second extending portion) 42b extending in the left-right direction, which is different from the front-rear direction, from the rear end of the extending portion 42a.

The configuration of the outgoing duct 42 described above also applies to the second embodiment illustrated in FIGS. 15 to 18 and the third embodiment illustrated in FIGS. 19 and 20.

On the other hand, to return the cooling air having cooled the side battery 37 to the air-conditioner unit 51, the return duct 43 extends from the side battery 37. Specifically, the return duct 43 extends from a cooling-air exit 36b (see FIG. 11) of the side battery case 36 that is the housing accommodating the side battery 37.

In the present embodiment (first embodiment) and the third embodiment illustrated in FIGS. 19 and 20, the return duct 43 has a structure extending to the vicinity of the air intake port 51a of the air-conditioner unit 51 to return the cooling air having cooled the side battery 37 provided in or on the traveling structure 3 to the air-conditioner unit 51 provided in or on the vehicle body 2. That is, in the present embodiment, the return duct 43 corresponds to the duct that is one of the plurality of ducts allowing the cooling air to flow between the cooler (air-conditioner unit 51) and the cooling target (side battery 37) and that extends from the cooler (air-conditioner unit 51) to the cooling target (side battery 37).

Therefore, in the present embodiment (first embodiment) and the third embodiment, the return duct 43 starts with an extending portion 43b extending in the left-right direction, different from the front-rear direction (first direction), from the side battery case 36 provided in or on the traveling structure 3 toward the vehicle body 2 left-right inward thereof. The extending portion 43b is parallel to the extending portion (second extending portion) 42b of the outgoing duct 42 that also extends in the left-right direction.

In the present embodiment (first embodiment) and the third embodiment, the return duct 43 further extends through the upper portion of the vehicle body 2 (above the vehicle-body center frame 21) such that the exit end thereof is connected to the upper end of the air-conditioner case 40. Thus, the air after the cooling is returned from the exit end to the air intake port 51a through the air-conditioner chamber 40a in the air-conditioner case 40. In the upper portion of the vehicle body 2, the return duct 43 includes an extending portion (first extending portion) 43a extending in the front-rear direction in the area ranging from the front end portion (first end portion) of the vehicle body 2 to the front-rear intermediate portion. The extending portion 43a and the extending portion (first extending portion) 42a of the outgoing duct 42 are parallel to each other.

In the second embodiment to be described below and illustrated in FIGS. 15, 16, and so forth, the return duct 43 does not reach the air-conditioner unit 51 but is connected to the center battery case 24. Thus, the air having cooled the side battery 37 and the air having cooled the center battery 50 are merged to be returned to the air intake port 51a of the air-conditioner unit 51.

That is, in the second embodiment, the return duct 43 is connected to the center battery case 24 supported by the vehicle body 2. Therefore, the return duct 43 includes the extending portion 43b extending in the left-right direction but includes no extending portion (first extending portion) 43a that may extend in the front-rear direction through the upper portion of the vehicle body 2.

On the other hand, the second embodiment is the same as the first embodiment in that the outgoing duct 42 extends from the delivery manifold 41b to the cooling-air entrance 36a of the side battery case 36, and includes the extending portion 42a extending in the front-rear direction through the upper portion of the vehicle body 2, and the extending portion 42b extending in the left-right direction from the vehicle body 2 to the traveling structure 3.

That is, in a common structure between the first embodiment and the second embodiment, among the outgoing duct 42 and the return duct 43, at least the outgoing duct 42 is included in the foregoing at least one duct which includes the extending portion (first extending portion) 42a extending in the front-rear direction (first direction), and the extending portion 42b extending in the left-right direction different from the front-rear direction in or on the front-rear intermediate portion of the vehicle body 2. Furthermore, the return duct 43 is included in a duct that includes at least the extending portion 43b extending in the left-right direction different from the front-rear direction in which the extending portion 42a of the outgoing duct 42 extends, such that the extending portion 43b extends parallel to the extending portion (second extending portion) 42b of the outgoing duct 42 that extends in the left-right direction.

Here, the side battery case 36 will be described. As illustrated in FIG. 11, the side battery case 36 provided in or on each traveling structure 3 has the cooling-air entrance 36a at a lower portion of a front end face 36f thereof, and the cooling-air exit 36b at an upper portion of a rear end face 36r thereof. In FIG. 11, "36s" denotes the left-right outer side face of the side battery case 36 that is located between the front end face 36f and the rear end face 36r.

The reason why the cooling-air entrance 36a connected to the outgoing duct 42 is provided at the lower portion of the side battery case 36 while the cooling-air exit 36b connected to the return duct 43 is provided at the upper portion of the side battery case 36 is to cause the air after the cooling to be efficiently discharged from the side battery case 36 so that the air heated by cooling the side battery 37 in the side battery case 36 does not heat the cooling air before the cooling.

Furthermore, one of the cooling-air entrance 36a or the cooling-air exit 36b is located left-right inward while the other is located left-right outward such that the cooling air flows diagonally with respect to the left-right direction in plan view in the side battery case 36 from the cooling-air entrance 36a at the front end to the cooling-air exit 36b at the rear end. Thus, the effect of cooling the side battery 37 is maximized.

The layout of the cooling-air entrance 36a connected to the outgoing duct 42 and the cooling-air exit 36b connected to the return duct 43 in the side battery case 36 is not limited to the layout illustrated in FIG. 11. For example, at least one of the cooling-air entrance 36a or the cooling-air exit 36b may be provided at the left-right outer side face 36s or a left-right inner side face opposite thereto.

In the present embodiment, considering the routing of the ducts and so forth, the cooling-air entrance 36a and the outgoing duct 42 connected thereto are located left-right inward, and the cooling-air exit 36b and the return duct 43 connected thereto are located left-right outward. The side battery case 36 illustrated in FIG. 11 is the left side battery case 36L, because the cooling-air entrance 36a is located rightward while the cooling-air exit 36b is located leftward.

As illustrated in FIGS. 2 and so forth, the front inverter 6F is provided along the front end face 36f of the side battery case 36 and left-right outward of the outgoing duct 42 connected to the cooling-air entrance 36a of the side battery case 36, and the rear inverter 6R is provided along the rear end face 36r of the side battery case 36 and left-right inward of the return duct 43 connected to the cooling-air exit 36b of the side battery case 36.

The side battery 37 as a cooling target includes the left side battery 37L as a left cooling target provided in or on the left traveling structure 3L, and the right side battery 37R as a right cooling target provided in or on the right traveling structure 3R.

Correspondingly, as a structure common among the first embodiment to the third embodiment, the plurality of ducts allowing the cooling air to flow between the air-conditioner unit 51 (cooler) and the left and right side batteries 37L and 37R (cooling targets) include the left outgoing duct 42L extending to the left side battery 37L and the right outgoing duct 42R extending to the right side battery 37R to supply the cooling air delivered from the air-conditioner unit 51 to the left and right side batteries 37L and 37R, and the left return duct 43L extending from the left side battery 37L and the right return duct 43R extending from the right side battery 37R to return the cooling air having cooled the left and right side batteries 37L and 37R to the air-conditioner unit 51.

Among the outgoing ducts 42L and 42R and the return ducts 43L and 43R, at least the left outgoing duct 42L and the right outgoing duct 42R that extend from the air-conditioner unit 51 to the left side battery 37L and the right side battery 37R, respectively, are each included in the at least one duct that includes the extending portion (first extending portion) 42a extending in the front-rear direction (first direction) to range from the front end portion (first end portion) to the front-rear intermediate portion (intermediate portion). Furthermore, the extending portion (second extending portion) 42b of the left outgoing duct 42L that extends in the left-right direction different from the front-rear direction (first direction) and the extending portion (second extending portion) 42b of the right outgoing duct 42R that extends in the left-right direction different from the front-rear direction (first direction) extend away from each other in the left-right direction with respect to the vehicle body 2.

The left return duct 43L and the right return duct 43R each include the extending portion 43b extending in the left-right direction different from the front-rear direction (first direction). The extending portion 43b of the left return duct 43L that extends in the left-right direction different from the front-rear direction (the first direction) and the extending portion 43b of the right return duct 43R that extends in the left-right direction different from the front-rear direction (first direction) extend away from each other in the left-right direction with respect to the vehicle body 2.

Now, specific piping routes of the outgoing ducts 42 and the return ducts 43 according to the first embodiment illustrated in FIGS. 1 to 10 and so forth, and the layout of the plurality of ducts including the left and right outgoing ducts 42L and 42R and the left and right return ducts 43L and 43R, and so forth will be described in detail below.

The outgoing ducts 42 are each piped in such a manner as to pass through the upper portion of the vehicle body 2 (above the vehicle-body side frame 22) from the delivery manifold 41b to the cooling-air entrance 36a of the side battery case 36 of the corresponding traveling structure 3.

That is, the left outgoing duct 42L is piped in such a manner as to pass through an upper left portion of the vehicle body 2 (above the left vehicle-body side frame 22L) from a left portion of the delivery manifold 41b to the cooling-air entrance 36a of the left side battery case 36L in the left traveling structure 3L. On the other hand, the right outgoing duct 42R is piped in such a manner as to pass through an upper right portion of the vehicle body 2 (above the right vehicle-body side frame 22R) from a right portion of the delivery manifold 41b to the cooling-air entrance 36a of the right side battery case 36R in the right traveling structure 3R.

Furthermore, the return ducts 43 are each piped in such a manner as to pass through the upper portion of the vehicle body 2 (above the vehicle-body center frame 21) from the cooling-air exit 36b of the side battery case 36 in the corresponding traveling structure 3 to the upper end of the air-conditioner case 40.

That is, the left return duct 43L is piped in such a manner as to pass through an upper left portion of the vehicle body 2 (above a left portion of the vehicle-body center frame 21) from the cooling-air exit 36b of the left side battery case 36L in the left traveling structure 3L to a left portion of the upper end of the air-conditioner case 40. On the other hand, the right return duct 43R is piped in such a manner as to pass through an upper right portion of the vehicle body 2 (above a right portion of the vehicle-body center frame 21) from the cooling-air exit 36b of the right side battery case 36R in the right traveling structure 3R to a right portion of the upper end of the air-conditioner case 40.

As can be seen from the plan view in FIG. 9 and so forth, the ducts 42L, 42R, 43L, and 43R include the extending portions 42a and 43a extending linearly in the front-rear direction.

The extending portions 42a and 43a are piped parallel to each other at the upper portion of the vehicle body 2 to range in the front-rear direction from the front portion of the vehicle body 2 to a position corresponding to the front-rear intermediate portion of the vehicle body 2 (a position in the front-rear direction that corresponds to the side battery cases 36 (more specifically, the front ends of the side battery cases 36) in or on the left and right traveling structures 3).

Regarding the arrangement of the extending portions 42a and 43a of the ducts 42L, 42R, 43L, and 43R in the left-right direction, the extending portion 43a of the left return duct 43L and the extending portion 43a of the right return duct 43R are juxtaposed parallel to each other on the left and right above the vehicle-body center frame 21, the extending portion 42a of the left outgoing duct 42L is located above the left vehicle-body side frame 22L and leftward of the extending portion 43a of the left return duct 43L, and the extending portion 42a of the right outgoing duct 42R is located above the right vehicle-body side frame 22R and rightward of the right return duct 43R.

The left outgoing duct 42L extends to the upper left from the front end thereof connected to the delivery manifold 41b provided on the vehicle-body center frame 21, is bent rearward above the left vehicle-body side frame 22L, and extends therefrom as the extending portion 42a in the front-rear direction above the left vehicle-body side frame 22L.

Furthermore, the left outgoing duct 42L is bent at a position in the front-rear direction that is slightly forward of the front end of the left side battery case 36L in or on the left traveling structure 3L and substantially perpendicularly leftward in plan view with respect to the extending portion 42a extending in the front-rear direction above the left vehicle-body side frame 22L, and extends as the extending portion 42b in the left-right direction. The left outgoing duct 42L thus reaches the left traveling frame 30L, is bent downward at a position immediately forward of the left side battery case 36L, and is connected to the cooling-air entrance 36a at the front end of the left side battery case 36L.

The right outgoing duct 42R extends to the upper right from the front end thereof connected to the delivery manifold 41b provided on the vehicle-body center frame 21, is bent rearward above the right vehicle-body side frame 22R, and extends therefrom as the extending portion 42a in the front-rear direction above the right vehicle-body side frame 22R.

Furthermore, the right outgoing duct 42R is bent at a position in the front-rear direction that is slightly forward of the front end of the right side battery case 36R in or on the right traveling structure 3R and substantially perpendicularly rightward in plan view with respect to the extending portion 42a extending in the front-rear direction above the right vehicle-body side frame 22R, and extends as the extending portion 42b in the left-right direction. The right outgoing duct 42R thus reaches the right traveling frame 30R, is bent downward at a position immediately forward of the right side battery case 36R, and is connected to the cooling-air entrance 36a at the front end of the right side battery case 36R.

The left return duct 43L is bent at a position in the front-rear direction that is slightly rearward of the front end of the left side battery case 36L in or on the left traveling structure 3L and substantially perpendicularly leftward in plan view with respect to the extending portion 43a extending in the front-rear direction above the vehicle-body center frame 21, and extends as the extending portion 43b in the left-right direction. The left return duct 43L then extends over the left vehicle-body side frame 22L, reaches the left traveling frame 30L, is further bent rearward above the left side battery case 36L, is bent again downward at a position rearward of the left side battery case 36L, and is connected to the cooling-air exit 36b at the rear end of the left side battery case 36L.

The right return duct 43R is bent at a position in the front-rear direction that is slightly rearward of the front end of the right side battery case 36R in or on the right traveling structure 3R and substantially perpendicularly rightward in plan view with respect to the extending portion 43a extending in the front-rear direction above the vehicle-body center frame 21, and extends as the extending portion 43b in the left-right direction. The right return duct 43R then extends over the right vehicle-body side frame 22R, reaches the right traveling frame 30R, is further bent rearward above the right side battery case 36R, is bent again downward at a position rearward of the right side battery case 36R, and is connected to the cooling-air exit 36b at the rear end of the right side battery case 36R.

The working vehicle 1 illustrated in FIGS. 1 to 10 and so forth has a structure in which the "vehicle shape" is changeable, and includes at least one extendable/retractable duct that is extendable and retractable corresponding to such a "change in the vehicle shape".

The above ducts 42 and 43 as cooling-air passages are each included in the at least one extendable/retractable duct. Other options are also conceivable for the at least one extendable/retractable duct. For example, in a case where the working vehicle 1 is provided with an engine as a prime mover, the intake pipe and/or the exhaust pipe of the engine, and/or the like may be provided as the at least one extendable/retractable duct. What is made to flow through the ducts need only be a cooling medium and may be not only air as the cooling air described above but also refrigerant gas or the like.

Herein, the "change in the vehicle shape" may refer to a relative movement of "a first element and a second element linked to each other while being movable relative to each other" included in the working vehicle 1, but is not limited thereto. For example, situations that can be regarded as a "change in the vehicle shape" include a situation where any of the elements of the working vehicle (such as a cover that covers a frame, for example) is made of a material having plasticity, stretchability, elasticity, or the like and is deformable by itself because of such a physical property, a situation where any of the elements of the working vehicle (such as a roof member that covers a boarding seat, if any, of the vehicle, for example) is attachable and detachable, and the vehicle shape changes with the attaching or detaching of the element, and so forth.

In the above structure, "the first element and the second element linked to each other while being movable relative to each other" correspond to the center battery case (front body case) 24 and the vehicle-body frame structure 20 (vehicle-body center frame 21 and so forth) that are linked to each other while being movable relative to each other in the front-rear direction, the vehicle-body center frame 21 and each vehicle-body side frame 22 (left vehicle-body side frame 22L or right vehicle-body side frame 22R) that are linked to each other while being movable relative to each other in the left-right direction, and the vehicle body 2 (vehicle-body side frame 22) and each traveling structure 3 (traveling frame 30) that are linked to each other while being movable relative to each other in the top-bottom direction.

However, "the first element and the second element linked to each other while being movable relative to each other" are not limited to the above. For example, in a case where a working device such as a rotary cultivator is coupled to the vehicle body 2 via a three-point-linkage coupler 60, the extending and retracting movements of the lift cylinders 61 included in the coupler 60 cause the vehicle body 2 and the working device to move relative to each other in the top-bottom direction. The vehicle body 2 and the working device in such a case can also be regarded as the "first element" and the "second element". Furthermore, the vehicle shape of the working vehicle 1 also changes depending on whether the coupler 60 and/or a working device is attached thereto. Hence, the "first element" and the "second element" may be any elements of the working vehicle 1 as long as the elements are linked to each other while being movable relative to each other.

In the case where the "change in the vehicle shape" is a "relative movement of the first element and the second element linked to each other while being movable relative to each other", the "at least one extendable/retractable duct extendable and retractable corresponding to the change in the vehicle shape" may be "at least one duct that extends astride the first element and the second element linked to each other while being movable relative to each other and includes an extendable/retractable portion extendable and retractable corresponding to the relative movement of the first element and the second element".

Furthermore, one of "the first element and the second element linked to each other while being movable relative to each other" may define a first portion of the vehicle body 2 and the other may define a second portion of the vehicle body 2, and a duct may be provided with the extendable/retractable portion at a portion thereof between the first portion of the vehicle body 2 and the second portion of the vehicle body 2. Alternatively, one of the first element or the second element may be the vehicle body 2, and the other may be the traveling structure 3.

In the above structure, the "portion thereof (of the duct) between the first portion of the vehicle body 2 and the second portion of the vehicle body 2" may include a portion of the duct between the delivery manifold 41b and the air-conditioner case 40 (that are movable integrally with the center battery case 24) in or on the vehicle body 2 and the vehicle-body frame structure 20 (vehicle-body center frame 21 and so forth) of the vehicle body 2, or a portion of the duct between the vehicle-body center frame 21 of the vehicle body 2 and the vehicle-body side frame 22 (the left vehicle-body side frame 22L or the right vehicle-body side frame 22R) of the vehicle body 2, but is not limited thereto. For example, the vehicle-body center frame 21 may be divided into a front portion and a rear portion such that the front portion and the rear portion are linked to each other while being movable relative to each other in the front-rear direction, and the duct may be provided with the extendable/retractable portion at a corresponding portion thereof that extends astride the front portion and the rear portion.

The duct need only include at least one extendable/retractable portion at a portion thereof between the first portion of the vehicle body 2 and the second portion of the vehicle body 2, or at a portion thereof between the vehicle body 2 and the traveling structure 3. A plurality of extendable/retractable portions may be provided in the foregoing portion. Such a plurality of extendable/retractable portions are not limited to those arranged in series in the foregoing portion. For example, the duct may be shaped with a U-turn such as to include a plurality of portions between the first portion of the vehicle body 2 and the second portion of the vehicle body 2 or between the vehicle body 2 and the traveling structure 3. In such a case, the extendable/retractable portion may be provided at each of the plurality of portions of the duct.

The outgoing duct 42 and the return duct 43 described above and a return duct 44 according to the third embodiment to be described below each correspond to the duct including the extendable/retractable portion described above. Now, the structure of the extendable/retractable portion of each duct will be described in detail.

Front end portions of the ducts 42 and 43 piped as illustrated in FIGS. 2 and so forth project forward with respect to the front end of the upper portion of the vehicle-body frame structure 20, are bent downward with respect to the extending portions 42a and 43a, and are connected to the delivery manifold 41b and the air-conditioner case 40 (or the intake manifold) of the air-conditioner unit 51.

The air-conditioner case 40 adjoins the center battery case 24. The delivery manifold 41b is connected to the air-conditioner case 40. When the center battery case 24 moves in the front-rear direction relative to the vehicle-body frame structure 20, the air-conditioner case 40 and the delivery manifold 41b also move integrally with the center battery case 24.

The ducts 42 and 43 include respective extendable/retractable portions 42c and 43c in the respective extending portions 42a and 43a extending in the front-rear direction. The extendable/retractable portions 42c and 43c are extendable and retractable in the front-rear direction. As illustrated in FIG. 8, when the air-conditioner case 40, accommodating the air-conditioner unit 51, and the delivery manifold 41b move together with the center battery case 24 in the front-rear direction relative to the vehicle-body frame structure 20 in response to the actuation of the battery-moving actuator 81 or the like, the extendable/retractable portions 42c and 43c extend or retract corresponding to their movement.

That is, the ducts 42 and 43 are each included in the at least one duct that extends astride the delivery manifold 41b and the air-conditioner case 40 (first element) and the vehicle-body frame structure 20 (second element) linked to each other while being movable relative to each other in the front-rear direction and includes the extendable/retractable portion 42c or 43c extendable and retractable corresponding to their relative movement in the front-rear direction. In this regard, the outgoing duct 42 is provided with the extendable/retractable portion 42c extendable and retractable in the front-rear direction at a portion thereof extending in the front-rear direction between the delivery manifold 41b (the first portion of the vehicle body 2) and the vehicle-body frame structure 20 (the second portion of the vehicle body 2). The return duct 43 is provided with the extendable/retractable portion 43c extendable and retractable in the front-rear direction at a portion thereof extending in the front-rear direction between the air-conditioner case 40 (the first portion of the vehicle body 2) and the vehicle-body frame structure 20 (the second portion of the vehicle body 2).

In the outgoing duct 42, a front end portion thereof is located forward of the extending portion 42a, which extends in the front-rear direction, and is connected to the delivery manifold 41b. The front end portion of the outgoing duct 42 extends outward to the upper left or right in such a manner as to be routed from the vehicle-body center frame 21 to the vehicle-body side frame 22. The delivery manifold 41b is included in a portion that is movable together with the vehicle-body center frame 21 relative to the vehicle-body side frame 22 unless the delivery manifold 41b moves together with the center battery case 24 relative to the vehicle-body frame structure 20. Accordingly, the front end portion of the outgoing duct 42 that is routed astride the delivery manifold 41b and the vehicle-body side frame 22 is regarded as being routed astride the vehicle-body center frame 21 and the vehicle-body side frame 22.

On the other hand, in the return duct 43, the extending portion 43b bent from the rear end of the extending portion 43a, which extends in the front-rear direction, and extending in the left-right direction is routed from the vehicle-body center frame 21 to the vehicle-body side frame 22.

Accordingly, the ducts 42 and 43 are provided with respective extendable/retractable portions 42d and 43d that are extendable and retractable in the left-right direction at portions thereof that extend in the left-right direction and are each routed from the vehicle-body center frame 21 to the vehicle-body side frame 22. As can be seen from FIG. 9, when the vehicle-body side frame 22 moves in the left-right direction relative to the vehicle-body center frame 21 in response to the actuation of the width-changing cylinder 8 or the like, the extendable/retractable portions 42d and 43d extend or retract corresponding to the movement.

That is, the ducts 42 and 43 are each included in the at least one duct that extends astride the vehicle-body center frame 21 (first element) and the vehicle-body side frame 22 (second element) linked to each other while being movable relative to each other in the left-right direction and that is provided with the extendable/retractable portion 42d or 43d extendable and retractable corresponding to their relative movement in the left-right direction at a portion thereof extending in the left-right direction between the vehicle-body center frame 21 (the first portion of the vehicle body 2) and the vehicle-body side frame 22 (the second portion of the vehicle body 2).

The ducts 42 and 43 further extend left-right outward from the extendable/retractable portions 42d and 43d above the vehicle-body side frame 22, are routed to the traveling structure 3 left-right outward of the vehicle body 2, and are connected to the side battery case 36. The ducts 42 and 43 are provided with extendable/retractable portions 42e and 43e extendable and retractable in the top-bottom direction at portions thereof that are routed above the traveling frame 30 and are then bent downward to the cooling-air entrance 36a and the cooling-air exit 36b. As can be seen from FIG. 8, when the vehicle body 2 moves in the top-bottom direction relative to the traveling structure 3 in response to the actuation of the vehicle-body-raising/lowering cylinder 9 or the like, the extendable/retractable portions 42e and 43e extend or retract corresponding to the movement.

That is, the ducts 42 and 43 are each included in the at least one duct that extends astride the vehicle body 2 (first element) and each of the traveling structures 3 (second element), which are located leftward and rightward of the vehicle body 2, linked to each other while being movable relative to each other in the top-bottom direction, and is provided at a portion thereof extending in the top-bottom direction between the vehicle body 2 and each of the traveling structures 3 with the extendable/retractable portions 42e or 43e extendable and retractable corresponding to their relative movement in the top-bottom direction.

The working vehicle 1 includes the traveling structure 3 provided alongside the vehicle body 2. The vehicle body 2 is movable relative to the traveling structure 3. The ducts 42 and 43 are each provided with a plurality of extendable/retractable portions at a portion thereof between the first portion of the vehicle body 2 and the second portion of the vehicle body 2 and at a portion thereof between the vehicle body 2 and the traveling structure 3.

That is, the outgoing duct 42 is included in at least one duct that is provided with a plurality of extendable/retractable portions 42c and 42e at a portion thereof between the delivery manifold 41b (first portion) and the vehicle-body frame structure 20 (second portion) of the vehicle body 2 and at a portion thereof between the vehicle body 2 and the traveling structure 3. The outgoing duct 42 is also included in at least one duct that is provided with a plurality of extendable/retractable portions 42d and 42e at a portion thereof between the vehicle-body center frame 21 (first portion) and the vehicle-body side frame 22 (second portion) and at a portion thereof between the vehicle body 2 and the traveling structure 3.

Furthermore, the return duct 43 is included in at least one duct that is provided with a plurality of extendable/retractable portions 43c and 43e at a portion thereof extending in the front-rear direction and between the air-conditioner case 40 (first portion) in or on the vehicle body 2 and the vehicle-body frame structure 20 (second portion) of the vehicle body 2 and at a portion thereof between the vehicle body 2 and the traveling structure 3. The return duct 43 is also included in at least one duct that is provided with a plurality of extendable/retractable portions 43d and 43e at a portion thereof between the vehicle-body center frame 21 (first portion) and the vehicle-body side frame 22 (second portion) and at a portion thereof between the vehicle body 2 and the traveling structure 3.

As described above, the ducts 42 and 43 may each be provided with a plurality of extendable/retractable portions at a portion thereof located between the first portion of the vehicle body 2 and the second portion of the vehicle body 2. Alternatively, the ducts 42 and 43 may each be provided with an extendable/retractable portion at each of a plurality of portions thereof located in the same manner. The same applies to one or more portions of the duct located between the vehicle body 2 and the traveling structure 3.

Furthermore, in a case where the working vehicle 1 includes a cooler provided in or on the first portion or the second portion, and includes a cooling target, which is provided in or on the traveling structure 3 and is to be cooled by a cooling medium supplied from the cooler, the at least one duct that is provided with the plurality of extendable/retractable portions at the portion thereof between the first portion of the vehicle body 2 and the second portion of the vehicle body 2 and at the portion thereof between the vehicle body 2 and the traveling structure 3 may extend between the cooler and the cooling target as a passage for the cooling medium.

In the present embodiment, as described above, the ducts 42 and 43 each including the plurality of extendable/retractable portions extend astride the air-conditioner unit 51, which is provided in the air-conditioner case 40 corresponding to the first portion or second portion of the vehicle body 2, and the side battery 37, which is provided in or on the traveling structure 3.

Furthermore, the vehicle body 2 includes a third portion that is movable relative to the second portion. Each of the ducts 42 and 43 is provided with the plurality of extendable/retractable portions at a portion thereof between the first portion of the vehicle body 2 and the second portion of the vehicle body 2 and at a portion thereof between the second portion of the vehicle body 2 and the third portion of the vehicle body 2.

The outgoing duct 42 is included in at least one duct that is provided with the plurality of extendable/retractable portions 42c and 42d at a portion thereof extending in the front-rear direction above the vehicle-body side frame 22 and at a portion thereof extending in the left-right direction between the delivery manifold 41b and the vehicle-body side frame 22.

On the other hand, the return duct 43 is included in at least one duct that is provided with the plurality of extendable/retractable portions 43c and 43d at a portion thereof between the air-conditioner case 40 (first portion) in or on the vehicle body 2 and the vehicle-body center frame 21 (second portion), which is a portion of the vehicle-body frame structure 20, and at a portion thereof between the vehicle-body center frame 21 (second portion) and the vehicle-body side frame 22 (third portion).

As described above, the ducts 42 and 43 may each be provided with a plurality of extendable/retractable portions at a portion thereof located between the first portion of the vehicle body 2 and the second portion of the vehicle body 2. Alternatively, the ducts 42 and 43 may each be provided with an extendable/retractable portion at a plurality of portions thereof located in the same manner. The same applies to one or more portions of the duct located between the second portion and the third portion.

In the present embodiment, the vehicle body 2 includes three portions, the first to third portions, that are linked to each other while being movable relative to each other. Such portions corresponding to the first to third portions need only be at least three in number. The above structure is also applicable to a case where the vehicle body 2 includes four or more such portions. Accordingly, the number of extendable/retractable portions provided in such portions of the vehicle body 2 is also not limited to two, such as the case of the ducts 42 and 43 each including the extendable/retractable portions 42c and 42d or the extendable/retractable portions 43c and 43d, and need only correspond to the number of relevant portions.

In a case where the working vehicle 1 includes a traveling structure 3 provided alongside the vehicle body 2, an air-conditioner unit 51 (cooler) provided in an air-conditioner case 40 (the first portion of the vehicle body 2), and a side battery 37 (cooling target) provided in or on the traveling structure 3 and to be cooled by a cooling medium supplied from the air-conditioner unit 51, the return duct 43 defining a passage for the cooling medium extends in the front-rear direction from the air-conditioner unit 51 to the vehicle-body center frame 21 (the second portion of the vehicle body 2), is bent at the vehicle-body center frame 21 to extend in the left-right direction from the vehicle-body center frame 21 to the vehicle-body side frame 22 (the third portion of the vehicle body 2), and extends in the top-bottom direction from the vehicle-body side frame 22 to the side battery 37.

As can be seen from FIGS. 2 and so forth, the first extending portion 43a of the return duct 43 above the vehicle-body center frame 21 is piped immediately left-right inward of the vehicle-body side frame 22. Therefore, the outgoing duct 42 extending from the delivery manifold 41b immediately turns outward to the upper left or right of the vehicle-body side frame 22. The portion extending left-right outward includes the extendable/retractable portion 42d extendable in the left-right direction. The first extending portion 42a extending in the front-rear direction is piped immediately left-right outward of the first extending portion 43a of the return duct 43. The outgoing duct 42 includes the extendable/retractable portion 42c at the first extending portion 42a. Therefore, the extendable/retractable portion 42c in the front-rear direction is located rearward of the extendable/retractable portion 42d in the left-right direction. The outgoing duct 42 is bent at a position rearward of the extendable/retractable portion 42c in the front-rear direction and extends as the second extending portion 42b in the left-right direction to the traveling structure 3. In the portion extending to the traveling structure 3, the outgoing duct 42 includes the extendable/retractable portion 42e for the top-bottom direction.

However, if the first extending portion 43a of the return duct 43 is shifted more left-right inward (toward the left-right center of the vehicle-body center frame 21) than the position illustrated in FIG. 2, the first extending portion 42a of the outgoing duct 42 can also be piped left-right inward of the vehicle-body side frame 22 and above the vehicle-body center frame 21. In such a case, as with the piping route of the return duct 43 described above, the outgoing duct 42 defining a passage for the cooling medium can be piped in a route in which the outgoing duct 42 extends in the front-rear direction from the air-conditioner unit 51 to the vehicle-body center frame 21 (the second portion of the vehicle body 2), is bent at the vehicle-body center frame 21 to extend in the left-right direction from the vehicle-body center frame 21 to the vehicle-body side frame 22 (the third portion of the vehicle body 2), and extends in the top-bottom direction from the vehicle-body side frame 22 to the side battery 37.

Thus, the ducts 42 and 43 include the extendable/retractable portions 42c to 42e and 43c to 43e that are extendable and retractable. Therefore, a state where the air-conditioner unit 51 and the side battery case 36 are piped to each other without being separated from each other can be maintained regardless of the deformation of the vehicle body 2 and/or the relative movement of the vehicle body 2 and the traveling structure 3.

To summarize, in the working vehicle 1, a single duct 42 or 43 includes a plurality of portions routed astride separate elements (for example, the vehicle body 2 and the traveling structure 3, the vehicle-body center frame 21 and the vehicle-body side frame 22, and so forth) that are linked to each other while being movable relative to each other, and the plurality of portions include extendable/retractable portions. In the present embodiment, each of the ducts 42 and 43 includes three portions that are each routed astride separate elements linked to each other while being movable relative to each other, and correspondingly includes three extendable/retractable portions 42c to 42e or 43c to 43e. However, this does not imply any limitation. The number of extendable/retractable portions in each duct may exceed three or may be less than three.

The direction of extension and retraction of each extendable/retractable portion corresponds to the direction of relative movement of the separate elements astride which the duct is routed as described above. In the present embodiment, the direction of relative movement of the elements varies among the above three portions that are routed astride. In each of the ducts 42 and 43, the extendable/retractable portion 42c or 43c is extendable and retractable in the front-rear direction, the extendable/retractable portion 42d or 43d is extendable and retractable in the left-right direction, and the extendable/retractable portion 42e or 43e is extendable and retractable in the top-bottom direction. Thus, a single duct is extendable and retractable in various directions. However, the direction of extension and retraction of the plurality of extendable/retractable portions in a single duct is not limited to the above. For example, the plurality of extendable/retractable portions in a single duct may be extendable and retractable in the same direction.

That is, in the case where each duct includes a plurality of extendable/retractable portions, the number of extendable/retractable portions and the direction of extension and retraction of the extendable/retractable portions are determined corresponding to how the structure to change the vehicle shape of the working vehicle 1 described above is configured, and/or how each duct is routed for the cooler (air-conditioner unit 51, in the present embodiment) and the cooling target (side battery 37, in the present embodiment), and are not limited to the ones described in the above embodiment.

In place of the above extendable/retractable structure, it is conceivable that, as a preparation for the deformation of the vehicle body 2 and the relative movement of the vehicle body 2 and the traveling structure 3, the duct 42 or 43 may be made of a flexible material with slack initially given therein such that, for example, as the vehicle body 2 is raised, the slack portion deforms to be stretched linearly. In such a case, however, the duct 42 or 43 needs to have long slack that protrudes from the vehicle body 2 when the vehicle body 2 is not raised, making it difficult to realize compact piping.

In this regard, the extendable/retractable portion 42e or 43e of the duct 42 or 43 according to the present embodiment does not have slack but is retracted when the vehicle body 2 is not raised. Therefore, the duct 42 or 43 is kept positioned along the vehicle-body side frame 22 and the traveling frame 30. Thus, compact piping can be realized.

The extendable/retractable portions 42c to 42e and 43c to 43e of the ducts 42 and 43 may be, but are not limited to, bellows hoses, for example. The extendable/retractable portions 42c to 42e and 43c to 43e may each be any member that is extendable and retractable corresponding to, as described above, the relative movement of the center battery case 24 and the vehicle-body frame structure 20, the relative movement of the vehicle-body center frame 21 and the vehicle-body side frame 22, and/or the relative movement of the vehicle body 2 and the traveling structure 3.

Furthermore, various options are also conceivable for what kind of area and/or to what extent the extendable/retractable portion is to be provided within the portion of each duct where the extendable/retractable portion should be provided. For example, when considering that the extendable/retractable portion 43d that is extendable and retractable in the left-right direction corresponding to the relative movement of the vehicle-body center frame 21 and the vehicle-body side frame 22 is provided in the extending portion 43b of the return duct 43 that extends in the left-right direction, the extendable/retractable portion 43d may be divided into two portions that are left-right outward and left-right inward portions, with a non-extendable/retractable portion of the return duct 43 interposed between the two portions that define extendable/retractable portions. Thus, the axial length of each of the portions defining the extendable/retractable portions 43d is reduced, making it possible to apply a short bellows hose to each of the portions.

Now, a second embodiment concerning the air-cooled system of the working vehicle 1 will be described with reference to FIGS. 15, 16 and so forth. Description of configurations that are the same as in the first embodiment is omitted. Members and portions denoted by the same reference signs as in the first embodiment have the same configurations or functions as such members and portions according to the first embodiment.

The air-cooled system illustrated in FIGS. 15 and 16 is applied to a working vehicle 1 that includes a cooler, a first cooling target and a second cooling target to be cooled by cooling air delivered from the cooler, a first cooling housing accommodating the first cooling target, and a second cooling housing accommodating the second cooling target, and is one embodiment of an air-cooled system having a structure in which the first cooling housing is provided with an inlet to take in air discharged from the second cooling housing after cooling the second cooling target.

That is, the present embodiment is an embodiment in which the cooler corresponds to the air-conditioner unit 51, the first cooling target corresponds to the center battery 50, the first cooling housing corresponds to the center battery case 24, the second cooling target corresponds to the side battery 37, the second cooling housing corresponds to the side battery case 36, and the center battery case 24 is provided with an inlet 24h to take in air discharged from the side battery case 36.

However, as described for the above duct structure, various options are conceivable for the cooler and the cooling target. Furthermore, which of the plurality of cooling targets in the working vehicle 1 define the first cooling target and the second cooling target is not limited. For example, if the side battery 37 defines the first cooling target while the center battery 50 defines the second cooling target, the side battery case 36 accommodating the side battery 37 may be provided with an inlet to take in air discharged from the center battery case 24.

Alternatively, one of the first cooling target or the second cooling target may define the left side battery 37L, and the other may define the right side battery 37R, while one of the first cooling housing or the second cooling housing may define the left side battery case 36L and the other may define the right side battery case 36R.

Alternatively, the first cooling target and/or the second cooling target may be any members other than batteries.

In the present embodiment, the center battery case 24 (first cooling housing) is provided inside thereof with the cooling-air passage 24c to allow the cooling air from the air-conditioner unit 51 (cooler) to be blown onto the center battery 50 (first cooling target), and the exhaust-air passage 24d to allow the air having cooled the center battery 50 to be discharged to the air-conditioner unit 51. The air flowing from the side battery case 36 (second cooling housing) and introduced into the center battery case 24 through the inlet 24h is merged with the air in the exhaust-air passage 24d.

The center battery case 24 (first cooling housing) is further provided inside thereof with a first air guide to guide the air from the cooling-air passage 24c to the exhaust-air passage 24d, and a second air guide to guide the air from the inlet 24h to the exhaust-air passage 24d. In the present embodiment, the first air guide corresponds to the fan 45, and the second air guide corresponds to a fan 46. However, each air guide is not limited to such a fan, and may be, for example, a guide member such as a rib integrally molded with a simple plate material and/or a housing.

The center battery case 24 (first cooling housing) is further provided inside thereof with a partition 24e above the first cooling target. In the center battery case 24, the space below the partition 24e is the cooling-air passage 24c, and the space above the partition 24e is the exhaust-air passage 24d.

The center battery case 24 (first cooling housing) is provided inside thereof with the communicating passage 24g extending in the top-bottom direction along an end portion of the partition 24e to allow the exit of the cooling-air passage 24c and the entrance of the exhaust-air passage 24d to communicate with each other. The cooling-air passage 24c is provided at the exit with the fan 45 (first air guide) to guide the air from the cooling-air passage 24c to a lower portion of the communicating passage 24g. The communicating passage 24g is provided in an upper portion thereof with the inlet 24h and the fan 46 (second air guide) to guide the air introduced through the inlet 24h to the entrance of the exhaust-air passage 24d.

In the air-cooled system according to the second embodiment, the return duct 43 (left return duct 43L and right return duct 43R) for returning the cooling air having cooled the side battery 37 to the air-conditioner unit 51 is configured to return the cooling air into the center battery case 24 instead of directly returning the cooling air to (air intake port 51a of) the air-conditioner unit 51. Thus, the return duct 43 is made shorter than in the first embodiment.

That is, as illustrated in FIG. 15, the inlet 24h is provided at an upper portion of the rear end portion of the center battery case 24, and the exit ends of the left return duct 43L and the right return duct 43R are connected to the inlet 24h. The inlet 24h may be a pair of inlets 24h such that the exit end of the left return duct 43L and the exit end of the right return duct 43R are connected to the respective inlets 24h. Alternatively, the inlet 24h may be a single inlet 24h, and the left return duct 43L and the right return duct 43R may be merged before being connected to the inlet 24h.

The inlet 24h faces the upper portion of the communicating passage 24g in the center battery case 24, that is, an entrance portion of the exhaust-air passage 24d, and the flow of the air from the inlet 24h to the exhaust-air passage 24d is linear and horizontal so that the air flows smoothly from the inlet 24h to the exhaust-air passage 24d.

Thus, the cooling air (air) having cooled the left and right side batteries 37L and 37R leaves the left and right side battery cases 36L and 36R, flows through the left and right return ducts 43L and 43R, and is introduced into the center battery case 24 through the inlet 24h. At the inlet 24h, the cooling air merges with the cooling air (air) having cooled the center battery 50, flowing from the cooling-air passage 24c into the communicating passage 24g, and flowing upward. The merged cooling air flows through the exhaust-air passage 24d, is discharged from the cooling-air exit 24b, and is returned to the air intake port 51a of the air-conditioner unit 51.

In the center battery case 24, the exhaust-air passage 24d may be divided (separated) into a passage for the air from the inlet 24h and a passage for the air from the cooling-air passage 24c such that the flows of air having passed through the respective passages are merged after exiting the cooling-air exit 24b to be taken into the air intake port 51a.

Regarding the division of the exhaust-air passage 24d, for example, a partition may be provided above and parallel to the partition 24e to divide the exhaust-air passage 24d into two passages, upper and lower ones, with the rear end of the partition connected to the rear end wall of the center battery case 24, and the inlet 24h may be provided at the rear end wall of the center battery case 24 and above the partition.

With the partition thus provided above the partition 24e, the air having cooled the side battery 37 and flowing from the inlet 24h and the air having cooled the center battery 50 and flowing from the cooling-air passage 24c remain completely separated from each other. In such a state, the air having cooled the side battery 37 flows through the passage above the partition in the exhaust-air passage 24d, and the air having cooled the center battery 50 flows through the passage below the partition in the exhaust-air passage 24d. Thus, the air is discharged from the cooling-air exit 24b into the air-conditioner chamber 40a.

Alternatively, the exhaust-air passage 24d may be divided into left and right passages such that one of the passages communicates with the inlet 24h to define a passage for the air having cooled the side battery 37 while the other passage communicates with the cooling-air passage 24c to define a passage for the air having cooled the center battery 50.

In the second embodiment, the exit ends of the left return duct 43L and the right return duct 43R are connected to the rear end portion of the center battery case 24. Therefore, as can be seen from FIG. 16, the left return duct 43L and the right return duct 43R include no extending portions 43a, which are routed in the front-rear direction above the vehicle-body center frame 21 in the first embodiment.

That is, in the first embodiment, the extending portions 42a and 43a of the four ducts 42L, 42R, 43L, and 43R are piped parallel to one another above the vehicle-body frame structure 20, in the second embodiment, only the extending portions 42a of the two ducts 42L and 42R are piped parallel to each other above the vehicle-body frame structure 20 (left and right vehicle-body side frames 22L and 22R).

In the second embodiment illustrated in FIGS. 15 and 16, the return duct 43 is not included in the at least one duct that extends from the air-conditioner unit 51 (cooler) to the side battery 37 (cooling target) and includes the extending portion (first extending portion) 43a extending in the front-rear direction (the first direction) such that the extending portion (first extending portion) 42a of the outgoing duct 42 and the extending portion (first extending portion) 43a of the return duct 43 are parallel to each other. The vehicle body 2 is provided therein or thereon with the center battery 50 (second cooling target) to be cooled by the cooling air from the air-conditioner unit 51, separately from the side battery 37 (cooling target). The center battery case 24 defines a housing accommodating the center battery 50 (second cooling target) and is provided inside thereof with the exhaust-air passage 24d to allow the cooling air having cooled the center battery 50 to be discharged to the air-conditioner unit 51. The return duct 43 is connected to the center battery case 24 and communicates with the exhaust-air passage 24d in the center battery case 24.

Corresponding to such a reduction of ducts, a space for providing equipment other than ducts is secured above the vehicle-body frame structure 20. For example, in the first embodiment, the surrounding detector 10 needs to be attached with the aid of the stay 10d that spans the extending portions 43a of the return ducts 43L and 43R. In the second embodiment, a wide area that is covered by no ducts is secured on the upper end face of the support member 23 provided immediately below the vehicle-body center frame 21, and between the extending portions 42a of the left and right outgoing ducts 42L and 42R piped above the left and right vehicle-body side frames 22L and 22R. Therefore, the surrounding detector 10 can be directly attached to the upper end face of the support member 23 with no stay that spans the ducts.

Furthermore, in the present embodiment, the center battery case 24 is provided inside thereof with not only the fan 45, which is provided in the first embodiment, but also the fan 46 in an upper portion of the communicating passage 24g at such a position as to face the inlet 24h. The position of the fan 46 corresponds to a position through which the above-described linear and horizontal flow of the air from the inlet 24h to the exhaust-air passage 24d passes. That is, the fan 46 is located in such a manner as to promote the linear and horizontal flow of the air from the inlet 24h to the exhaust-air passage 24d.

The fan 46 takes in the air flowing into the center battery case 24 through the inlet 24h and discharges the air to the upper portion of the communicating passage 24g and a rear end portion of the exhaust-air passage 24d to generate a forward airflow from the inlet 24h to the exhaust-air passage 24d. Thus, the cooling air from the inlet 24h is merged with the flow of the cooling air from the cooling-air passage 24c and is guided to the cooling-air exit 24b.

In the first embodiment, since the exit end of the return duct 43 is connected to the air-conditioner case 40, the presence of the air-conditioner case 40 accommodating the air-conditioner unit 51 is preferable. However, in the second embodiment, the exit end of the return duct 43 is connected to the center battery case 24. Therefore, the air-conditioner case 40 is not essential, which offers variations for the arrangement of the center battery case 24 and the air-conditioner unit 51.

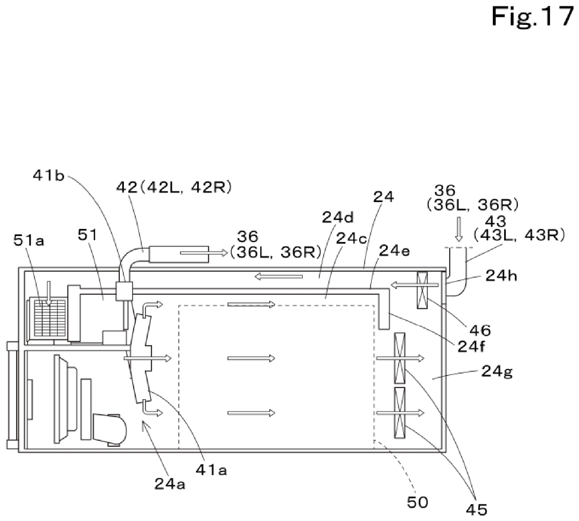

For example, as illustrated in FIG. 17, the air-conditioner case 40 that is separate from the center battery case 24 may be omitted, and the air-conditioner unit 51 may be placed in the center battery case 24. In such a case, there is no cooling-air exit 24b for allowing the air having passed through the exhaust-air passage 24d to be discharged from the center battery case 24 to the outside, and the air having passed through the exhaust-air passage 24d is taken into the air intake port 51a of the air-conditioner unit 51 within the center battery case 24.

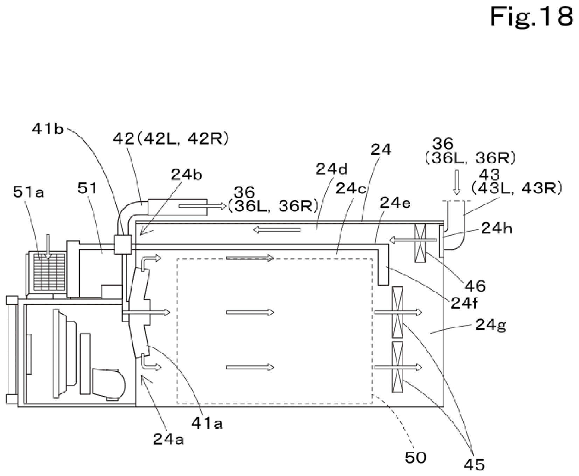

Furthermore, as illustrated in FIG. 18, the air-conditioner case 40 may be omitted with the air-conditioner unit 51 remaining outside the center battery case 24, and the air intake port 51a of the air-conditioner unit 51 may face the outside air. In such a case, the air having passed through the exhaust-air passage 24d is discharged from the cooling-air exit 24b of the center battery case 24, is mixed with the outside air, and is taken into the air intake port 51a of the air-conditioner unit 51.

The center battery cases 24 described above and illustrated in FIGS. 10, 15, 17, and 18 are each provided inside thereof with the exhaust-air passage 24d for discharging the cooling air having cooled the center battery 50, separately from the cooling-air passage 24c for blowing the cooling air onto the center battery 50 as a cooling target.

Such a center battery case 24 may be replaced by, for example, a center battery case 24 provided with no (partition 24e defining) exhaust-air passage 24d, as illustrated in FIG. 19.

Now, an air-cooled system according to a third embodiment will be described, which includes the center battery case 24 illustrated in FIG. 19 and an air-cooled duct structure illustrated in FIG. 20.

That is, in the center battery case 24 illustrated in FIG. 19, the cooling-air entrance 24a connected to the delivery manifold 41a is provided at a front end portion, while the cooling-air exit 24b is provided at a rear end portion of the center battery case 24.

The center battery case 24 is not provided inside thereof with a passage, such as the exhaust-air passage 24d, for a flow in a direction different from the direction of the cooling air entering through the cooling-air entrance 24a and flowing rearward. All of the air flowing into the center battery case 24 through the cooling-air entrance 24a provided at the front end portion of the center battery case 24 flows rearward substantially over the entire area in the center battery case 24 and is discharged through the cooling-air exit 24b provided at the rear end portion of the center battery case 24.

To return the cooling air having cooled the center battery 50 in the center battery case 24 to the air intake port 51a of the air-conditioner unit 51, a return duct 44 is provided outside the center battery case 24.

The entrance end of the return duct 44 is connected to the cooling-air exit 24b at the rear end portion of the center battery case 24. Most of the return duct 44 is routed in such a manner as to extend in the front-rear direction above the center battery case 24 in an upper portion of the vehicle body 2. That is, as illustrated in FIG. 20, the return duct 44 includes an extending portion 44a extending in the front-rear direction and parallel to the extending portions 42a and 43a of the ducts 42 and 43, ranging from the front portion of the vehicle body 2 to the front-rear intermediate portion of the vehicle body 2, which corresponds to the rear end portion of the center battery case 24.

If the center battery case 24 and the return duct 44 illustrated in FIGS. 19 and 20 are applied to, for example, the first embodiment in which the return ducts 43L and 43R extend up to the air-conditioner case 40 accommodating the air-conditioner unit 51, it is preferable to place the extending portion 44a of the return duct 44 between the left return duct 43L and the right return duct 43R above the vehicle-body center frame 21.

The front end portion of the return duct 44 extending from the center battery case 24 is connected to an upper end portion of the air-conditioner case 40, as with the front end portions of the return ducts 43L and 43R extending from the side battery cases 36, to discharge air into the space inside the air-conditioner case 40.

Alternatively, as illustrated in FIG. 19, an intake manifold 51b communicating with the air intake port 51a may be provided at the front portion of the air-conditioner unit 51, and the front ends (exit ends) of the return ducts 43L, 43R, and 44 may be connected to the intake manifold 51b.

As illustrated in FIG. 20, it is preferable that an extendable/retractable portion 44c extendable and retractable corresponding to the front-rear movement of the center battery case 24 be provided between the front end portion of the return duct 44 and the front end of the extending portion 44a extending above the vehicle-body center frame 21, as with the extendable/retractable portion 43c of the return duct 43.

That is, in the third embodiment, the vehicle body 2 is provided with the center battery 50 to be cooled by the cooling air from the air-conditioner unit 51 (cooler) separately from the side battery 37, and at least one duct 44 extending from the air-conditioner unit 51 (cooler) to the center battery 50 includes the extending portion (first extending portion) 44a extending in the front-rear direction (first direction) to range from the front end portion (first end portion) of the vehicle body 2 to the front-rear intermediate portion (intermediate portion) of the vehicle body 2.

In the working vehicle 1, various forms of circuit structures are applicable for causing a temperature-regulation medium delivered from a temperature regulator to be supplied to a temperature-regulation target.

The temperature regulator may be a heater or the like, other than the air-conditioner unit (air-temperature regulator) 51 defining the air-cooled device 110 (see FIG. 14) and the radiator 52 defining the water-cooled device 120 (see FIG. 14) described above. The temperature-regulation medium may be air, water, refrigerant gas, or the like.

The temperature-regulation target may be a battery such as the center battery 50 or the side battery 37 described above, electrical equipment such as the work-system electric unit E1, the hydraulic-system electric unit E2, or the traveling-system electric unit E3 (front traveling-system electric unit E3F and rear traveling-system electric unit E3R) described above, hydraulic equipment such as the control-valve unit 27, and so forth.

In a case where the temperature-regulation target is a battery, the temperature-regulation medium may be air defining cooling air, and the air-cooled device 110 such as the air-conditioner unit 51 may be used for cooling. The battery may be cooled by cooling water generated by a heat-exchanging action of the radiator 52 defining the water-cooled device 120.

In a case where the temperature-regulation target is electrical equipment such as an electric motor or an inverter, the temperature-regulation medium may be cooling water, and cooling water generated by the radiator 52 defining the water-cooled device 120 may be used for cooling.

In a case where the temperature-regulation target is hydraulic equipment such as the hydraulic pump 57 or any of various hydraulic actuators, fins or the like may be provided to a case accommodating the hydraulic equipment to cool the case with cooling air from the air-conditioner unit 51 defining the air-cooled device 110, or a water jacket may be provided to the case to cool the case by feeding cooling water from the radiator 52 defining the water-cooled device 120 into the water jacket, or the like.

Alternatively, for example, the air-conditioner unit 51 defining an air-cooled device, the radiator 52 defining a water-cooled device, and/or the like may be used as an oil cooler that cools hydraulic fluid to be supplied to the hydraulic pump 57 and/or the hydraulic actuators or lubricating oil to be supplied to relevant portions of the working vehicle 1, or the like. Alternatively, a temperature regulator defining an oil cooler may be provided separately from the air-conditioner unit 51 and the radiator 52.

In a case where a heater is used as the temperature regulator, the temperature-regulation medium may be hot water or the like heated by the heater. For example, in a case where the place where the working vehicle 1 is to be used is such a low temperature area as to lower the lubrication efficiency of lubricating oil or the like, the hot water may be caused to circulate in the working vehicle 1 to warm the lubricating oil, or the like.

In a case where the vehicle structure includes a vehicle body 2 and left and right traveling structures 3L and 3R provided both leftward and rightward of the vehicle body 2 as with the case of the working vehicle 1 of the present application, several patterns are conceivable as the structure of a temperature-regulating system for supplying a temperature-regulation medium generated by the temperature regulator to temperature-regulation targets D1, D2L, and D2R provided in or on the vehicle body 2, the left traveling structure 3L, and the right traveling structure 3R, respectively.

First, a temperature-regulating system TS1 illustrated in FIG. 21 will be described. A working vehicle 1 to which the temperature-regulating system TS1 is applied includes a vehicle body 2, and left and right traveling structures 3L and 3R provided leftward and rightward of the vehicle body 2. The vehicle body 2 is provided with a first device D1, and a first regulator T1 that regulates the temperature of the first device D1. One of the left and right traveling structures 3L and 3R is provided with a second device D2L (or D2R), and a second regulator T2L (or T2R) that regulates the temperature of the second device D2L (or D2R). The other of the left and right traveling structures 3L and 3R is provided with a third device D2R (or D2L), and a third regulator T2R (or T2L) that regulates the temperature of the third device D2R (or D2L).

That is, the temperature-regulating system TS1 is an independent temperature-regulating system in which the vehicle body 2, the left traveling structure 3L, and the right traveling structure 3R include the respective temperature regulators T1, T2L, and T2R that are independent of one another, and respective temperature-regulating circuits C1, C2L, and C2R that are closed circuits independent of one another.

Various options are conceivable, with no limitation, for the first device D1, the second device D2L (or D2R), and the third device D2R (or D2L) that are the targets of temperature regulation in the independent temperature-regulating system TS1. Furthermore, each of the devices is not limited to a single device and may include a plurality of devices.

For example, the first device D1 is the work-system electric unit E1 (inverter 53 and electric motor 54) defining electrical equipment for controlling the driving of the working device connected to the vehicle body 2, and/or the hydraulic pump 57 and/or the like defining hydraulic equipment for controlling the hydraulic actuators provided in or on the vehicle body 2. The first device D1 may include the hydraulic-system electric unit E2 (inverter 55 and electric motor 56) for driving the hydraulic pump 57.

The second device D2L (or D2R) and the third device D2R (or D2L) are each, for example, the traveling motor 7 (7F or 7R) to drive the wheel 5 (front wheel 5F or rear wheel 5R) of the traveling structure 3L or 3R.

Various options are also conceivable for the first regulator T1, the second regulator T2L (or T2R), and the third regulator T2R (or T2L) of the independent temperature-regulating system TS1, with no limitation for the structure thereof. It is preferable that the regulators be devices compatible with the first device D1, the second device D2L (or D2R), and the third device D2R (or D2L) that are the respective targets of temperature regulation.

For example, at least one of the first regulator T1, the second regulator T2L (or T2R) or the third regulator T2R (or T2L) may define a radiator for water cooling (water-temperature regulation), an air-temperature regulator for air cooling (air-temperature regulation), or a heater for water-temperature regulation or the like.

The first regulator T1, the second regulator T2L (or T2R), and the third regulator T2R (or T2L) may be provided at any positions in the vehicle body 2 and the left and right traveling structures 3L and 3R.

In the working vehicle 1 using the independent temperature-regulating system TS1, the vehicle body 2 is provided with a first regulating circuit C1 to cause a temperature-regulation medium to circulate between the first regulator T1 and the first device D1, one traveling structure 3L (or 3R) is provided with a second regulating circuit C2L (or C2R) to cause the temperature-regulation medium to circulate between the second regulator T2L (or T2R) and the second device D2L (or D2R), and the other traveling structure 3R (or 3L) is provided with a third regulating circuit C2R (or C2L) to cause the temperature-regulation medium to circulate between the third regulator T2R (or T2L) and the third device D2R (or D2L).

Various options are conceivable for the first regulating circuit C1, the second regulating circuit C2L (or C2R), and the third regulating circuit C2R (or C2L), with no limitation for the structure thereof. It is preferable that the circuits be devices compatible with the first device D1, the second device D2L (or D2R), and the third device D2R (or D2L) that are the respective targets of temperature regulation.

For example, at least one of the first regulator T1, the second regulator T2L (or T2R) or the third regulator T2R (or T2L) may include a radiator and a radiator fan, and at least one of the first regulating circuit C1, the second regulating circuit C2L (or C2R) or the third regulating circuit C2R (or C2L) that is connected to the radiator may include a cooling-water storage tank and a cooling-water delivery pump.

As mentioned above, the working vehicle 1 illustrated in FIG. 12 includes the water-cooled cooling (temperature-regulating) circuit R1 defining a water-cooled cooling system including the cooling-water supply circuit for cooling the work-system electric unit E1 and the cooling-water supply circuit for cooling the hydraulic-system electric unit E2 that are provided in or on the vehicle body 2, and the working vehicle 1 illustrated in FIG. 13 includes the water-cooled cooling (temperature-regulating) circuit R2 defining a water-cooled cooling system including the cooling-water supply circuit for cooling the front traveling-system electric unit E3F and the cooling-water supply circuit for cooling the rear traveling-system electric unit E3R that are provided in or on each of the traveling structures 3. These water-cooled cooling systems are examples of the independent temperature-regulating system TS1.

In the configuration including the water-cooled cooling (temperature-regulating) circuit R1 or R2 as illustrated in FIG. 12 or 13, the first device D1 is the work-system electric unit E1 and/or the hydraulic pump 57 and/or the like, and the second device D2L (or D2R) and the third device D2R (or D2L) are the traveling motors 7 (7F and 7R). Correspondingly, all of the first regulator T1, the second regulator T2L (or T2R), and the third regulator T2R (or T2L) are radiators (the radiators 52 and 71).

The first regulator T1 includes the radiator 52 and the radiator fan 52a. The second regulator T2L (or T2R) and the third regulator T2R (or T2L) each include the radiator 71 and the radiator fan 71a. The first regulating circuit C1 includes the reservoir (cooling-water storage) tank 59, and the electric cooling-water (cooling-water delivery) pump 58. The second regulating circuit C2L (or C2R) and the third regulating circuit C2R (or C2L) each include the reservoir (cooling-water storage) tank 73, and the electric cooling-water (cooling-water delivery) pump 72.

As illustrated in FIGS. 1 to 6 and so forth, the left and right traveling structures 3L and 3R each include the wheels 5. The second regulator T2L (or T2R) and the third regulator T2R (or T2L) are each positioned facing the contact surface of the wheel 5 of the corresponding traveling structure 3L or 3R.

The second regulator T2L (or T2R) and the third regulator T2R (or T2L) are the radiators 71, and are each tilted with respect to the front-rear direction at a position forward of the wheel 5 (the front wheel 5F).

FIG. 21 illustrates an example of the application of the independent temperature-regulating system TS1 in a case where the radiator 52 and the radiator fan 52a are applied to the temperature regulator T1 in the vehicle body 2, the electric motor 54 and so forth defining the work-system electric unit E1 and the electric motor 56 and so forth defining the hydraulic-system electric unit E2 are applied to the temperature-regulation target D1, the water-cooled cooling (temperature-regulating) circuit R1 is applied to the temperature-regulating circuit C1, the radiators 71 and the radiator fans 71a are applied to the temperature regulators T2L and T2R in the left and right traveling structures 3L and 3R, and the traveling-system electric units E3 (E3FL, E3FR, E3RL, and E3RR), that is, the front traveling motors 7F and the rear traveling motors 7R and so forth, are applied to the temperature-regulation targets D2L and D2R, and the water-cooled cooling (temperature-regulating) circuits R2L and R2R are applied to the temperature-regulating circuits C2L and C2R.

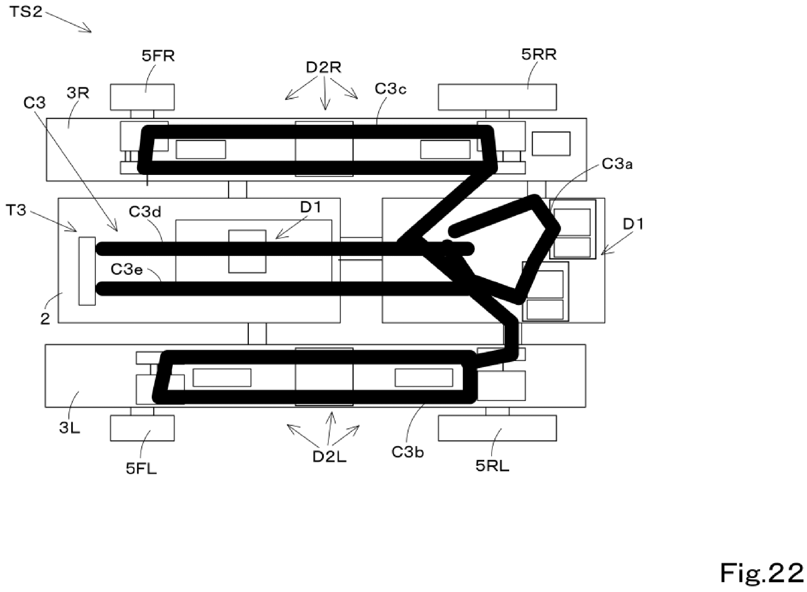

A temperature-regulating system TS2 illustrated in FIG. 22 includes a temperature regulator T3 provided in or on one of the vehicle body 2, the left traveling structure 3L or the right traveling structure 3R (in the present embodiment, provided in or on the vehicle body 2, but may be provided in or on any of the foregoing), and a temperature-regulating circuit C3 in which the temperature-regulation medium from the temperature regulator T3 is supplied to the temperature-regulation targets D1, D2L, and D2R provided in or on the vehicle body 2, the left traveling structure 3L, and the right traveling structure 3R.

The temperature-regulating circuit C3 includes a branching circuit that branches to the vehicle body 2, the left traveling structure 3L, and the right traveling structure 3R. In the vehicle body 2, a branch temperature-regulating circuit C3a is provided for supplying the temperature-regulation medium from the temperature regulator T3 to the temperature-regulation target D1 provided in or on the vehicle body 2. In the left traveling structure 3L, a branch temperature-regulating circuit C3b is provided for supplying the temperature-regulation medium from the temperature regulator T3 to the temperature-regulation target D2L provided in or on the left traveling structure 3L. In the right traveling structure 3R, a branch temperature-regulating circuit C3c is provided for supplying the temperature-regulation medium from the temperature regulator T3 to the temperature-regulation target D2R provided in or on the right traveling structure 3R.

The cooling medium (various options are conceivable as with the case of the temperature-regulating system TS1) delivered from the temperature regulator T3 passes through a shared medium-supply passage C3d and then splits into the branch temperature-regulating circuits C3a, C3b, and C3c. While the cooling medium circulates in each of the branch temperature-regulating circuits C3a, C3b, and C3c by one turn, the cooling medium cools the corresponding temperature-regulation target D1, D2L, or D2R (if there are a plurality of targets, cools them sequentially). Then, the cooling medium reaches the merging point leading to a shared medium-return passage C3e. The merged medium returns to the temperature regulator T3 through the medium-return passage C3e, and is subjected to the temperature-regulating action again.

That is, the temperature-regulating system TS2 is a branched temperature-regulating system including the temperature-regulating circuit C3 branching into the branch temperature-regulating circuits C3a, C3b, and C3c from the single temperature regulator T3 to the respective temperature-regulation targets D1, D2L, and D2R provided in or on the vehicle body 2, the left traveling structure 3L, and the right traveling structure 3R.

While the temperature-regulating circuit C3 of the temperature-regulating system TS2 illustrated in FIG. 22 has a structure in which the shared medium-supply passage C3d extends from the delivery port of the temperature regulator T3 and then branches into the branch temperature-regulating circuits C3a, C3b, and C3c, this does not imply any limitation. The temperature-regulating circuit C3 may have a structure branching immediately from the delivery port of the temperature regulator T3 into the branch temperature-regulating circuits C3a, C3b, and C3c.

While FIG. 22 illustrates that the position where the temperature-regulating circuit C3 branches from the shared medium-supply passage C3d into the branch temperature-regulating circuits C3a, C3b, and C3c is a rear portion of the vehicle body 2, this does not imply any limitation. The branching from the shared medium-supply passage C3d into the branch temperature-regulating circuits C3a, C3b, and C3c may be at any position in the working vehicle 1.

While the temperature-regulating circuit C3 of the temperature-regulating system TS2 illustrated in FIG. 22 has a structure in which the medium circulated through the branch temperature-regulating circuits C3a, C3b, and C3c is collected (merged) to the shared medium-return passage C3e extending from the intake port of the temperature regulator T3 and is then returned to the intake port of the temperature regulator T3, this does not imply any limitation. The medium exits of the branch temperature-regulating circuits C3a, C3b, and C3c may be directly connected to the intake port of the temperature regulator T3.

While FIG. 22 illustrates that the position where the temperature-regulating circuit C3 collects and merges the cooling (temperature-regulation) medium circulating through the branch temperature-regulating circuits C3a, C3b, and C3c to flow into the shared medium-return passage C3e is a rear portion of the vehicle body 2, this does not imply any limitation. The merging of the branch temperature-regulating circuits C3a, C3b, and C3c to the shared cooling (temperature-regulation) medium-return passage C3e may be at any position in the working vehicle 1.

That is, the working vehicle 1 to which the branched temperature-regulating system TS2 illustrated in FIG. 22 is applied includes the vehicle body 2, the left traveling structure 3L provided leftward of the vehicle body 2, the right traveling structure 3R provided rightward of the vehicle body 2, the temperature regulator T3 provided in or on one of the vehicle body 2, the left traveling structure 3L or the right traveling structure 3R, the temperature-regulation targets D1, D2L, and D2R that are devices to be subjected to temperature regulation by the temperature regulator T3 and include the first device D1 provided in or on the vehicle body 2, the second device D2L provided in or on the left traveling structure 3L, and the third device D2R provided in or on the right traveling structure 3R, and the temperature-regulating circuit C3 to send the temperature-regulation medium from the temperature regulator T3 to the temperature-regulation targets D1, D2L, and D2R. The temperature-regulating circuit C3 branches from the temperature regulator T3 to be individually connected to the first device D1, the second device D2L, and the third device D2R.

Various options are conceivable, with no limitation, for the first device D1, the second device D2L (or D2R), and the third device D2R (or D2L) as the targets of temperature regulation in the branched temperature-regulating system TS2. Furthermore, each of the devices is not limited to a single device and may include a plurality of devices.

For example, in the working vehicle 1 illustrated in FIGS. 1 to 14 and so forth, the first device D1 may include the center battery 50, the work-system electric unit E1 (inverter 53 and electric motor 54), the work-system electric unit E2 (inverter 55 and electric motor 56), and/or hydraulic equipment and/or the like such as the hydraulic pump 57, and the second device D2L and/or D2R may be the side battery 37, the front traveling-system electric unit E3F (inverter 6F and traveling motor 7F), and/or the rear traveling-system electric unit E3R (inverter 6R and traveling motor 7R).

Various options are also conceivable for the regulator T3 of the branched temperature-regulating system TS2, with no limitation for the structure thereof. It is preferable that the regulator be a device compatible with the first device D1, the second device D2L (or D2R), and the third device D2R (or D2L) that are the temperature-regulation targets.

For example, in a case where at least one of the first device D1, the second device D2L (or D2R) or the third device D2R (or D2L) as the cooling target is a battery, the regulator T3 may be an air-temperature regulator to cool the battery with cooling air delivered therefrom. Alternatively, the regulator T3 may include a radiator and a radiator fan to cool the battery with cooling water generated through heat exchange caused by the radiator and the radiator fan.

In a case where a water-cooled branched temperature-regulating system TS2 is constructed in the working vehicle 1 with the regulator T3 including a radiator and a radiator fan, the radiator defining the regulator T3 may be the radiator 52 and the radiator fan 52a provided in or on the vehicle body 2, or the radiator 71 and the radiator fan 71a provided in or on one of the left traveling structure 3L or the right traveling structure 3R.

The position of the radiator and the radiator fan defining the regulator T3 is not limited to the position of the radiator 52 or 71 and the radiator fan 52a or 71a illustrated in FIGS. 1 to 9 and so forth, and may be any other position suitable for causing cooling water to circulate between the first device D1, the second device D2L (or D2R), and the third device D2R (or D2L).

The capacity (size) of the radiator defining the regulator T3 may be, but is not limited to being, greater than those of the individual regulators T1, T2L, and T2R of the independent temperature-regulating system TS1, in consideration of supplying cooling water to the first device D1, the second device D2L (or D2R), and the third device D2R (or D2L).

The temperature-regulating circuit C3 of the branched temperature-regulating system TS2 includes a first temperature-regulating circuit C3a to cause the temperature-regulation medium to circulate between the temperature regulator T3 and the first device D1, a second temperature-regulating circuit C3b to cause the temperature-regulation medium to circulate between the temperature regulator T3 and the second device D2L (or D2R), and a third temperature-regulating circuit C3c to cause the temperature-regulation medium to circulate between the temperature regulator T3 and the third device D2R (or D2L).

As described above, in the case where the branched temperature-regulating system TS2 applied to the working vehicle 1 is a water-cooled system with the regulator T3 including a radiator, it is preferable that the first temperature-regulating circuit C3a that supplies cooling water to, for example, the work-system electric unit E1 (electric motor 54 and so forth) and the hydraulic-system electric unit E2 (electric motor 56 and so forth) that are each the first device D1 be provided with a pair of cooling-water delivery pumps 58 to deliver cooling water individually to the work-system electric unit E1 (electric motor 54 and so forth) and the hydraulic-system electric unit E2 (electric motor 56 and so forth), and at least one cooling-water storage (reservoir) tank 59.

In such a case, it is also preferable that the second temperature-regulating circuit C3b and the third temperature-regulating circuit C3c that each supply cooling water to, for example, the front traveling-system electric unit E3F (front traveling motor 7F and so forth) and the rear traveling-system electric unit E3R (rear traveling motor 7R and so forth) that are included in each of the second device and third device D2L and D2R be each provided with a pair of cooling-water delivery pumps 72 to deliver cooling water individually to the front traveling-system electric unit E3F (front traveling motor 7F and so forth) and the rear traveling-system electric unit E3R (rear traveling motor 7R and so forth), and at least one cooling-water storage (reservoir) tank 73.

The air-cooled cooling (temperature-regulating) system of the above working vehicle 1 that supplies cooling air from the single air-conditioner unit 51 to the center battery 50 provided in or on the vehicle body 2 and the side batteries 37 provided in or on the respective left and right traveling structures 3 is one example of the application of the branched temperature-regulating system TS2.

In the air-cooled system according to the first embodiment described above, the cooling-air passage 24c and the exhaust-air passage 24d in the center battery case 24 illustrated in FIG. 10 correspond to the first temperature-regulating circuit C3a to cause air to circulate between the air-conditioner unit 51 and the center battery 50, which is the first device D1. The left outgoing duct 42L, the left side battery case 36L, and the left return duct 43L illustrated in FIGS. 1 to 10 and so forth correspond to the second temperature-regulating circuit C3b (or third temperature-regulating circuit C3c) to cause air to circulate between the air-conditioner unit 51 and the left side battery 37L, which is the second device D2L. The right outgoing duct 42R, the right side battery case 36R, and the right return duct 43R correspond to the third temperature-regulating circuit C3c (or second temperature-regulating circuit C3b) to cause air to circulate between the air-conditioner unit 51 and the right side battery 37R, which is the third device D2R.

The air-cooled system according to the first embodiment branches immediately from the delivery port (delivery manifolds 41a and 41b) of the air-conditioner unit 51 into the cooling-air passage 24c, the left outgoing duct 42L, and the right outgoing duct 42R corresponding to passage portions leading to the first to third devices in the respective first to third temperature-regulating circuits C3a, C3b, and C3c. Furthermore, while the exhaust-air passage 24d, the left return duct 43L, and the right return duct 43R corresponding to passage portions extending from the respective first to third devices in the first to third temperature-regulating circuits C3a, C3b, and C3c are kept separate from one another (unmerged), the terminal end portions of the foregoing are directly connected to (the air-conditioner case 40 or the like accommodating) the air-conditioner unit 51.

However, the air-cooled system according to the first embodiment may also include, as illustrated in FIG. 22, shared medium passages (merged passages) C3d and C3e, which are passages integrating the temperature-regulating circuits C3a, C3b, and C3c that are branch circuits. Regarding such integration (merging) of medium passages, not all of the three temperature-regulating circuits C3a, C3b, and C3c need to be integrated, and only any two of the three may be integrated.

For example, the outgoing ducts 42L and 42R (corresponding to passage portions extending up to the second device D2L (or D2R) and the third device D2R (or D2L) in the second temperature-regulating circuit C3b and the third temperature-regulating circuit C3c) illustrated in FIGS. 2 and so forth may be integrated into a single outgoing duct in such a manner as to correspond to the shared cooling (temperature-regulating)-medium passage (merged passage) C3d in a range from the air-conditioner unit 51 (delivery manifold 41b) at the front end portion of the vehicle body 2 to the rear end of the first extending portion 42a (where the passage is bent to extend as the second extending portion 42b).

Furthermore, the return ducts 43L and 43R (corresponding to passage portions for the medium having passed the second device and the third device in the second temperature-regulating circuit C3b and the third temperature-regulating circuit C3c) illustrated in FIGS. 2 and so forth may be integrated into a single return duct in such a manner as to correspond to the shared medium-return passage (merged passage) C3e in a range from the air-conditioner unit 51 (air intake port 51a) to the rear end of the first extending portion 43a (where the passage is bent to extend as the extending portion 43b).

In the air-cooled system according to the second embodiment illustrated in FIGS. 15 and 16, the exhaust-air passage 24d in the center battery case 24 is a passage integrating the communicating passage 24g corresponding to the passage extending past the first device D1 in the first temperature-regulating circuit C3a and the return ducts 43L and 43R corresponding to passages extending past the second device D2L (or D2R) and the third device D2R (or D2L) in the second temperature-regulating circuit C3b and the third temperature-regulating circuit C3c. Thus, the exhaust-air passage 24d corresponds to the medium-return passage C3e illustrated in FIG. 22.

As described above, the exhaust-air passage 24d may be divided into a passage for the air from the inlet 24h and a passage for the air from the cooling-air passage 24c. In such a case, the first temperature-regulating circuit C3a including the cooling-air passage 24c and the communicating passage 24g extends up to the air intake port 51a of the air-conditioner unit 51 while being kept separated from the second temperature-regulating circuit C3b and the third temperature-regulating circuit C3c. On the other hand, the passages extending past the second device D2L (or D2R) and the third device D2R (or D2L), that is, the return ducts 43L and 43R, are integrated (merged) with each other into a passage portion that is one of the divided exhaust-air passages 24d that communicates with the inlet 24h.

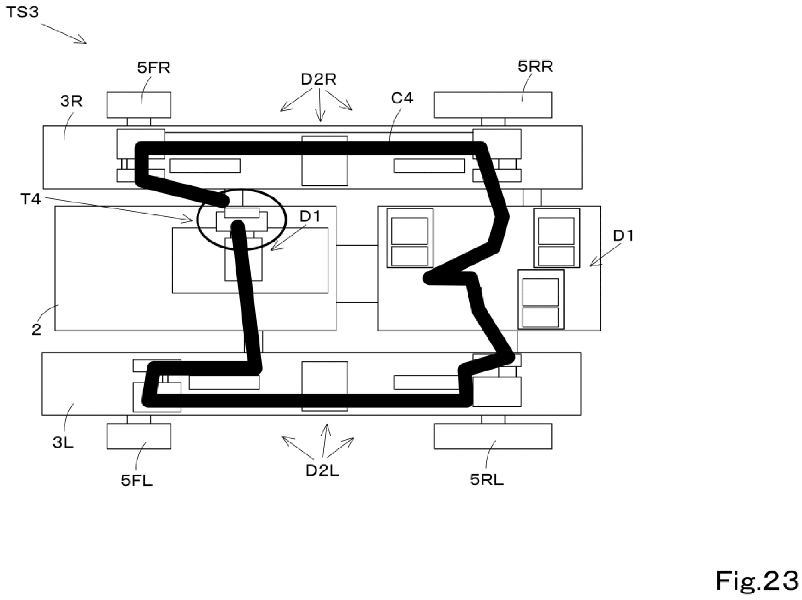

A temperature-regulating system TS3 illustrated in FIG. 23 includes a temperature regulator T4 provided in or on one of the vehicle body 2, the left traveling structure 3L or the right traveling structure 3R (in the present embodiment, provided in or on the vehicle body 2, but may be provided in or on any of the foregoing). The temperature-regulating system TS3 is configured as a temperature-regulating circuit C4, which is a single circulation circuit that connects the temperature-regulation targets D1, D2L, and D2R in series over the entirety of the working vehicle 1 such that the temperature-regulation medium from the temperature regulator T4 sequentially flows through the temperature-regulation target D1 in the vehicle body 2, the temperature-regulation target D2L in the left traveling structure 3L, and the temperature-regulation target D2R in the right traveling structure 3R (in the present embodiment, in the order of the temperature-regulation target D2R in the right traveling structure 3R, the temperature-regulation target D1 in the vehicle body 2, and the temperature-regulation target D2L in the left traveling structure 3L, but any order will do).

Now, the configuration of a control system in the working vehicle 1 will be described with reference to FIG. 14. As illustrated in FIG. 14, the working vehicle 1 includes the position detector 11. The position detector 11 is capable of detecting the position (measured position information including latitude and longitude) of the vehicle body 2 via a satellite positioning system (positioning satellite) such as D-GPS, GPS, GLONASS, BeiDou, Galileo, or Michibiki. That is, the position detector 11 receives satellite signals (the position of the positioning satellite, transmission time, correction information, and/or the like) transmitted from the positioning satellite and detects the position (for example, latitude and longitude) of the vehicle body 2 based on the satellite signals.

The position detector 11 includes a receiver 12 and an inertial measurement unit (IMU) 13. The receiver 12 is a device including an antenna or the like to receive satellite signals transmitted from the positioning satellite, and is attached to the vehicle body 2. The inertial measurement unit 13 includes an acceleration sensor to detect acceleration, a gyroscope sensor to detect angular velocity, and/or the like. The inertial measurement unit 13 is attached to the vehicle body 2. The inertial measurement unit 13 is capable of detecting the roll angle, the pitch angle, the yaw angle, and/or the like of the vehicle body 2. The yaw angle may be detected by using a plurality of position detectors 11.

As illustrated in FIG. 14, the working vehicle 1 includes a communicator 14. The communicator 14 includes a communication circuit for performing communication via a vehicle-mounted network, and a wireless communication circuit for performing wireless communication. The wireless communication circuit is capable of directly or indirectly communicating wirelessly with external devices via Wi-Fi (Wireless Fidelity, registered trademark) according to the IEEE 802.11 series of communication standards, BLE (Bluetooth (registered trademark) Low Energy), LPWA (Low Power, Wide Area), LPWAN (Low-Power Wide-Area Network), and/or the like.

As another example, the communicator 14 may include a communication circuit capable of wirelessly communicating with external devices via, for example, a mobile-phone communication network, a data communication network, and/or the like. External devices include, for example, a personal computer, a smartphone, a tablet computer, and/or a PDA, or a server and/or the like.

As illustrated in FIGS. 1 to 6 and so forth, the working vehicle 1 includes at least one surrounding detector 10 to detect the surroundings of the working vehicle 1 so as to, for example, check the safety therearound before starting.

The surrounding detector 10 includes a camera (imaging device) 10a, a sensor 10b, and a calculator 10c (see FIG. 14). In the present embodiment, the surrounding detector 10 includes both the camera 10a and the sensor 10b, but may include only one of the two.

The camera 10a is a CCD camera including a CCD (Charge Coupled Devices) image sensor, a CMOS camera including a CMOS (Complementary Metal Oxide Semiconductor) image sensor, or the like.

The camera 10a captures an image of the surroundings of the working vehicle 1 and generates an image signal. The calculator 10c is a computer or the like including a signal processing circuit that processes the image signal generated. The signal processing circuit detects the state of an object (the presence/absence of any object, the position of the object, the kind of the object, the size of the object, and/or the like) based on the image signal that is output from the camera 10a.

The sensor 10b is an optical sensor and is, for example, a LiDAR (Light Detection And Ranging).

The LiDAR (a laser sensor) emits millions of pulses of measuring light (laser light) per second from a light source such as a laser diode, and performs scanning in the horizontal direction or the vertical direction while reflecting the measuring light with a rotating mirror, to project the light to a predetermined detection area (sensing area).

Then, the LiDAR receives the reflection of the measuring light from the object by using a light receiver. The signal processing circuit of the calculator 10c detects the state of the object (the presence/absence of any object, the position of the object, the kind of the object, the size of the object, and/or the like) based on a received-light signal that is output from the light receiver of the LiDAR.

Furthermore, the signal processing circuit detects the distance to the object based on the time from when the LiDAR emits the measuring light until when the LiDAR receives the reflection (a TOF (Time of Flight) method). The method of detecting the distance by the LiDAR may be a method other than the TOF method.

The sensor 10b, which is of an optical type as described above, may supplementarily include, for example, an acoustic sensor to enhance the accuracy of detection.

The acoustic sensor is, for example, an airborne ultrasonic sensor such as sonar. The airborne ultrasonic sensor transmits a measuring wave (ultrasonic wave) from a wave transmitter to a predetermined detection area, and receives a reflection wave, which is the measuring wave reflected by the object, at a wave receiver. The signal processing circuit detects the state of the object (the presence/absence of any object, the position of the object, the kind of the object, the size of the object, and/or the like) based on the signal that is output from the wave receiver.

Furthermore, the signal processing circuit detects the distance to the object based on the time from when the airborne ultrasonic sensor transmits the measuring wave until when the airborne ultrasonic sensor receives the reflection wave (the TOF (Time of Flight) method). The method of detecting the distance by the acoustic sensor may be a method other than the TOF method.

The surrounding detector 10 detects the surroundings of the working vehicle 1 (the vehicle body 2, the left traveling structure 3L, and the right traveling structure 3R). As the surroundings of the working vehicle 1, the surrounding detector 10 detects obstacle information representing whether any obstacle or person that may interfere is present in the vicinity of the working vehicle 1.

As the surroundings of the working vehicle 1, the surrounding detector 10 detects path information that is information about a path on which the left and right traveling structures 3 can travel. To be more detailed, the surrounding detector 10 detects path information that is a value related to a path on which the traveling structures 3 can travel. As the path information, the surrounding detector 10 detects, for example, the width of the traveling path.

The width of the traveling path that is detected by the surrounding detector 10 is the width of the object to be placed between the left traveling structure 3L and the right traveling structure 3R and to have the working vehicle 1 run through thereover. As the width of the traveling path, the surrounding detector 10 detects, for example, the width of a furrow on the ground, the width of an impediment that is present on the ground to impede traveling, and/or the like.

As the path information, the surrounding detector 10 detects, for example, the height of the traveling path. The height of the traveling path that is detected by the surrounding detector 10 is the height of the object to have the vehicle body 2 between the left traveling structure 3L and the right traveling structure 3R run through thereover. As the height of the traveling path, the surrounding detector 10 detects, for example, the height of a furrow on the ground, the height of an impediment that is present on the ground to impede traveling, and/or the like.

Examples of the impediment that impedes traveling include trenches and holes in the ground, crops planted in the ground, obstacles on the ground (such as stones and/or artificial installations), and so forth. As the height of the impediment, representatively, the surrounding detector 10 is capable of detecting the height of the crop planted in the ground.

The height of the crop that is detected by the surrounding detector 10 is the height from the ground with which the wheels 5 of the traveling structures 3 are in contact to the upper end of the crop. For example, in a case where the crop is planted in a furrow, the wheels 5 of the traveling structures 3 are each in contact with not the furrow but the ground between furrows. Therefore, the height of the crop that is detected by the surrounding detector 10 is "the height of the crop itself + the height of the furrow".

As the surroundings of the working vehicle 1, the surrounding detector 10 may detect the tilt of the ground with respect to the left-right direction. In such a case, the surrounding detector 10 is capable of detecting, as the surroundings of the working vehicle 1, the height of the ground on which the left traveling structure 3L travels and the height of the ground on which the right traveling structure 3R travels. Therefore, the surrounding detector 10 may be provided on each of the left traveling frame 30L and the right traveling frame 30R.

In such a case, for example, a tilt sensor that detects the tilt of the working vehicle 1 (vehicle body 2) with respect to the left-right direction can be used as the surrounding detector 10. Furthermore, the camera 10a may be used as the surrounding detector 10 such that the calculator 10c detects the tilt of the ground with respect to the left-right direction based on the image captured by the camera 10a.

The working vehicle 1 further includes a detector that detects the state of the working vehicle 1 itself, in addition to the surrounding detector 10 that detects the surroundings of the working vehicle 1.

As the detector that detects the state of the working vehicle 1 itself, FIG. 14 illustrates a distance detector 16 that detects the distance in the left-right direction between the left traveling structure 3L and the right traveling structure 3R, the distance corresponding to the vehicle width regarded as the interval between the left and right wheels 5, and a vehicle-height detector 17 that detects the vehicle height regarded as the distance in the top-bottom direction from the contact point between each of the wheels 5 and the ground to the lowest portion of the vehicle body 2. In addition, a revolution-number detector that detects the number of revolutions of the electric motor 54, a revolution-number detector that detects the number of revolutions of the wheel 5, and/or the like may be provided.

As illustrated in FIG. 14, the controller 15 included in the working vehicle 1 is a device that performs various controls of the working vehicle 1. The controller 15 includes an arithmetic unit (CPU and/or the like) and a storage unit (RAM, ROM, and/or the like). The storage unit may include an external memory provided outside the controller 15. The controller 15 is connected to various devices and mechanisms illustrated in FIG. 14 via a vehicle-mounted LAN (vehicle-mounted network) such as a CAN (Controller Area Network) or communication lines.

The controller 15 controls the operations of the various devices and mechanisms communicably connected to the controller 15 with the arithmetic unit executing various control programs stored in the storage unit.

The controller 15 includes controllers such as a self-driving controller 15A, a distance-change controller 15B, a height-change controller 15C, and a position-change controller 15D. The functions of the foregoing controllers are realized by the arithmetic unit executing predetermined control programs stored in the storage unit.

The self-driving controller 15A of the controller 15 controls the self-driving of the working vehicle 1. The self-driving controller 15A is capable of executing line-following self-driving control and autonomous self-driving control.

In the line-following self-driving control, the self-driving controller 15A controls the number of revolutions of each wheel 5 by controlling the output-controlling inverter 6 for the traveling motor 7 of the corresponding wheel unit 4 such that the working vehicle 1 (vehicle body 2) moves along a predetermined traveling-plan line, and also controls the orientation (rudder angle) of each wheel 5 by controlling the corresponding control valve in the control-valve unit 27 for controlling the amount of extension of the steering cylinder 35 of the corresponding wheel unit 4.

In the autonomous self-driving control, the self-driving controller 15A sets the traveling direction (steering direction), the vehicle speed (speed), and so forth of the vehicle body 2 based on the position of the working vehicle 1 (vehicle body 2) that is detected by the position detector 11, controls the number of revolutions of each wheel 5 by controlling the output-controlling inverter 6 for the traveling motor 7 of the corresponding wheel unit 4 such that the steering angle (direction) and the vehicle speed thus set are realized, and also controls the orientation (rudder angle) of each wheel 5 by controlling the control-valve unit 27 (control valve) for controlling the amount of extension of the steering cylinder 35 of the corresponding wheel unit 4.

The line-following self-driving control and the autonomous self-driving control may be made switchable therebetween by using a switch or the like. Furthermore, the self-driving controller 15A may be configured to be capable of executing one of the line-following self-driving control or the autonomous self-driving control. The configuration of the self-driving controller 15A is not limited to the above.

Based on the obstacle information obtained by sensing the surroundings of (detecting any object around) the working vehicle 1 through the surrounding detector 10, the self-driving controller 15A determines whether to start the working vehicle 1 that is stopped, whether to stop the working vehicle 1 that is traveling, or whether to drive the working vehicle 1 and change the traveling direction, or whether to stop the driving of the working device that is working, and/or whether to raise the working device, and so forth. To realize the state thus determined, the self-driving controller 15A controls the output-controlling inverter 6 and the steering cylinder 35 for the traveling motor 7 in the traveling structure 3, the output-controlling inverter 53 for the electric motor 54 in the work-system electric unit E1, the output-controlling inverter 55 for the electric motor 56 in the hydraulic-system electric unit E2, and so forth.

As described above, the working vehicle 1 is capable of performing self-traveling (unattended traveling) with no operator on board, because the controller 15 includes the self-driving controller 15A. Therefore, the working vehicle 1 according to the illustrated embodiment includes no operator's seat for the operator to sit on.

However, the working vehicle 1 may be a vehicle that performs self-traveling with an operator on board. Alternatively, the working vehicle 1 may be a vehicle that travels with an operator on board to drive. If the working vehicle 1 is a vehicle to be boarded by an operator, an operator's seat is provided to the vehicle body 2.

The distance-change controller 15B of the controller 15 controls the control-valve unit 27 (control valves) for controlling the extension and retraction of the width-changing cylinder 8A and/or the width-changing cylinder 8B defining a vehicle-body deformer such that the distance between the left traveling structure 3L and the right traveling structure 3R matches the width of the detected traveling path, that is, the left and right wheels 5 are each correctly positioned between furrows, based on information on the width of the traveling path that is included in the path information acquired through detection by the surrounding detector 10, information on the distance between the left traveling structure 3L and the right traveling structure 3R that is detected by the distance detector 16, and/or the like.

The height-change controller 15C of the controller 15 controls the control-valve unit 27 (control valves) for controlling the extension and retraction of the vehicle-body-raising/lowering cylinder 9 defining a vehicle-body mover such that the vehicle height regarded as the distance in the top-bottom direction from the contact point between the wheel 5 and the ground to the bottom end of the vehicle body 2 matches the detected height of the traveling path, that is, the vehicle body 2 is positioned over the crop and/or the like on the traveling path, based on information on the height of the traveling path that is included in the path information acquired through detection by the surrounding detector 10, information on the vehicle height detected by the vehicle-height detector 17, and/or the like.

Furthermore, the height-change controller 15C of the controller 15 controls the control-valve unit 27 (control valves) for controlling the extension and retraction of the left vehicle-body-raising/lowering cylinder 9L and the right vehicle-body-raising/lowering cylinder 9R to adjust the difference in the amount of extension of the piston rod between the left vehicle-body-raising/lowering cylinder 9L and the right vehicle-body-raising/lowering cylinder 9R defining a vehicle-body mover such that the tilt of the vehicle body 2 with respect to the left-right direction is adjusted, based on information on the tilt of the ground with respect to the left-right direction that is acquired through detection by the surrounding detector 10, and/or the like.

The position-change controller 15D of the controller 15 measures the slip ratios of the front wheel 5F and the rear wheel 5R based on, for example, the result of detection by the revolution-number detector that detects the number of revolutions of the wheels 5, and/or the like. If, for example, the slip ratio of the front wheel 5F is higher, the position-change controller 15D may cause an external device to display a warning to move the center battery case 24 forward via the communicator 14.

If, as illustrated in FIG. 14, the working vehicle 1 includes the battery-moving actuator 81 (vehicle-body deformer 80) for moving the center battery case 24 forward and rearward, the position-change controller 15D actuates the battery-moving actuator 81 to move the center battery case 24 (if the battery-moving actuator 81 is a hydraulic actuator, the position-change controller 15D controls a corresponding control valve).

The working vehicle 1 further includes one or more temperature detectors 18. Based on the results of detection by the temperature detectors 18, the controller 15 controls the outputs of the air-conditioner unit 51 or the like defining the air-cooled (air-conditioning) device 110, the radiator fans 52a and 71a or the like defining the water-cooled device 120. Thus, effective cooling (temperature regulation) is achieved for the batteries such as the center battery 50 and the left and right side batteries 37L and 37R that are the targets of cooling (temperature regulation), the electrical equipment such as the work-system electric unit E1, the hydraulic-system electric unit E2, and the traveling-system electric units E3 (E3F and E3R), and the hydraulic equipment such as the control-valve unit 27.

Workings or effects produced by each of the configurations of the working vehicle 1 described above will now be described.

(Item A1) A working vehicle 1 including a vehicle body 2, a cooler (air-conditioner unit 51) provided in or on the vehicle body 2, at least one cooling target (battery 37, 50) to be cooled by cooling air delivered from the cooler (air-conditioner unit 51), and a plurality of ducts 42, 43, 44 to allow the cooling air to flow between the cooler (air-conditioner unit 51) and the cooling target, in which the vehicle body 2 includes a first end portion and a second end portion (front end portion and rear end portion) opposite each other in a first direction (front-rear direction), and an intermediate portion (front-rear intermediate portion) between the first end portion and the second end portion in the first direction, the cooler (air-conditioner unit 51) is provided at the first end portion (front end portion) of the vehicle body 2, and, the plurality of ducts 42, 43, 44 include at least one duct 42, 43 that extends from the cooler (air-conditioner unit 51) to the cooling target and includes a first extending portion 42a, 43a extending in the first direction (front-rear direction) in a range from the first end portion (front end portion) to the intermediate portion (front-rear intermediate portion) and a second extending portion 42b extending in a direction different from the first direction (front-rear direction) in or on the intermediate portion (front-rear intermediate portion).

With the above configuration, ducts 42, 43 diverging to left and right traveling structures 3L, 3R are made to converge at the first extending portions 42a, 43a. Therefore, compact piping is realized with good appearance, and a wide space can be secured for placing peripheral equipment.

(Item A2) The working vehicle 1 according to Item A1, in which the first extending portion 42a, 43a is located at an upper portion of the vehicle body 2 (vehicle-body frame structure 20).

With the above configuration, the first extending portions 42a, 43a of the ducts 42, 43 are piped in a collected manner at the upper portion of the vehicle body 2. Thus, the convenience for maintenance is realized, and a wide space can be secured to place other equipment at an intermediate portion and a lower portion of the vehicle body 2.

(Item A3) The working vehicle 1 according to Item A1 or A2, in which the plurality of ducts 42, 43, 44 include an outgoing duct 42 extending to the cooling target (battery 37) to supply the cooling air discharged from the cooler (air-conditioner unit 51) to the cooling target (battery 37), and a return duct 43, 44 extending from the cooling target (battery 37, 50) to allow the cooling air having cooled the cooling target (battery 37, 50) to be returned to the cooler (air-conditioner unit 51), and at least the outgoing duct 42 among the outgoing duct 42 and the return duct 43, 44 is included in the at least one duct that includes the first extending portion 42a.

With the above configuration, the first extending portion 42a of the outgoing duct 42 is piped in a converged manner. Thus, compact piping can be realized.

(Item A4) The working vehicle 1 according to Item A3, in which the return duct 43 includes an extending portion 43b extending in a direction different from the first direction (front-rear direction), and the extending portion 43b is parallel to the second extending portion 42b included in the outgoing duct 42 and extending in the direction different from the first direction (front-rear direction).

With the above configuration, the extending portions of the outgoing duct 42 and the return duct 43 that extend in the direction different from the first direction can be piped compactly and with a simple appearance.

(Item A5) The working vehicle 1 according to Item A3 or A4, in which the outgoing duct 42 is connected to a lower portion of a housing (side battery case 36) accommodating the cooling target (side battery 37), and the return duct 43 is connected to an upper portion of the housing (side battery case 36) higher than the lower portion of the housing.

With the above configuration, with the progress of cooling of the cooling target (side battery 37) by the cooling air flowing into the housing (side battery case 36) from the lower portion of the housing that is connected to the outgoing duct 42, the cooling air becomes hotter and moves upward. Thus, the cooling air can be efficiently discharged to the return duct 43 connected to the upper portion of the housing.

(Item A6) The working vehicle 1 according to Item A5, in which the cooling target is a battery (side battery) 37.

With the above configuration, the battery 37, which tends to be hot in the working vehicle 1, can be effectively cooled.

(Item A7) The working vehicle 1 according to any one of Items A3 to A6, in which the return duct 43 is included in the at least one duct that extends from the cooler (air-conditioner unit 51) to the cooling target (battery 50) and includes the first extending portion 43a extending in the first direction (front-rear direction) such that the first extending portion 42a of the outgoing duct 42 and the first extending portion 43a of the return duct 43 are parallel to each other.

With the above configuration, the return duct 43 extending to the cooler (air-conditioner unit 51) includes the first extending portion 43a that extends parallel to the first extending portion 42a of the outgoing duct 42. Therefore, a compact piping structure can be realized with a good appearance.

(Item A8) The working vehicle 1 according to Item A7, in which the vehicle body 2 is provided with, separately from the cooling target (side battery 37), a second cooling target (center battery 50) to be cooled by the cooling air from the cooler (air-conditioner unit 51), and at least one duct 44 extending from the cooler (air-conditioner unit 51) to the second cooling target (center battery 50) includes the first extending portion 44a extending in the first direction (front-rear direction) in a range from the first end portion (front end portion) of the vehicle body 2 to the intermediate portion (front-rear intermediate portion) of the vehicle body 2.

With the above configuration, the duct 44 connected to the second cooling target (battery 50) also includes the first extending portion 44a. Thus, the duct 44 and the other ducts 42 and 43 can be assuredly made to converge.

(Item A9) The working vehicle 1 according to any one of Items A3 to A6, in which the vehicle body 2 is provided with, separately from the cooling target (side battery 37), a second cooling target (center battery 50) to be cooled by the cooling air from the cooler (air-conditioner unit 51), a housing (center battery case 24) accommodating the second cooling target (battery 50) is provided inside thereof with an exhaust-air passage 24d to allow the cooling air having cooled the second cooling target (battery 50) to be discharged to the cooler (air-conditioner unit 51), and the return duct 43 is connected to the housing (center battery case 24) and communicates with the exhaust-air passage 24d in the housing (center battery case 24).

With the above configuration, the return duct 43 to allow the cooling air having cooled the second cooling target (battery 50) to be returned to the cooler (air-conditioner unit 51) is shortened, and the first extending portion 43a can be omitted. Therefore, a wide space can be secured for placing other equipment in an upper portion and/or the like of the vehicle body 2.

(Item A10) The working vehicle 1 according to Item A9, in which the second cooling target is a battery (center battery) 50.

With the above configuration, the battery 50, which tends to be hot in the working vehicle 1, can be effectively cooled.

(Item A11) The working vehicle 1 according to any one of Items A1 to A10, further including a left traveling structure 3L provided leftward of the vehicle body 2, and a right traveling structure 3R provided rightward of the vehicle body 2, in which the cooling target (side battery 37) includes a left cooling target (left side battery 37L) provided in or on the left traveling structure 3L, and a right cooling target (right side battery 37R) provided in or on the right traveling structure 3R.

With the above configuration, the structure according to Item A1 and/or so forth can be applied to a duct structure to supply the cooling air from the cooler (air-conditioner unit 51) to the cooling targets (side batteries 37) provided both leftward and rightward of the vehicle body 2.

(Item A12) The working vehicle 1 according to Item A11, in which the plurality of ducts 42, 43 include a left outgoing duct 42L extending to the left cooling target (left battery 37L) and a right outgoing duct 42R extending to the right cooling target (right battery 37R) to allow the cooling air delivered from the cooler (air-conditioner unit 51) to be supplied to the cooling targets (batteries 37), and a left return duct 43L extending from the left cooling target (left battery 37L) and a right return duct 43R extending from the right cooling target (right battery 37R) to allow the cooling air having cooled the cooling targets (batteries 37) to return to the cooler (air-conditioner unit 51), at least the left outgoing duct 42L and the right outgoing duct 42R are included in the at least one duct that extends from the cooler (air-conditioner unit 51) to a corresponding one of the left cooling target (left battery 37L) or the right cooling target (right battery 37R) and includes the first extending portion 42a extending in the first direction (front-rear direction) in a range from the first end portion (front end portion) to the intermediate portion (front-rear intermediate portion), the second extending portion 42b included in the left outgoing duct 42L and extending in the direction different from the first direction (front-rear direction) and the second extending portion 42b included in the right outgoing duct 42R and extending in the direction different from the first direction (front-rear direction) extend toward opposite sides in the left-right direction with respect to the vehicle body 2, the left return duct 43L and the right return duct 43R include respective extending portions 43b each extending in a direction different from the first direction (front-rear direction), and the extending portion 43b included in the left return duct 43L and extending in the direction different from the first direction (front-rear direction) and the extending portion 43b included in the right return duct 43R and extending in the direction different from the first direction (front-rear direction) extend toward opposite sides in the left-right direction with respect to the vehicle body 2.

With the above configuration, the outgoing ducts 42 and the return ducts 43 that allow the cooling air to circulate between the cooler (air-conditioner unit 51) and the left and right cooling targets (batteries 37) provided both leftward and rightward of the vehicle body 2 can be piped compactly.

(Item A13) The working vehicle 1 according to any one of Items A1 to A12, in which the first direction is a front-rear direction of the vehicle body 2, and the direction different from the first direction (front-rear direction) is a left-right direction of the vehicle body 2.

With the above configuration, the first extending portions 42a, 43a of the plurality of ducts 42, 43 can be arranged in a converged manner by extending in the front-rear direction of the vehicle body 2. On the other hand, with the extending portions 42b, 43b extending in the left-right direction, the plurality of ducts 42, 43 can be compactly piped to be connected to the cooling targets (batteries 37).

(Item A14) The working vehicle 1 according to Item A13, in which the first end portion is a front end portion of the vehicle body 2.

With the above configuration, the cooler (air-conditioner unit) 51 is located at the front end portion of the vehicle body 2, where outside air for generating the cooling air is easy to take in. Thus, the efficiency of generating the cooling air by the cooler (air-conditioner unit 51) can be increased.

(Item B1) A working vehicle 1 including a cooler (air-conditioner unit 51), a first cooling target (center battery 50) and a second cooling target (side battery 37) to be cooled by cooling air discharged from the cooler (air-conditioner unit 51), a first cooling housing (center battery case 24) accommodating the first cooling target (center battery 50), and a second cooling housing (side battery case 36) accommodating the second cooling target (side battery 37), in which the first cooling housing (center battery case 24) is provided with an inlet 24h to take in air delivered from the second cooling housing (side battery case 36) after cooling the second cooling target (side battery 37).

With the above configuration, the return duct 43 for sending the air having cooled the second cooling target (side battery 37) and been discharged from the second cooling housing (side battery case 36) can be shortened, contributing to the compact arrangement of pipes such as the ducts in the working vehicle 1, the improvement in the freedom of equipment layout, and/or the like.

(Item B2) The working vehicle 1 according to Item B1, in which the first cooling housing (center battery 24) is provided inside thereof with a cooling-air passage 24c to allow the cooling air from the cooler (air-conditioner unit 51) to be blown onto the first cooling target (center battery 50), and an exhaust-air passage 24d to allow air having cooled the first cooling target (center battery 50) to be discharged to the cooler (air-conditioner unit 51), and the working vehicle 1 is configured to merge, with air in the exhaust-air passage 24d, the air discharged from the second cooling housing (side battery case 36) and introduced into the first cooling housing (center battery case 24) through the inlet 24h.

With the above configuration, the discharge routes for the air having cooled the first cooling target (center battery 50) and the air having cooled the second cooling target (side battery 37) are integrated with each other in the exhaust-air passage 24d, contributing to a reduction in the number of pipes for discharging the air.

(Item B3) The working vehicle 1 according to Item B2, in which the first cooling housing (center battery case 24) is provided inside thereof with a first air guide (fan 45) to guide air from the cooling-air passage 24c to the exhaust-air passage 24d, and a second air guide (fan 46) to guide air from the inlet 24h to the exhaust-air passage 24d.

With the above configuration, the air from the cooling-air passage 24c and the air from the inlet 24h are assuredly guided to the exhaust-air passage 24d, contributing to the improvement in the cooling efficiency, and/or the like.

(Item B4) The working vehicle according to Item B2 or B3, in which the first cooling housing (center battery case 24) is provided inside thereof with a partition 24e above the first cooling target (center battery 50), a space in the first cooling housing (center battery case 24) below the partition 24e is the cooling-air passage 24c, and a space in the first cooling housing (center battery case 24) above the partition 24e is the exhaust-air passage 24d.

With the above configuration, the exhaust-air passage 24d is assuredly defined above the cooling-air passage 24c by the partition 24e.

(Item B5) The working vehicle 1 according to Item B4, in which the first cooling housing (center battery case 24) is provided inside thereof with a communicating passage 24g extending in a top-bottom direction along an end portion of the partition 24e to allow an exit of the cooling-air passage 24c and an entrance of the exhaust-air passage 24d to communicate with each other, the cooling-air passage 24c is provided at the exit with a first air guide (fan 45) to guide air from the cooling-air passage 24c to a lower portion of the communicating passage 24g, and the communicating passage 24g is provided at an upper portion thereof with the inlet 24h and a second air guide (fan 46) to guide air introduced through the inlet 24h to the entrance of the exhaust-air passage 24d.

With the above configuration, a tendency that the air warmed after the cooling moves upward can be used to smoothly guide the air after the cooling into the exhaust-air passage 24d higher than the cooling-air passage 24c.

(Item B6) The working vehicle 1 according to any one of Items B3 to B5, in which the first air guide and the second air guide are fans 45, 46.

With the above configuration, the air-taking effect and the air-blowing effect produced by the fans 45, 46 can assuredly generate an airflow in the first cooling housing (center battery case 24).

(Item B7) The working vehicle 1 according to any one of Items B1 to B6, wherein at least one of the first cooling target or the second cooling target is a battery 37, 50.

With the above configuration, the battery 37, 50, which requires temperature management in the working vehicle 1 to enable favorable operation of electrical equipment and the like, can be assuredly cooled.

(Item B8) The working vehicle 1 according to any one of Items B1 to B7, further includes a vehicle body 2 and at least one traveling structure 3 provided alongside the vehicle body 2, in which the cooler (air-conditioner unit 51) and the first cooling housing (center battery case 24) are provided in or on the vehicle body 2, and the second cooling housing (side battery case 36) is provided in or on the at least one traveling structure 3.

With the above configuration, the effect of integrating the discharge routes described above can also be exerted for the first cooling housing (center battery case 24) and the second cooling housing (side battery case 36) that are distributed between the vehicle body 2 and the at least one traveling structure 3.

(Item C1) A working vehicle including a duct 42, 43, 44 extendable and retractable corresponding to a change in a vehicle shape.

With the above configuration, even in a working vehicle having a special structure that allows the vehicle shape to change, since the duct extends or retracts corresponding to the change, the connection between pieces of equipment via the duct can be maintained.

(Item C2) The working vehicle 1 according to Item C1, further including a first element and a second element linked to each other while being movable relative to each other, in which the duct 42, 43, 44 extends astride the first element and the second element and includes an extendable/retractable portion 42c, 42d, 42e, 43c, 43d, 43e, 44c extendable and retractable corresponding to a relative movement of the first element and the second element.

With the above configuration, providing the extendable/retractable portion 42c, 42d, 42e, 43c, 43d, 43e, 44c at a location where the working effect of the extension and retraction is enhanced can assuredly exert the function of the duct thus piped.

(Item C3) The working vehicle 1 according to Item C2, in which one of the first element or the second element is a vehicle body 2, and the other is a traveling structure 3 provided leftward or rightward of the vehicle body 2.

With the above configuration, the duct 42, 43 that connects pieces of equipment provided in or on the vehicle body 2 and each of left and right traveling structures 3 can be configured with the extendable/retractable portion 42e, 43e that is extendable and retractable.

(Item C4) The working vehicle 1 according to Item C3, in which the vehicle body 2 is movable in a top-bottom direction with respect to the traveling structure 3, and the duct 42, 43 is provided with the extendable/retractable portion 42e, 43e at a portion thereof extending in the top-bottom direction between the vehicle body 2 and the traveling structure 3.

With the above configuration, when the vehicle body 2 is raised or the like and changes the position thereof in the top-bottom direction with respect to the traveling structure 3, the extendable/retractable portion 42e, 43e correspondingly extends or retracts in the top-bottom direction. Thus, the duct 42, 43 can maintain the function as the duct that is a passage for the cooling medium.

(Item C5) The working vehicle 1 according to Item C4, further including a cooler (air-conditioner unit 51) provided in or on the vehicle body 2, and a cooling target (battery 37) provided in or on the traveling structure 3 and to be cooled by a cooling medium supplied from the cooler (air-conditioner unit 51), in which the duct 42, 43 extends as a passage for the cooling medium between the cooler (air-conditioner unit 51) and the cooling target (battery 37).

With the above configuration, even in a case where the cooler (air-conditioner unit 51) and the cooling target (battery 37) are located separately from each other between the vehicle body 2 and the traveling structure 3, the two are assuredly connected to each other via the duct 42, 43 including the extendable/retractable portion 42c, 42d, 42e, 43c, 43d, 43e that is extendable and retractable.

(Item C6) The working vehicle 1 according to any one of Items C2 to C5, in which one of the first element or the second element is a first portion of the vehicle body 2 and the other is a second portion of the vehicle body 2, and the duct 42, 43 is provided with the extendable/retractable portion 42c, 42d, 43c, 43d at a portion thereof between the first portion and the second portion of the vehicle body 2.

With the above configuration, even in a case where the first portion and the second portion move relative to each other such that the vehicle body 2 deforms, since the extendable/retractable portion 42c, 42d, 43c, 43d extends or retracts, the duct 42, 43 can maintain the function as the duct that is a passage for the cooling medium.

(Item C7) The working vehicle 1 according to Item C6, in which the first portion (center battery case 24, air-conditioner case 40, delivery manifold 41b) of the vehicle body 2 and the second portion (vehicle-body frame structure 20) of the vehicle body 2 are movable relative to each other in the front-rear direction, and the duct 42, 43, 44 is provided with the extendable/retractable portion 42c, 43c, 44c at a portion thereof extending in the front-rear direction between the first portion (center battery case 24, air-conditioner case 40, delivery manifold 41b) of the vehicle body 2 and the second portion (vehicle-body frame structure 20) of the vehicle body 2.

With the above configuration, even in a case where the first portion (center battery case 24, air-conditioner case 40, delivery manifold 41b) of the vehicle body 2 and the second portion (vehicle-body frame structure 20) of the vehicle body 2 move relative to each other in the front-rear direction, since the extendable/retractable portion 42c, 43c, 44c extends or retracts in the front-rear direction, the duct 42, 43, 44 can maintain the function as the duct that is a passage for the cooling medium.

(Item C8) The working vehicle 1 according to Item C6 or C7, in which the first portion (vehicle-body center frame 21) of the vehicle body 2 and the second portion (vehicle-body side frame 22) of the vehicle body 2 are movable relative to each other in the left-right direction, and the duct 42, 43 is provided with the extendable/retractable portion 42d, 43d at a portion thereof extending in the left-right direction between the first portion (vehicle-body center frame 21) of the vehicle body 2 and the second portion (vehicle-body side frame 22) of the vehicle body 2.

With the above configuration, even in a case where the first portion (vehicle-body center frame 21) of the vehicle body 2 and the second portion (vehicle-body side frame 22) of the vehicle body 2 move relative to each other in the left-right direction, since the extendable/retractable portion 42d, 43d extends or retracts in the left-right direction, the duct 42, 43 can maintain the function as the duct that is a passage for the cooling medium.

(Item C9) The working vehicle 1 according to any of Items C6 to C8, further including a traveling structure 3 provided alongside the vehicle body 2, in which the vehicle body 2 is movable relative to the traveling structure 3, and the duct 42, 43 is provided with a plurality of the extendable/retractable portions 42c, 42d, 42e, 43c, 43d, 43e at a portion thereof between the first portion of the vehicle body 2 and the second portion of the vehicle body 2 and at a portion thereof between the vehicle body 2 and the traveling structure 3.

With the above configuration, both when the first portion of the vehicle body 2 and the second portion of the vehicle body 2 move relative to each other and when the vehicle body 2 and the traveling structure 3 move relative to each other, the extendable/retractable portions 42c, 42d, 42e, 43c, 43d, 43e provided at the corresponding portions extend or retract. Therefore, the duct 42, 43 can maintain the function as the duct that is a passage for the cooling medium.

(Item C10) The working vehicle 1 according to Item C9, further including a cooler (air-conditioner unit 51) provided in or on the first portion of the vehicle body 2 or the second portion of the vehicle body 2, and a cooling target (battery 37) provided in or on the traveling structure 3 and to be cooled by a cooling medium supplied from the cooler (air-conditioner unit 51), in which the duct 42 extends as a passage for the cooling medium between the cooler (air-conditioner unit 51) and the cooling target (battery 37).

With the above configuration, even in a case where the cooler (air-conditioner unit 51) and the cooling target (battery 37) are located separately from each other between the vehicle body 2 and the traveling structure 3, the two are assuredly connected to each other via the duct 42 including the extendable/retractable portion 42c, 42d, 42e that is extendable and retractable.

(Item C11) The working vehicle 1 according to any one of Items C6 to C10, in which the vehicle body 2 includes a third portion movable relative to the second portion, and the duct 42, 43 is provided with a plurality of the extendable/retractable portions 42c, 42d, 43c, 43d at a portion thereof (a portion for providing the extendable/retractable portion 42c, 43c) between the first portion (center battery case 24, air-conditioner case 40, delivery manifold 41b) of the vehicle body 2 and the second portion (vehicle-body center frame 21) of the vehicle body 2 and at a portion thereof between the second portion (vehicle-body center frame 21) of the vehicle body 2 and the third portion (vehicle-body side frame 22) of the vehicle body 2.

With the above configuration, both when the first portion of the vehicle body 2 and the second portion of the vehicle body 2 move relative to each other and when the second portion of the vehicle body 2 and the third portion of the vehicle body 2 move relative to each other, the extendable/retractable portions 42c, 42d, 43c, 43d provided in the corresponding portions extend or retract. Therefore, the duct 42, 43 can maintain the function as the duct that is a passage for the cooling medium.

(Item C12) The working vehicle 1 according to Item C11, in which the first portion (center battery case 24, air-conditioner case 40, delivery manifold 41b) of the vehicle body 2 and the second portion (vehicle-body frame structure 20) of the vehicle body 2 are movable relative to each other in the front-rear direction, the second portion (vehicle-body center frame 21) of the vehicle body 2 and the third portion (vehicle-body side frame 22) of the vehicle body 2 are movable relative to each other in the left-right direction, and the duct 42, 43 is provided with a plurality of the extendable/retractable portions 42c, 42d, 42e, 43c, 43d, 43e at a portion thereof extending in the front-rear direction between the first portion (center battery case 24, air-conditioner case 40, delivery manifold 41b) of the vehicle body 2 and the second portion (vehicle-body frame structure 20) of the vehicle body 2 and at a portion thereof extending in the left-right direction between the second portion (vehicle-body center frame 21) of the vehicle body 2 and the third portion (vehicle-body side frame 22) of the vehicle body 2.

With the above configuration, both when the first portion of the vehicle body 2 and the second portion of the vehicle body 2 move relative to each other in the front-rear direction and when the second portion of the vehicle body 2 and the third portion of the vehicle body 2 move relative to each other in the left-right direction, the extendable/retractable portions 42c, 42d, 42c, 43c, 43d, 43e provided in the corresponding portions extend or retract. Therefore, the duct 42, 43 can maintain the function as the duct that is a passage for the cooling medium.

(Item C13) The working vehicle 1 according to Item C12, further including a traveling structure 3 provided alongside the vehicle body 2, a cooler (air-conditioner unit 51) provided in or on the first portion (center battery case 24, air-conditioner case 40, delivery manifold 41b) of the vehicle body 2, and a cooling target (battery 37) provided in or on the traveling structure 3 and to be cooled by a cooling medium supplied from the cooler (air-conditioner unit 51), in which the duct 42, 43 defines a passage for the cooling medium, extends in the front-rear direction from the cooler (air-conditioner unit 51) to the second portion (vehicle-body center frame 21) of the vehicle body 2, is bent at the second portion (vehicle-body center frame 21) of the vehicle body 2 to extend in the left-right direction from the second portion (vehicle-body center frame 21) of the vehicle body 2 to the third portion (vehicle-body side frame 22) of the vehicle body 2, and extends in the top-bottom direction from the third portion (vehicle-body side frame 22) of the vehicle body 2 to the cooling target (battery 37).

With the above configuration, the duct 42, 43 is piped in a favorable route in terms of connecting the cooler (air-conditioner unit 51) in or on the vehicle body 2 and the cooling target (battery 37) in or on the traveling structure 3 and achieving a compact and efficient piping structure in the working vehicle 1. Since the duct 42, 43 thus configured includes the extendable/retractable portions 42c, 42d, 42e, 43c, 43d, 43e described above, the extendable/retractable portions 42c, 42d, 42e, 43c, 43d, 43e extend or retract corresponding to the relative movement of the first portion of the vehicle body 2 and the second portion of the vehicle body 2, the relative movement of the second portion of the vehicle body 2 and the third portion of the vehicle body 2, or the relative movement of the vehicle body 2 and the traveling structure 3. Therefore, the duct 42, 43 can maintain the function as the duct that is a passage for the cooling medium.

(Item D1) A working vehicle 1 including a vehicle body 2, and left and right traveling structures 3L, 3R provided leftward and rightward of the vehicle body 2, in which the vehicle body 2 is provided with a first device D1 (work-system electric unit E1, hydraulic-system electric unit E2) and a first regulator T1 (radiator 52) to regulate a temperature of the first device D1 (work-system electric unit E1, hydraulic-system electric unit E2), one (left traveling structure 3L) of the left and right traveling structures 3L, 3R is provided with a second device D2L (left-front traveling-system electric unit E3FL, left-rear traveling-system electric unit E3RL) and a second regulator T2L (radiator 71) to regulate a temperature of the second device D2L, and the other (right traveling structure 3R) of the left and right traveling structures 3L, 3R is provided with a third device D2R (right-front traveling-system electric unit E3FR, right-rear traveling-system electric unit E3RR) and a third regulator T2R (radiator 71) to regulate a temperature of the third device D2R.

With the above configuration, in the working vehicle 1 in which both the vehicle body 2 and the left and right traveling structures 3 are provided with the devices D1, D2L, D2R (work-system electric unit E1, hydraulic-system electric unit E2, left-front traveling-system electric unit E3FL, left-rear traveling-system electric unit E3RL, right-front traveling-system electric unit E3FR, right-rear traveling-system electric unit E3RR) that are the targets of temperature regulation, both the vehicle body 2 and each traveling structure 3 are provided with the respective regulators T1, T2L, T2R (radiators 52, 71). Therefore, the effect of temperature regulation for each device can be enhanced, and even if some trouble occurs in the temperature-regulating action for any of the devices, the devices provided in or on the other element (vehicle body 2 or traveling structure 3) are not affected. Furthermore, even in the state where the vehicle body 2 and the left and right traveling structures 3L, 3R are separate from each other, since the regulator for regulating the temperature of each of the devices is provided in or on the corresponding one of the vehicle body 2 or the left and right traveling structures 3L, 3R, the number of necessary connections between the vehicle body 2 and the left and right traveling structures 3L, 3R can be reduced regarding the pipes and the like for sending the temperature-regulation medium to the individual devices for the temperature regulation. Thus, the ease of maintenance and/or the like can be increased.

(Item D2) The working vehicle 1 according to Item D1, in which at least one of the first regulator T1, the second regulator T2L or the third regulator T2R is a radiator 52, 71.

With the above configuration, the water-cooled action of the radiator 52, 71 can be assuredly exerted on the corresponding device D1, D2L, D2R (work-system electric unit E1, hydraulic-system electric unit E2, left-front traveling-system electric unit E3FL, left-rear traveling-system electric unit E3RL, right-front traveling-system electric unit E3FR, right-rear traveling-system electric unit E3RR)

(Item D3) The working vehicle 1 according to Item D2, in which the first regulator is a radiator 52 at a front portion of the vehicle body 2.

With the above configuration, the radiator 52 is located at a position where air for heat exchange is easy to take in. Thus, the effect of temperature regulation can be enhanced.

(Item D4) The working vehicle 1 according to any one of Items D1 to D3, in which the vehicle body 2 is provided with a first regulating circuit C1 (R1) to cause a temperature-regulation medium to circulate between the first regulator T1 (radiator 52) and the first device D1 (work-system electric unit E1, hydraulic-system electric unit E2), the one traveling structure 3 (left traveling structure 3L) is provided with a second regulating circuit C2L (R2L) to cause the temperature-regulation medium to circulate between the second regulator T2L (radiator 71) and the second device D2L (left traveling-system electric unit E3L), and the other traveling structure 3 (right traveling structure 3R) is provided with a third regulating circuit C2R (R2R) to cause the temperature-regulation medium to circulate between the third regulator T2R (radiator 71) and the third device D2R (right traveling-system electric unit E3R).

With the above configuration, the vehicle body 2 and the left and right traveling structures 3L, 3R are provided with the respective regulating circuits C1, C2L, C2R each of which causes the temperature-regulation medium to circulate between the corresponding regulator T1, T2L, T2R and the corresponding devices D1, D2L, D2R. Even if some trouble occurs in any of the circuits, the other circuits are not affected, making it easy to maintain the effect of temperature regulation for each of the devices in the working vehicle 1. Furthermore, when the vehicle body 2 and the left and right traveling structures 3L, 3R are disconnected from each other or connected to each other, the work of disconnection or connection of the pipes between the regulating circuits C1, C2L, C2R can be omitted, which is excellent in terms of the ease of maintenance.

(Item D5) The working vehicle 1 according to Item D4, in which at least one of the first regulator T1, the second regulator T2L or the third regulator T2R includes a radiator 52, 71 and a radiator fan 52a, 71a, and the first regulating circuit R1 (C1), the second regulating circuit R2L (C2L), or the third regulating circuit R2R (C2R) connected to the radiator 52, 71 includes a cooling-water storage tank 59, 73 and a cooling-water delivery pump 58, 72.

With the above configuration, at least one of the vehicle body 2 or the left and right traveling structures 3L, 3R is configured with the water-cooled cooling (temperature-regulating) circuit R1, R2L, R2R (C1, C2L, C2R) including a radiator and/or the like.

(Item D6) The working vehicle 1 according to any one of Items D1 to D5, in which at least one of the first regulator T1, the second regulator T2L or the third regulator T2R is an air-temperature regulator (air-conditioner unit 51).

With the above configuration, the air-cooled cooling (temperature-regulating) action of the air-temperature regulator (air-conditioner unit 51) can be exerted on at least one of the vehicle body 2 or the left and right traveling structures 3L, 3R.

(Item D7) The working vehicle 1 according to any one of Items D1 to D6, in which at least one of the first regulator T1, the second regulator T2L, or the third regulator T2R is a heater.

With the above configuration, the temperature-regulating action with the supply of warm water heated by the heater, for example, can be exerted on the device provided in or on at least one of the vehicle body 2 or the left and right traveling structures 3L, 3R.

(Item D8) The working vehicle 1 according to any one of Items D1 to D6, in which the left and right traveling structures 3 each include a wheel 5, and the second regulator T2L (radiator 71) and the third regulator T2R (radiator 71) are each positioned facing a contact surface of the wheel 5 of a corresponding one of the left and right traveling structures 3.

With the above configuration, the regulator (radiator 71) can be positioned in or on the traveling structure 3, whose left-right dimension is limited, in such a manner as not to protrude as much as possible from an area defined by the left-right dimension of the contact surface of the wheel 5.

(Item D9) The working vehicle 1 according to Item D8, in which the second regulator T2L and the third regulator T2R are radiators 71 located forward of the respective wheels 5 and tilted with respect to the front-rear direction.

With the above configuration, since the radiator 71 is tilted with respect to the front-rear direction, the radiator 71 in the traveling structure 3 is fitted within an area defined by the left-right dimension of the contact surface of the wheel 5 in the left-right direction as described above, although a radiator 71 positioned face-to-face in the front-rear direction has a significantly large dimension in the left-right direction.

(Item D10) The working vehicle 1 according to any one of Items D1 to D9, in which the first device D1 is electrical equipment (work-system electric unit E1) to control driving of a working device connected to the vehicle body 2 and/or hydraulic equipment (hydraulic pump 57) to control a hydraulic actuator (width-changing cylinder 8, vehicle-body-raising/lowering cylinder 9) provided in or on the vehicle body 2.

With the above configuration, the temperature-regulating action of the first regulator T1 (air-conditioner unit 51, radiator 52, or the like) can be exerted on the electrical equipment and/or hydraulic equipment that particularly requires temperature regulation (cooling) in the vehicle body 2.

(Item D11) The working vehicle 1 according to any one of Items D1 to D10, in which the second device D2L and the third device D2R are traveling motors 7 to drive the respective wheels 5 of the left and right traveling structures 3.

With the above configuration, the temperature-regulating action of the second regulator T2L and the third regulator T2R (radiator 71 or the like) can be exerted on the traveling motor 7, which is a main driving device in the traveling structure 3.

(Item E1) A working vehicle 1 including a vehicle body 2, a left traveling structure 3L provided leftward of the vehicle body 2, a right traveling structure 3R provided rightward of the vehicle body 2, a temperature regulator T3 (radiator 52) provided in or on one of the vehicle body 2, the left traveling structure 3L or the right traveling structure 3R, temperature-regulation targets that are devices to be subjected to temperature regulation by the temperature regulator T3 (radiator 52) and include a first device D1 provided in or on the vehicle body 2, a second device D2L provided in or on the left traveling structure 3L, and a third device D2R provided in or on the right traveling structure 3R, and a temperature-regulating circuit C3 to send a temperature-regulation medium from the temperature regulator T3 (radiator 52) to the temperature-regulation targets, in which the temperature-regulating circuit C3 branches from the temperature regulator T3 (radiator 52) to be connected to the first device D1, the second device D2L, and the third device D2R, respectively.

With the above configuration, the temperature-regulation medium from the single temperature regulator T3 (radiator 52) can be supplied to the plurality of temperature-regulation targets provided in or on the vehicle body 2 and the left and right traveling structures 3L, 3R via the branched temperature-regulating circuit C3. The sharing of the temperature regulator T3 produces an effect of reducing the number of components and the cost.

(Item E2) The working vehicle according to Item E1, in which the temperature-regulating circuit C3 includes a first temperature-regulating circuit (branch circulation circuit) C3a to cause the temperature-regulation medium to circulate between the temperature regulator T3 (radiator 52, 71) and the first device D1, a second temperature-regulating circuit (branch circulation circuit) C3b to cause the temperature-regulation medium to circulate between the temperature regulator T3 (radiator 52, 71) and the second device D2L, and a third temperature-regulating circuit (branch circulation circuit) C3c to cause the temperature-regulation medium to circulate between the temperature regulator T3 (radiator 52, 71) and the third device D2R.

With the above configuration, a circulation circuit for the temperature-regulation medium is provided for each of the vehicle body 2, the left traveling structure 3L, and the right traveling structure 3R. For example, in each traveling structure 3, the temperature-regulation medium is caused to circulate through a plurality of pieces of equipment and return to the shared temperature regulator T3 (radiator 52, 71) in such a manner as to circulate through the front traveling-system electric unit E3F (front traveling motor 7F) and the rear traveling-system electric unit E3R (rear traveling motor 7R).

(Item E3) The working vehicle 1 according to Item E1 or E2, in which the temperature regulator T3 is a radiator 52, 71.

With the above configuration, the water-cooled action of the radiator 52, 71 can be assuredly exerted on the devices D1, D2L, D2R provided in or on the vehicle body 2 and the left and right traveling structures 3L, 3R.

(Item E4) The working vehicle 1 according to Item E3, in which at least one of the first device D1, the second device D2L or the third device D2R is a battery 50, 37 to be cooled by cooling water from the radiator 52, 71.

With the above configuration, the battery 50, 37, which require temperature management in the working vehicle 1 to enable favorable operation of electrical equipment and the like, can be assuredly cooled.

(Item E5) The working vehicle 1 according to Item E3 or E4, in which at least one of the first device D1, the second device D2L or the third device D2R is electrical equipment (work-system electric unit E1, hydraulic-system electric unit E2, traveling-system electric unit E3FL, E3FR, E3RL, E3RR) to be cooled by cooling water from the radiator 52, 71.

With the above configuration, the temperature-regulating action of the second regulator T2L and/or the third regulator T2R (radiator 71 and/or the like) can be exerted on the traveling motor 7, which is electrical equipment that particularly requires temperature regulation (cooling) in the traveling structure 3.

(Item E6) The working vehicle 1 according to any one of Items E1 to E5, in which the temperature regulator T3 is an air-temperature regulator (air-conditioner unit 51).

With the above configuration, the air-cooled cooling (temperature-regulating) action of the air-temperature regulator (air-conditioner unit 51) can be exerted on the temperature-regulation targets D1, D2L, D2R provided in or on the vehicle body 2 and the left and right traveling structures 3L, 3R.

(Item E7) The working vehicle 1 according to Item E6, in which at least one of the first device D1, the second device D2 or the third device D3 is a battery 50 to be cooled by cooling air from the air-temperature regulator (air-conditioner unit 51).

With the above configuration, the air-cooled cooling (temperature-regulating) action of the air-temperature regulator (air-conditioner unit 51) can be exerted on the temperature-regulation target D1, D2L, or D2R provided in or on any of the vehicle body 2 and the left and right traveling structures 3L, 3R.

(Item E8) The working vehicle 1 according to Item E1 or E2, in which the temperature regulator T3 is a heater.

With the above configuration, a temperature-regulating refrigerant such as hot water having a temperature regulated by the heater can be supplied to the temperature-regulation targets D1, D2L, D2R provided in or on the vehicle body 2 and the left and right traveling structures 3L, 3R.

While the embodiments of the present invention have been described above, it should be understood that the embodiments disclosed herein be exemplary and nonlimiting in all respects. The scope of the present invention is defined by the claims, not by the above description, and is intended to encompass all changes made within the meaning and scope equivalent to the claims.

### Reference Signs List

- 1: working vehicle
- 2: vehicle body
- 3: traveling structure
- 3L: left traveling structure
- 3R: right traveling structure
- 24: center battery case
- 24c: cooling-air passage
- 24d: exhaust-air passage
- 24e: partition
- 24g: communicating passage
- 24h: inlet
- 36: side battery case
- 37: side battery
- 43: return duct
- 50: center battery
- 51: air-conditioner unit

## Claims

1. A working vehicle comprising:
a cooler;
a first cooling target and a second cooling target to be cooled by cooling air delivered from the cooler;
a first cooling housing accommodating the first cooling target; and
a second cooling housing accommodating the second cooling target, wherein
the first cooling housing is provided with an inlet to take in air discharged from the second cooling housing after cooling the second cooling target.

2. The working vehicle according to claim 1, wherein:
the first cooling housing is provided inside thereof with
a cooling-air passage to allow the cooling air from the cooler to be blown onto the first cooling target, and
an exhaust-air passage to allow air having cooled the first cooling target to be discharged to the cooler; and
the working vehicle is configured to merge, with air in the exhaust-air passage, the air discharged from the second cooling housing and introduced into the first cooling housing through the inlet.

3. The working vehicle according to claim 2, wherein
the first cooling housing is provided inside thereof with:
a first air guide to guide air from the cooling-air passage to the exhaust-air passage; and
a second air guide to guide air from the inlet to the exhaust-air passage.

4. The working vehicle according to claim 2, wherein:
the first cooling housing is provided inside thereof with a partition above the first cooling target;
a space in the first cooling housing below the partition is the cooling-air passage; and
a space in the first cooling housing above the partition is the exhaust-air passage.

5. The working vehicle according to claim 4, wherein:
the first cooling housing is provided inside thereof with a communicating passage extending in a top-bottom direction along an end portion of the partition to allow an exit of the cooling-air passage and an entrance of the exhaust-air passage to communicate with each other;
the cooling-air passage is provided at the exit with a first air guide to guide air from the cooling-air passage to a lower portion of the communicating passage; and
the communicating passage is provided at an upper portion thereof with the inlet and a second air guide to guide air introduced through the inlet to the entrance of the exhaust-air passage.

6. The working vehicle according to claim 3 or 5, wherein the first air guide and the second air guide are fans.

7. The working vehicle according to claim 1, wherein at least one of the first cooling target or the second cooling target is a battery.

8. The working vehicle according to claim 1, 2 or 7, further comprising:
a vehicle body; and
a traveling structure provided alongside the vehicle body; wherein:
the cooler and the first cooling housing are provided in or on the vehicle body; and the second cooling housing is provided in or on the traveling structure.
